(19) Europäisches Patentamt
European Patent Office
Office européen des brevets

(11) **EP 1 804 154 A2**

(12) **EUROPEAN PATENT APPLICATION**

(43) Date of publication:
04.07.2007 Bulletin 2007/27

(51) Int Cl.:
*G06F 3/033* (2006.01)      *G06F 3/048* (2006.01)

(21) Application number: 06256535.3

(22) Date of filing: 22.12.2006

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **27.12.2005 IN CH19282005**

(71) Applicants:
• **Timothy Poston**
  **Bangalore 560 097, Karnataka (IN)**
• **Manohar Balagatte Srikanth**
  **Hassan 573 201, Karnataka (IN)**

(72) Inventors:
• **Timothy Poston**
  **Bangalore 560 097, Karnataka (IN)**
• **Manohar Balagatte Srikanth**
  **Hassan 573 201, Karnataka (IN)**

(74) Representative: **Findlay, Alice Rosemary**
  **Lloyd Wise**
  **Commonwealth House,**
  **1-19 New Oxford Street**
  **London WC1A 1LW (GB)**

(54) **Computer input device enabling three degrees of freedom and related input and feedback methods**

(57)    Disclosed herein are a system and method for simultaneously reporting changes in location and orientation of an object moving over a planar surface and forming part of a computer input device, interoperably with a conventional mouse where reporting only location is in question. Further the present invention provides improved ways of user interaction with computer displays of two and three dimensional data and structures.

Drawing 1

EP 1 804 154 A2

**Description**

Field of the Invention

This invention, in general, relates to devices enabling human-computer interfaces. More particularly, this invention relates to a computer input device enabling three degrees of freedom and related methods for input to the computer and feedback from it.

Background of the Invention

Humans have given instructions to computers in many ways. Rearranging the gears in Boole's 19th Century 'analytical engine', rearranging the wires in early electronic machines, programming by making or changing holes in cards or paper and typing letters and numbers that are echoed on a monitor are some such ways. From the year 1968 the method of inputting instructions to a computer by moving and clicking a mouse (US Patent 3,541,541 issued 11/17/70, X-Y Position Indicator For A Display System) has been devised. This method first appeared commercially in 1981 in the Xerox Star workstation, more than a decade after the patent was issued. Other devices have since come into use, such as the touchpad, trackball, joystick and the TrackPoint, but the mouse remains the typical interaction tool. Like the qwertyuiop layout of the keyboard, it is a default which is almost always available, and which every user has learned.

The standard mouse 100 detects its own motion over the surface of the user's desk or other flat object, sometimes with the passive assistance of a 'mouse pad' 101 that makes detection more robust and accurate in some way that depends on the detection technology used; namely preferred frictional properties for mechanical detection, preferred visual texture for an optical system. Via a cable 120 or via an infrared or radio link, it reports a sideways change 110 in position (where 'sideways' is interpreted relative to itself, rather than as a direction on the desk or mouse pad), as a quantity $\Delta x$ (read as 'delta $x$', where the Greek form $\Delta$ of the letter D is conventional for 'difference', and $x$ measures lateral position). Leftward motion gives a negative $\Delta x$. Similarly, it reports forward motion 111 as $\Delta y$, with a move backward as a negative number. Any motion involves both a $\Delta x$ and a $\Delta y$, possibly zero, and these two numbers are reported with each move.

In typical use, a cursor displayed on the computer screen moves by a corresponding amount $r\Delta x$ sideways and $r\Delta y$ upward, with a user-adjustable ratio $r$ between the physical motion of the mouse and the number of pixels crossed in the screen. Many interactions can then occur, according to the design of the software. For example, clicking one of the buttons can cause an event that depends on the position of the cursor, and moving the mouse with a button held down can 'drag' a screen object, imposing on it the same lateral and vertical motion as the cursor, until the button is released. This is a *translation drag.* Often a constraint is added to the motion, so that the screen object moves not simply by the step ($r\Delta x, r\Delta y$) but by the component of that step in an allowed direction, such as along a line (for a 'slider' control) or around a circle, for a dial. These are a *line drag* and a *rotation drag.*

Translation of the screen object in the $x$ direction, translation in the $y$ direction, and rotation are all independent *degrees of freedom* for the object's position on the screen. Another degree of freedom is scale, whose change corresponds to zooming in or out. All these can be controlled with a standard computer mouse, but not simultaneously: The conventional mouse does not provide simultaneous control of more than two degrees of freedom. However, many tasks of manipulating 2D or 3D objects in computer systems require more than this.

Other available devices, such as a joystick, control three or more degrees of freedom but differ sufficiently from the standard mouse that the required learning is hard for the average user, who also has to retrain to achieve previously mastered tasks like cursor control. In the known art, joysticks, mice with wheels, and other devices that control added degrees of freedom have been disclosed. Some are commercially available, yielding usability experience. A user who (for instance) turns a wheel mounted on a mouse, exercises different muscle groups from gross motion of the mouse. These groups are hard to coordinate for simultaneous control.

United States Patent No. 6,115,028 to Balakrishnan, et al. titled 'Three Dimensional input system using tilt' is directed at an input system configured to control the position or motion of a cursor, three dimensions that uses x, z position for inputting two coordinates and tilt in a plane (x-y or z-y) to input a third and possibly a fourth coordinate. The invention is moved about on a surface for inputting two of the dimensions and tilted to input the third. The amount or degree of tilt and the direction of tilt controls the input of the third dimension.

United States Patent No. 6,844,871 to Hinckley, et al. titled 'Method and apparatus for computer input using six degrees of freedom' is directed at a mouse that uses a camera as its input sensor. Disclosed therein is a real-time vision algorithm that determines the six-degree-of-freedom mouse posture, consisting of 2D motion, tilt in the forward/back and left/right axes, rotation of the mouse about its vertical axis, and some limited height sensing. This extends the familiar mouse for three-dimensional manipulation, while allowing standard 2D Graphical User Interface tasks, but at the added cost of a camera with deep focus and of considerable image processing power, and is hard to implement unless (claim 4) "the working surface comprises a patterned surface", with desk space and cleaning requirements avoided by the conventional mouse. Such difficulties have prevented its commercialization.

United States Patent No. 6,246,390 to Rosenberg titled 'Multiple degree-of-freedom mechanical interface to a computer system' discloses a method and apparatus for providing high bandwidth and low noise mechanical input and output for computer systems. A gimbal mechanism provides two revolute degrees of freedom to an object about two axes of rotation. A linear axis member is coupled to the gimbal mechanism at the intersection of the two axes of rotation. The linear axis member is capable of being translated along a third axis to provide a third degree of freedom. The user object is coupled to the linear axis member and is thus translatable along the third axis so that the object can be moved along all three degrees of freedom. This is a 'haptic' device, allowing force feedback, so that the user can feel as well as see the displayed objects. The delicacy and cost of its moving parts limits its use to applications where such force display is essential.

United States Patent No. 5,936,612 to Wang titled 'Computer input device and method for 3D direct manipulation of graphic objects' discloses the use of a third-dimensional input by a host computer together with a two-dimensional input from the two-dimensional position sensor of the input device to allow the simultaneous three-dimensional direct manipulation of graphical objects on a computer display. The added ring therein disclosed, as with a scroll wheel, requires control by different muscle groups of the user, which are not easy to coordinate.

United States Patent No. 5,561,445 to Miwa, et al. discloses a three-dimensional movement specifying apparatus and methods. The three-dimensional movement specifying apparatus consists of a track ball member, an annular ring, a first sensor for detecting the rotation of the track ball member about an X-axis, a second sensor for detecting the rotation of the track ball member about a Y-axis, a third sensor for detecting the rotation of the annular ring about a Z-axis, a secondary ball member rolling on an X-Y plane, a fourth sensor for detecting the rolling of the secondary ball member along the X-axis, a fifth sensor for detecting the rolling of the secondary ball member along the Y-axis, a central processing unit for controlling movement of a plane representing a three-dimensional position and orientation of an object according to the rotations and the rolling, and a displaying unit for displaying the plane and the object moved with the plane. The track ball member is rotated to place both a starting position of the object and a target position of the object on the plane, the secondary ball member is rolled to move straight the object placed at the starting position to the target position, and the track ball member and the annular ring are rotated to move the object to a target orientation. Therefore, the 3D object is smoothly moved from a starting position and orientation to a target position and orientation, but the device cannot serve as a plug-in substitute for a standard 2D mouse.

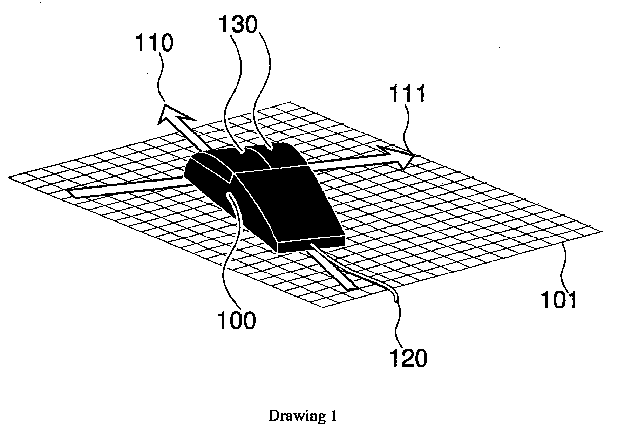

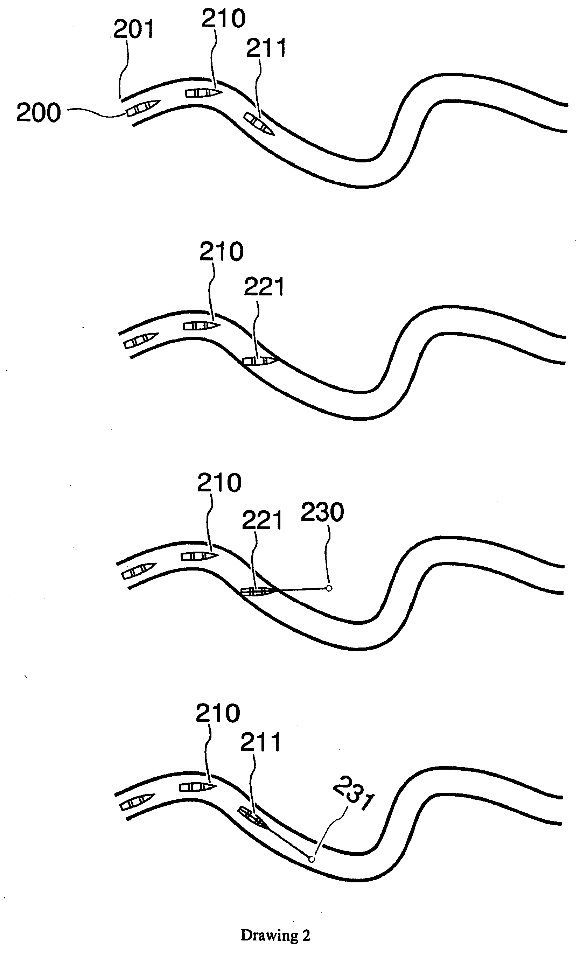

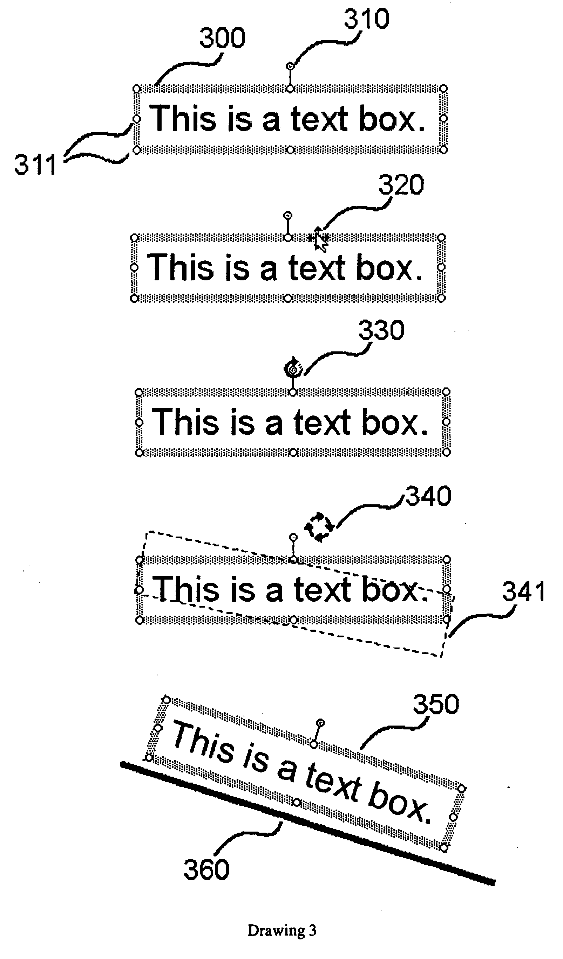

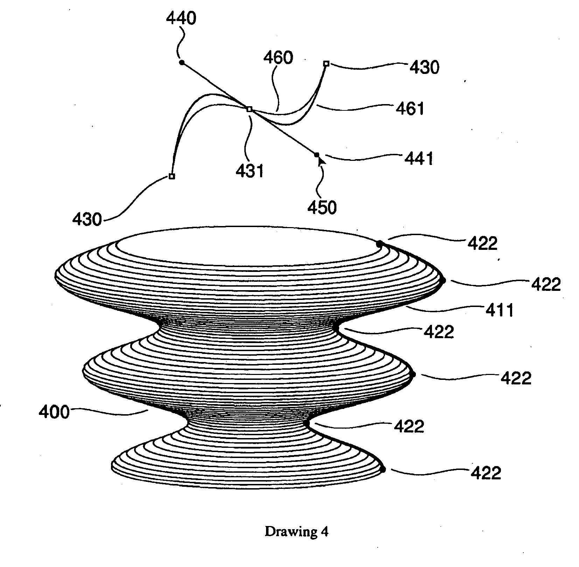

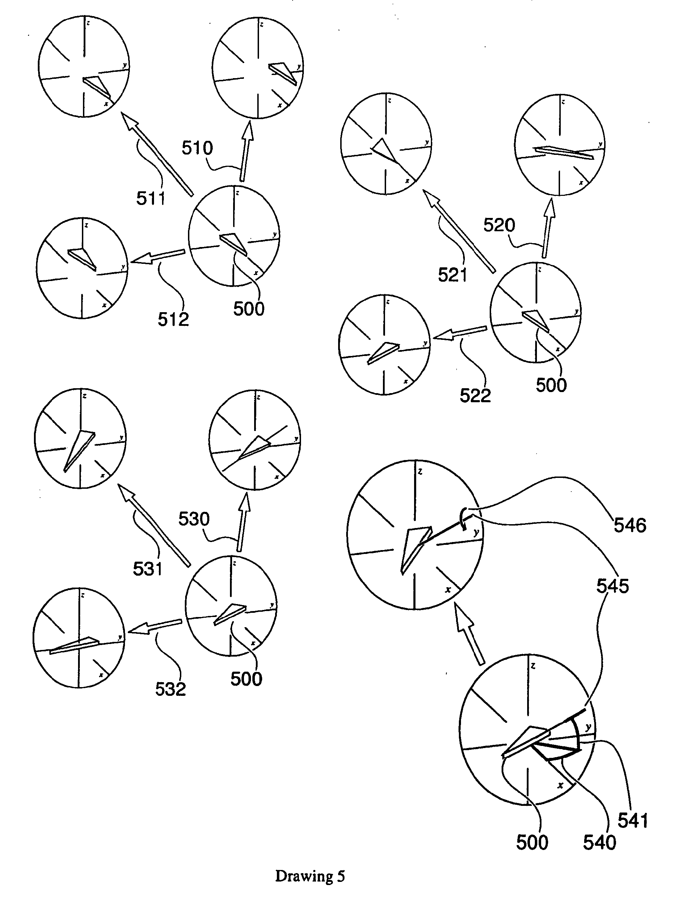

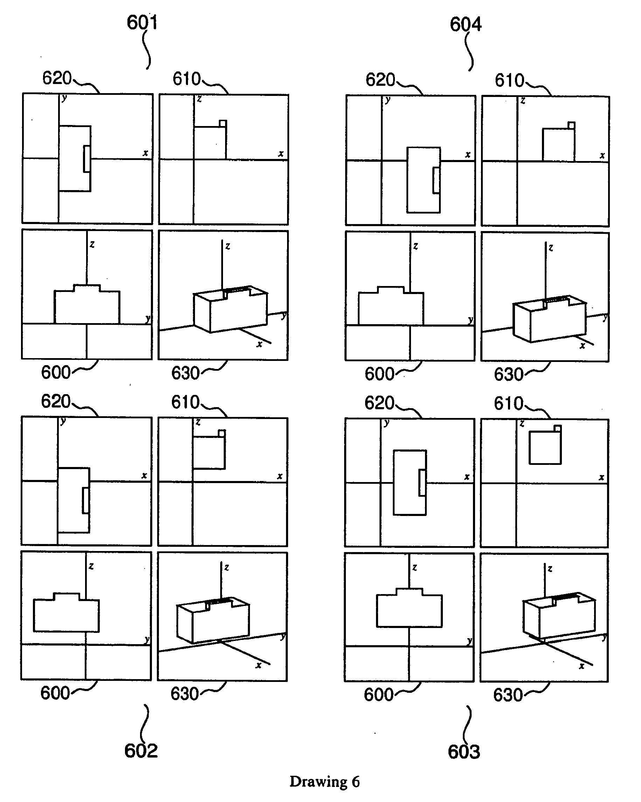

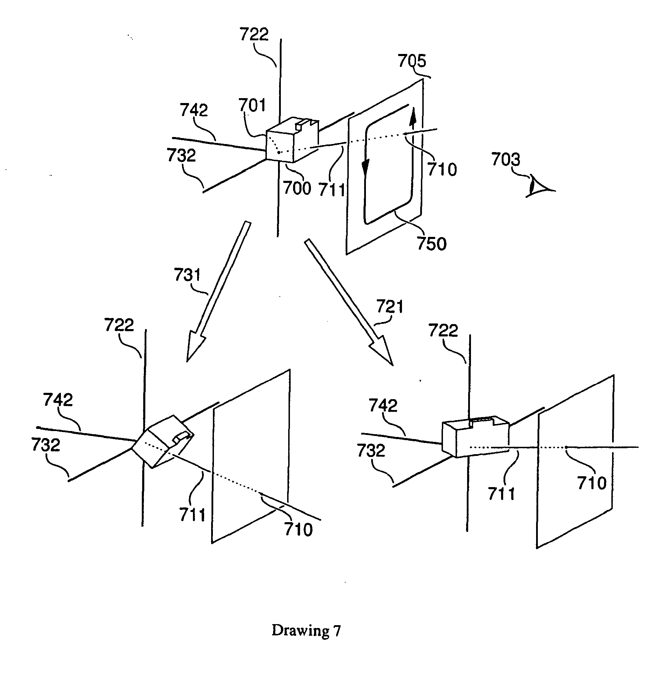

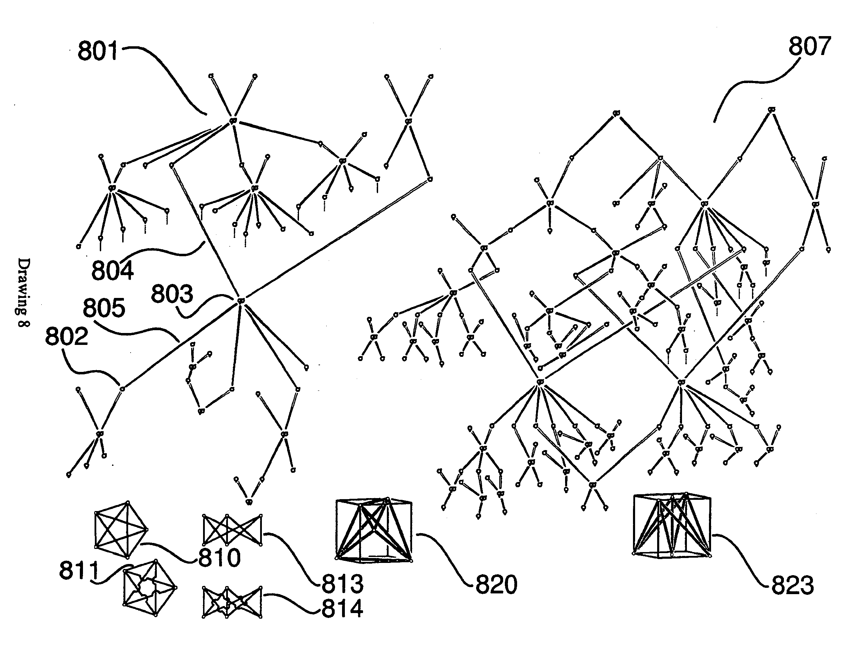

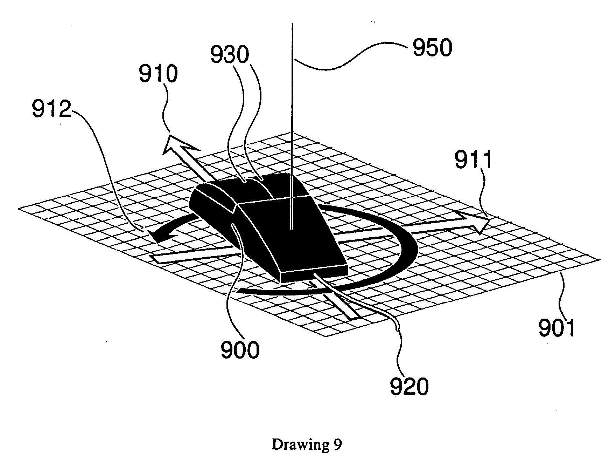

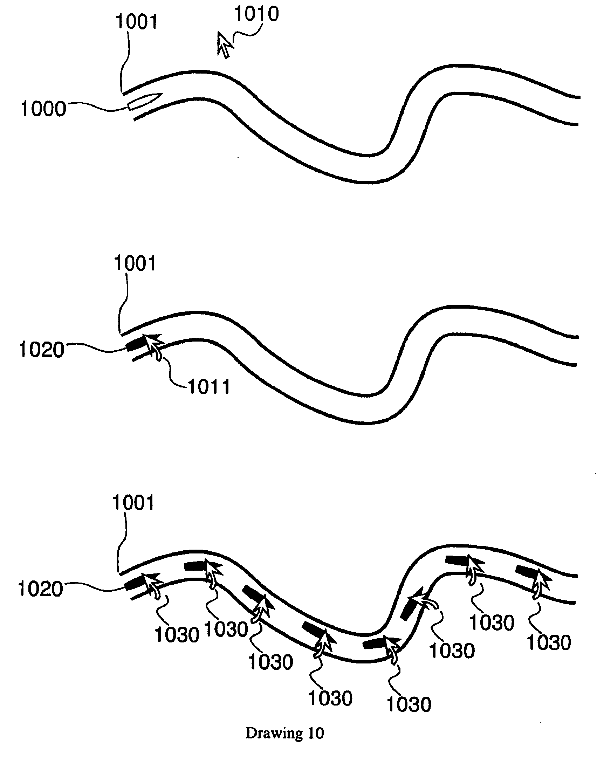

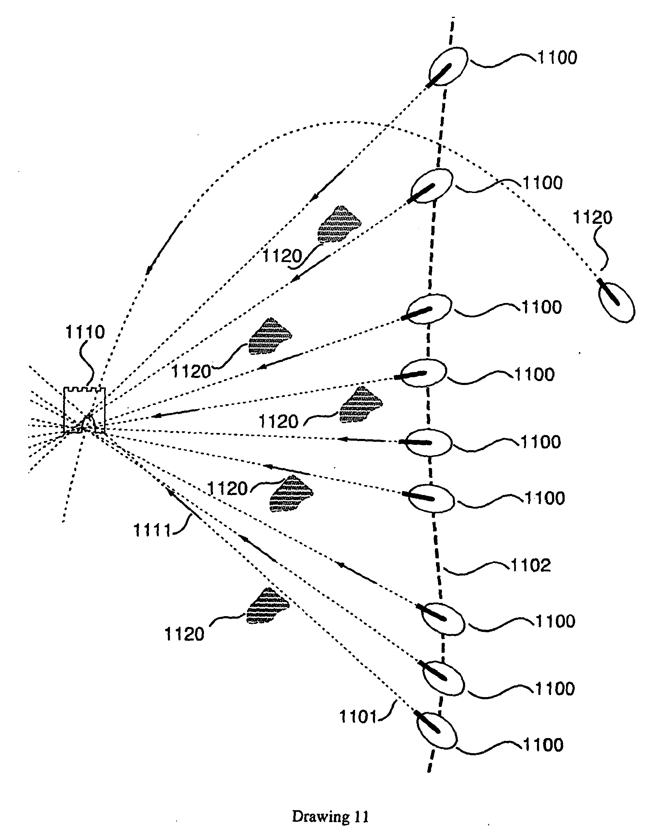

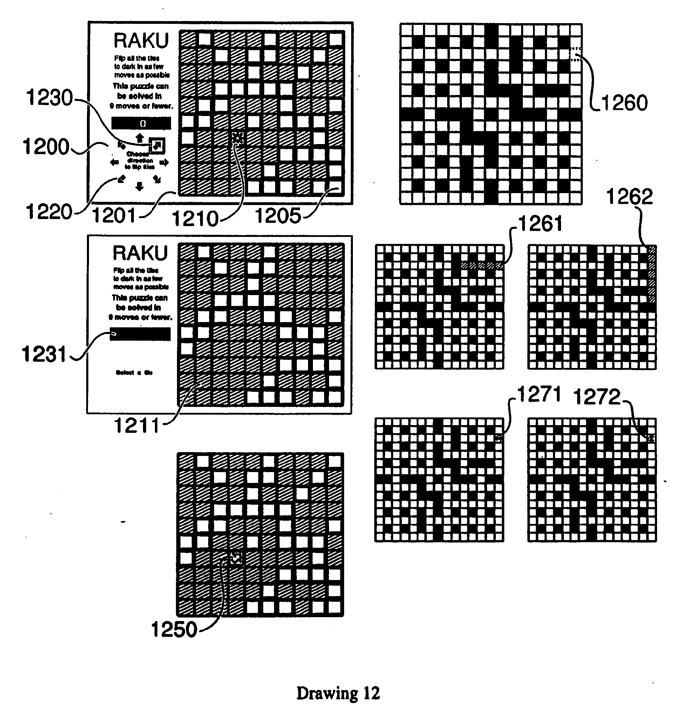

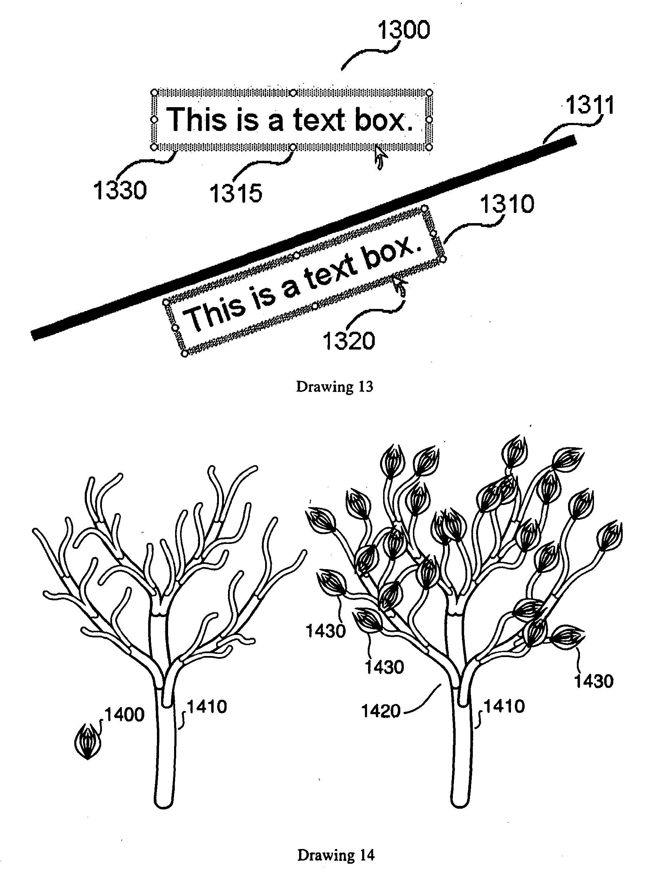

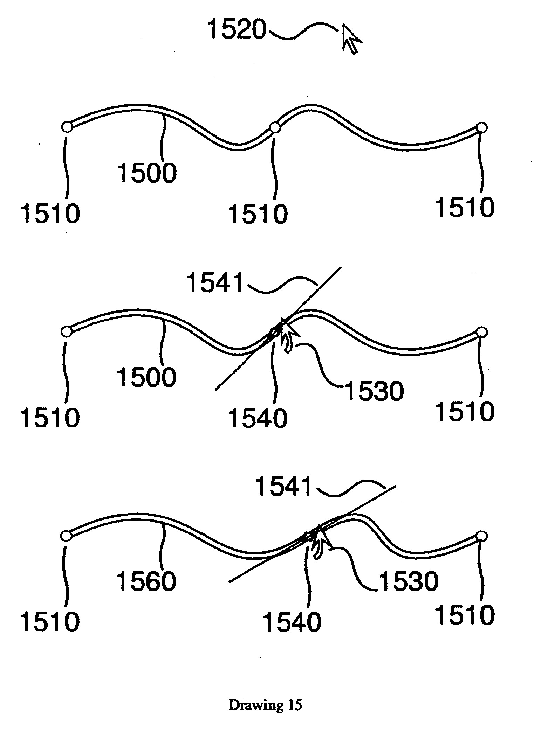

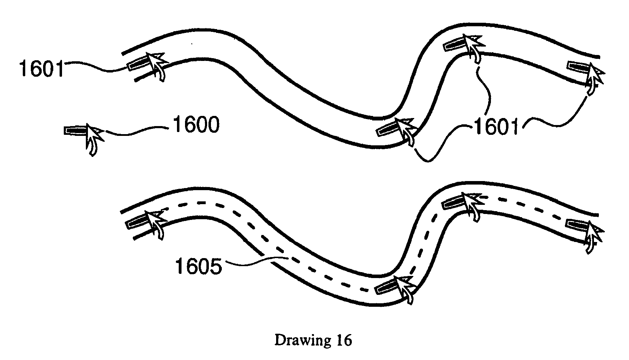

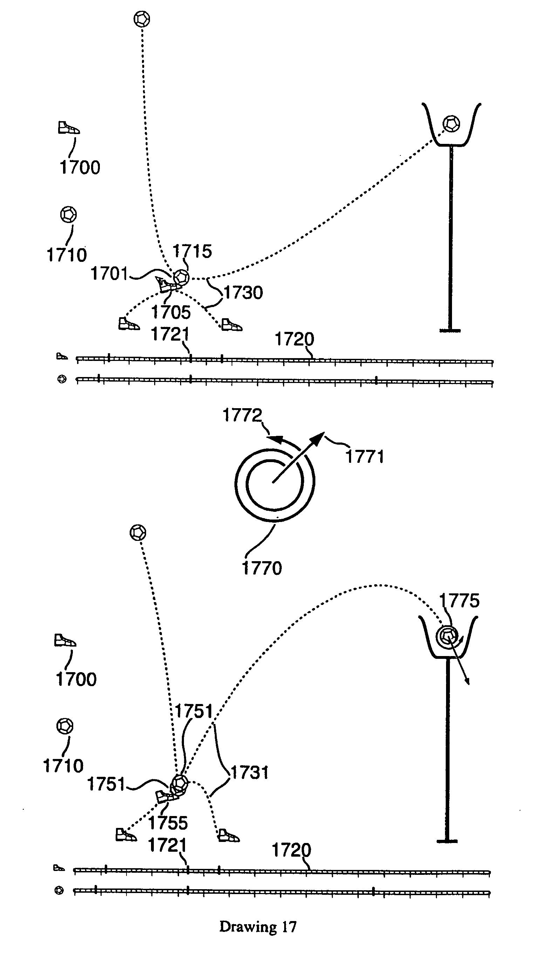

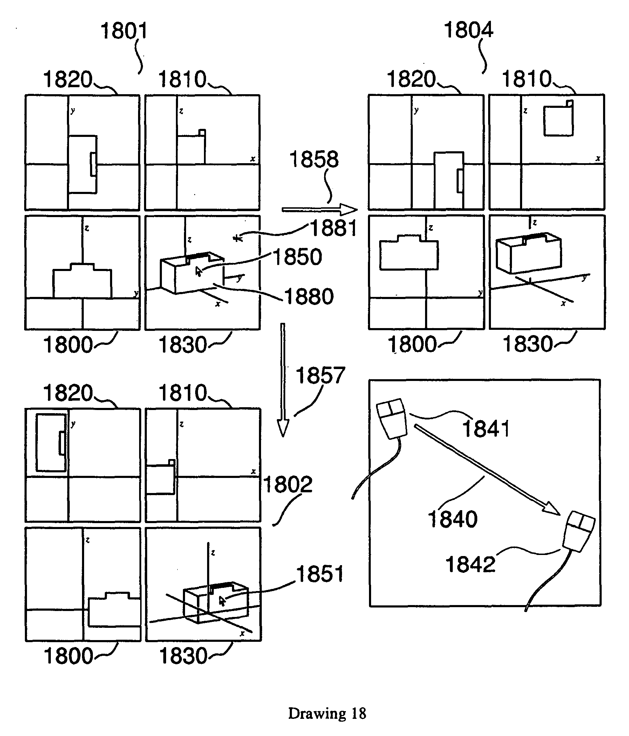

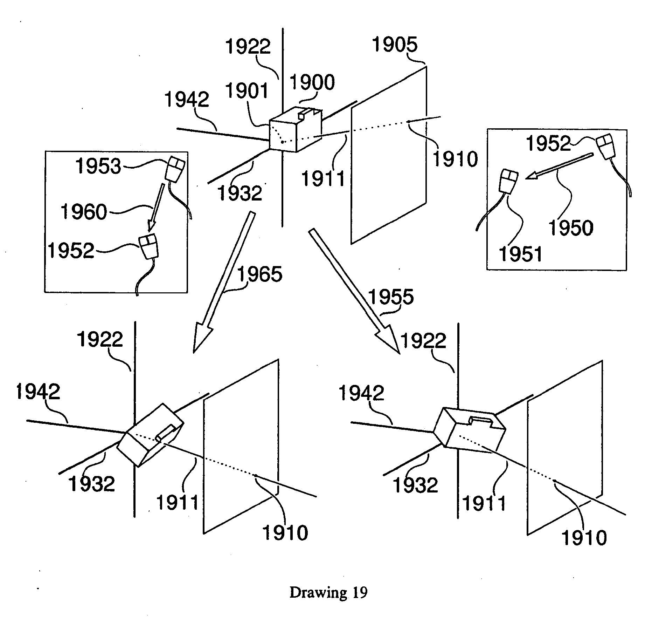

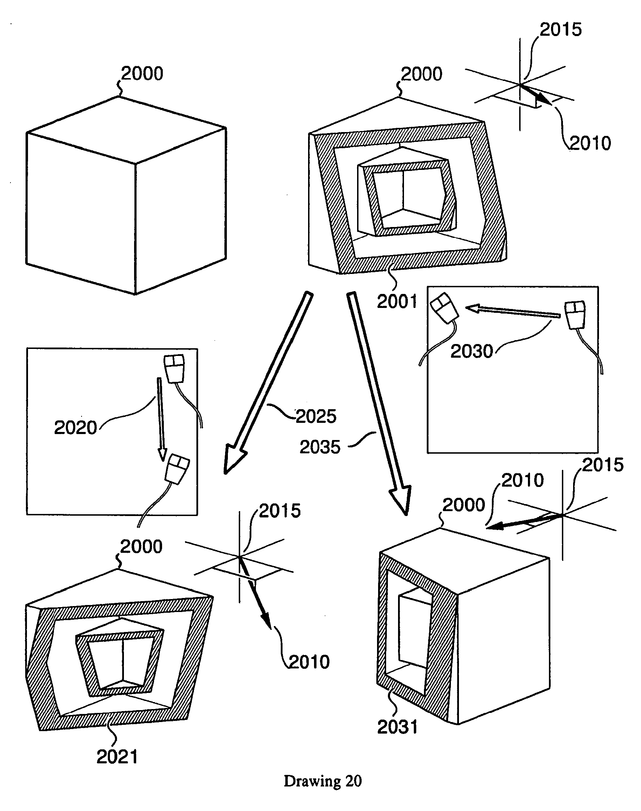

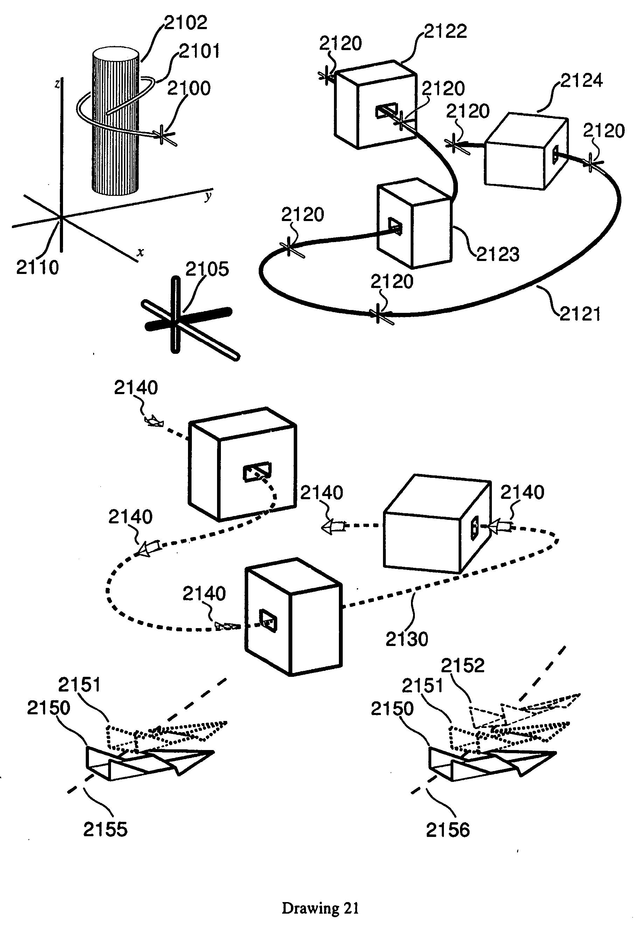

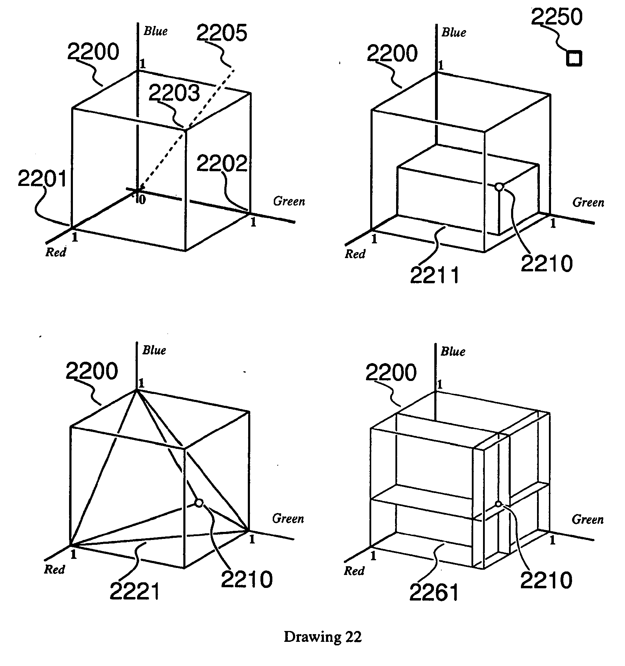

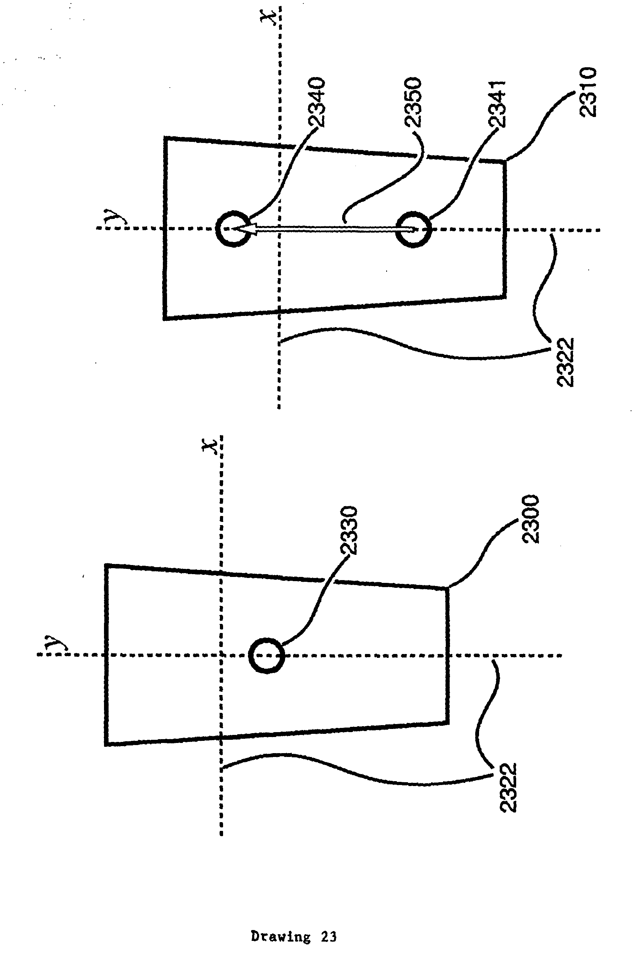

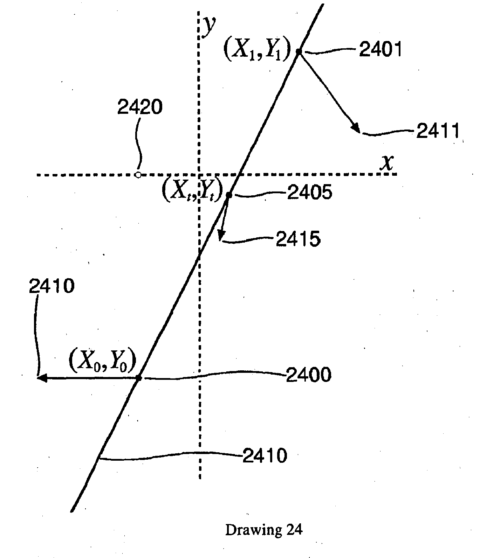

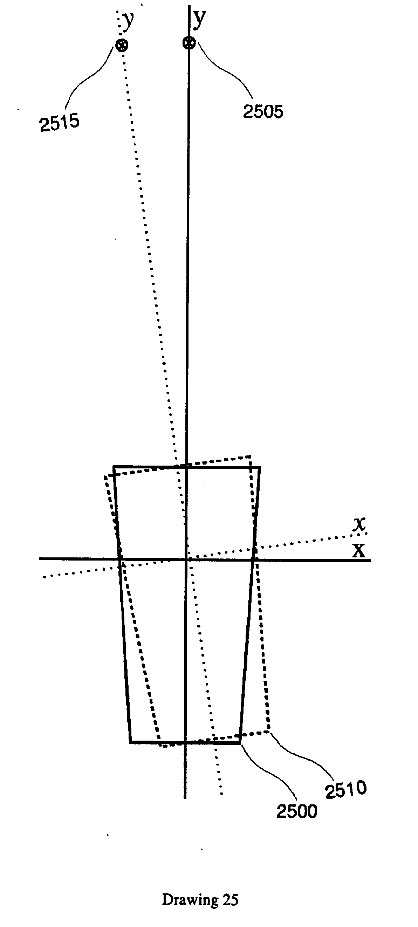

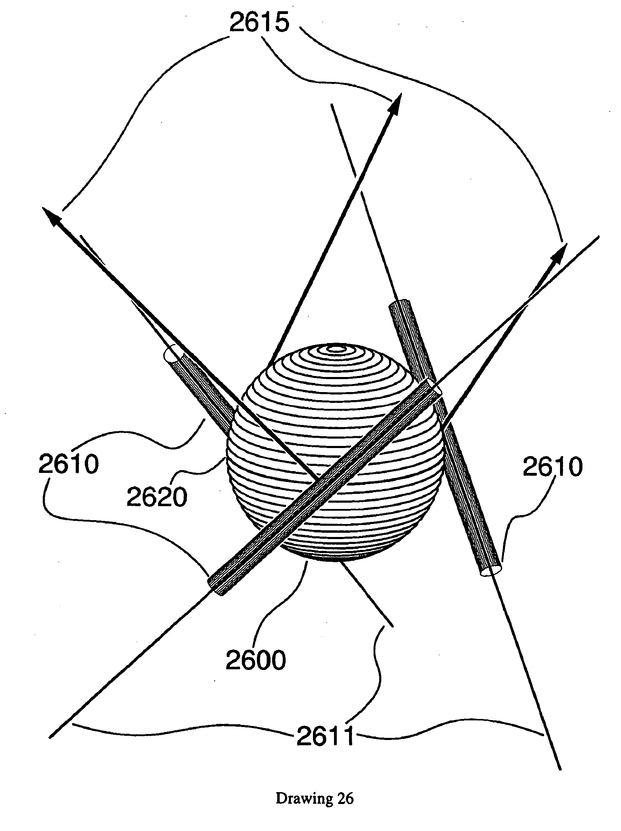

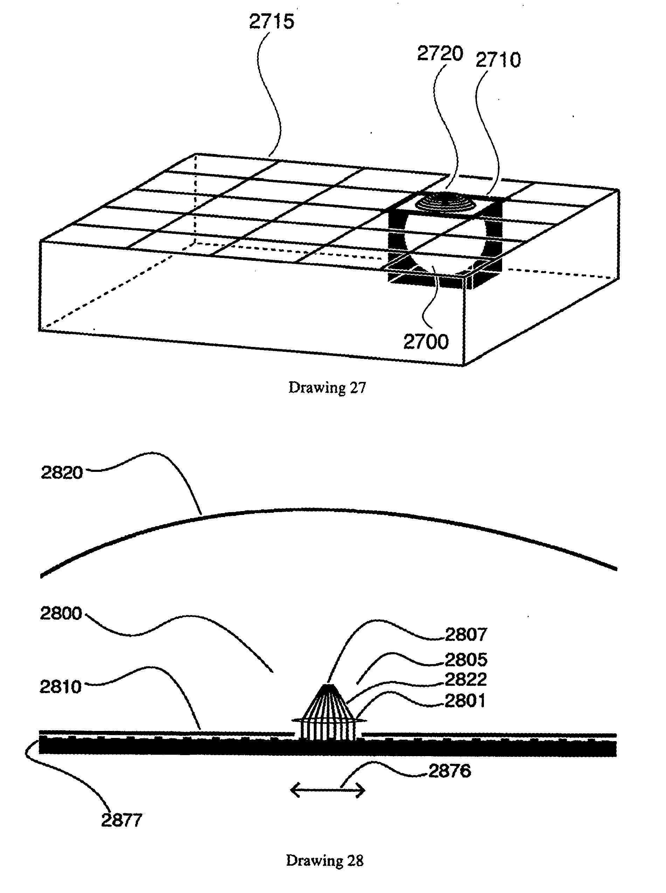

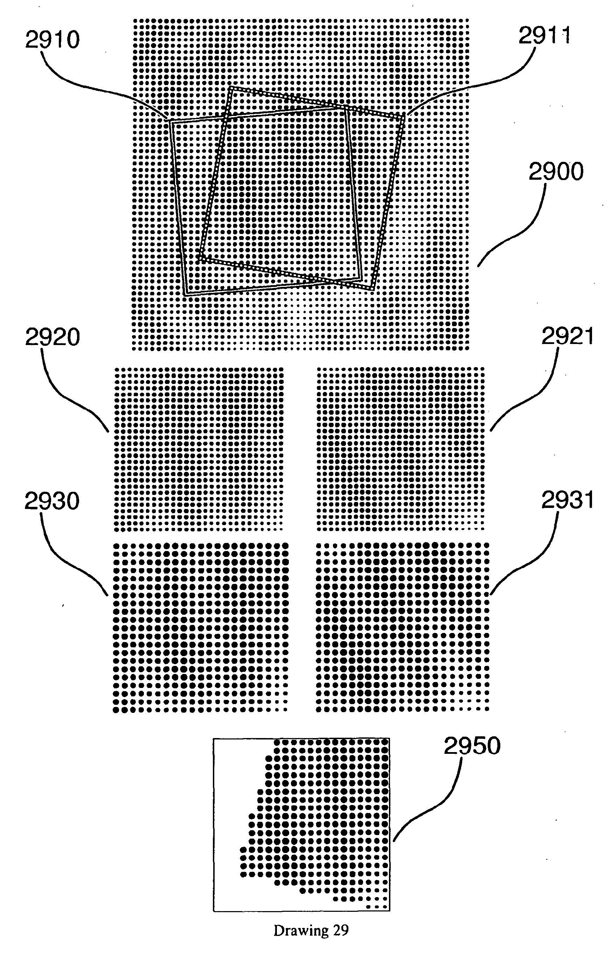

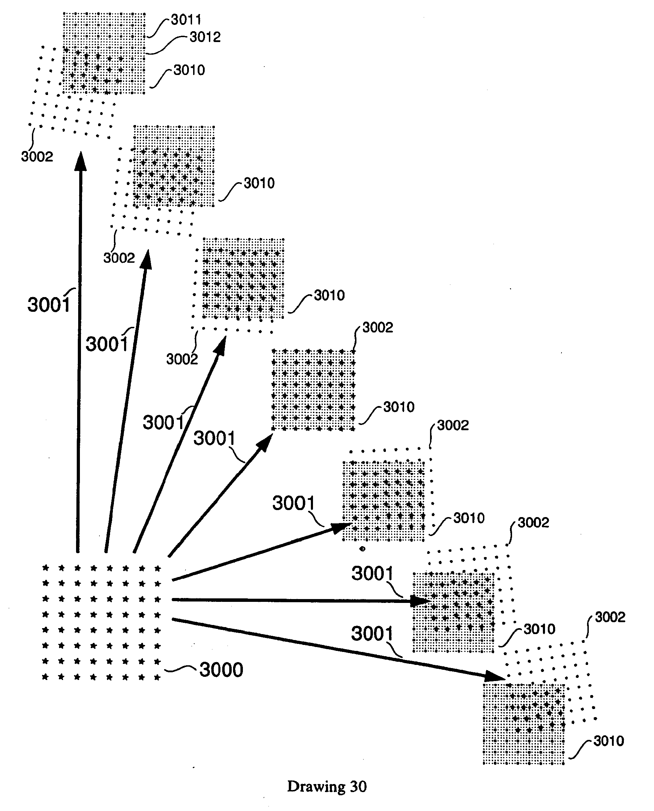

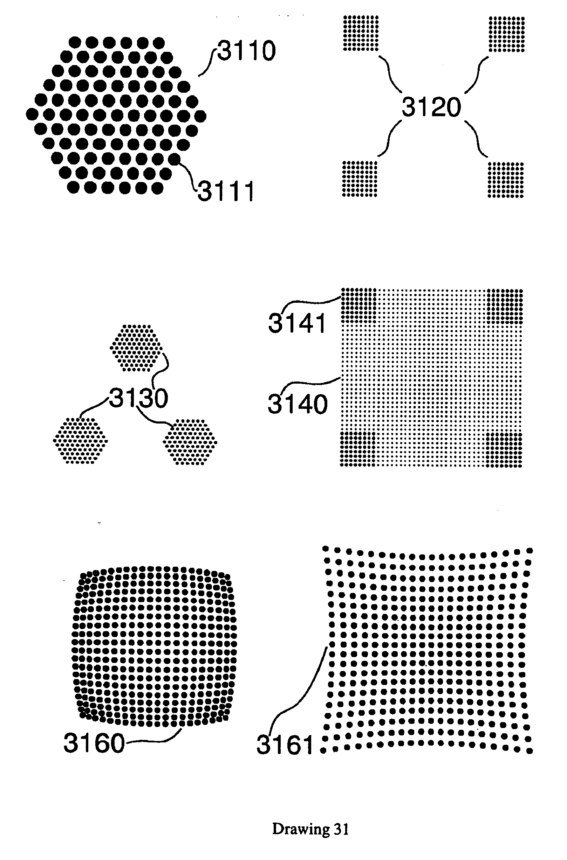

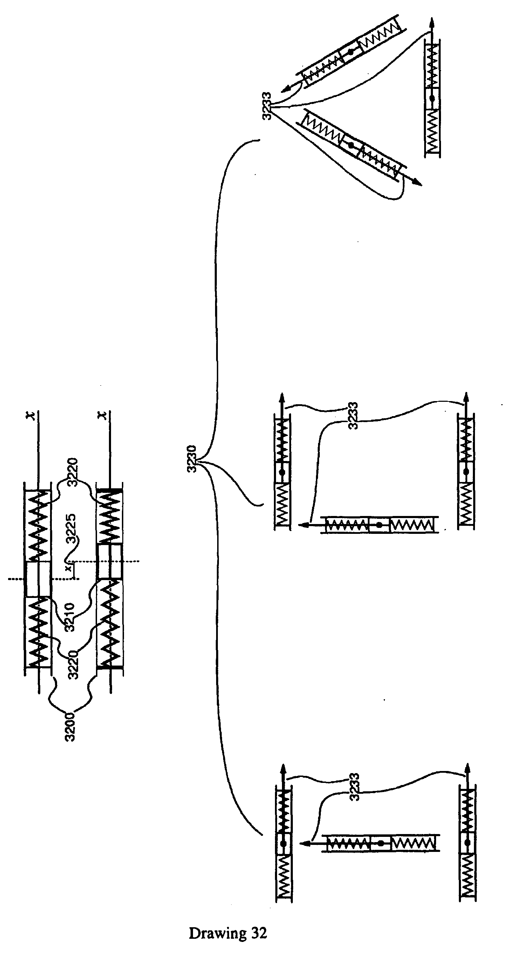

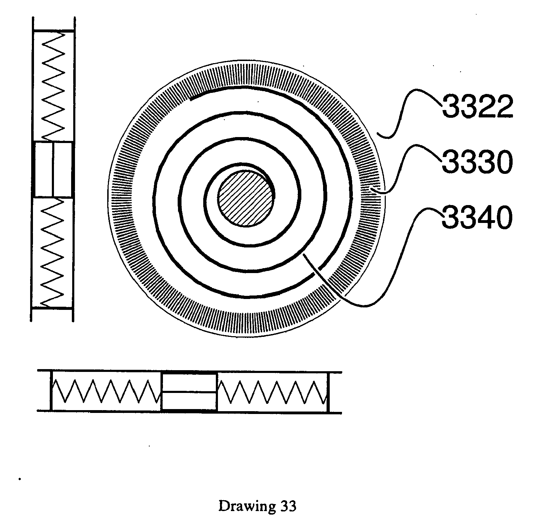

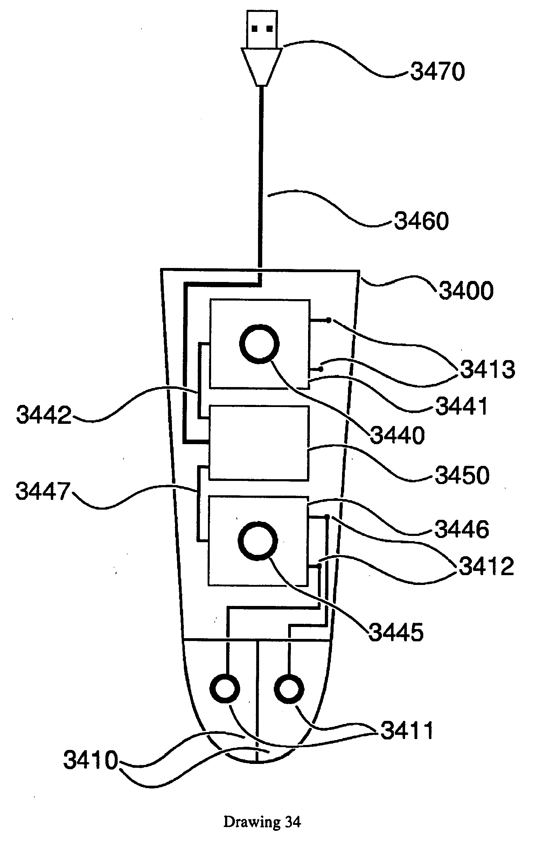

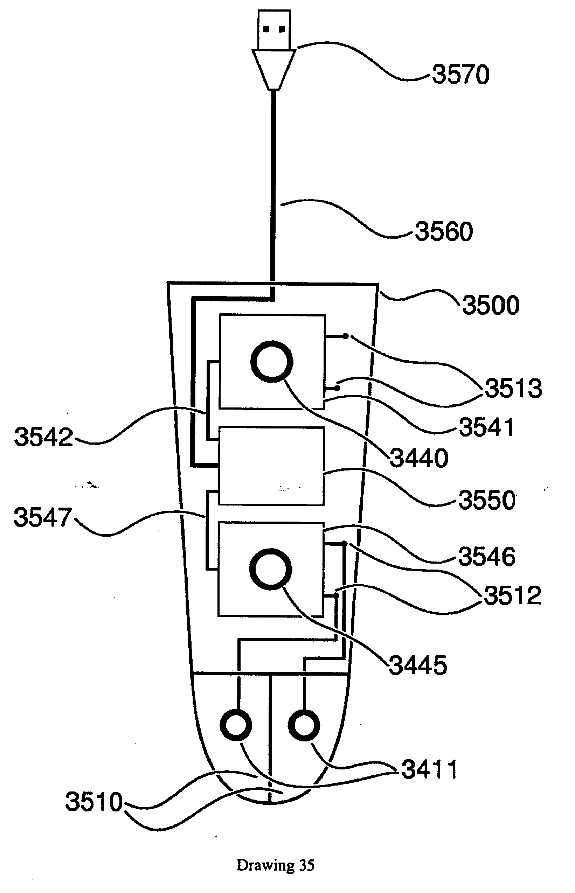

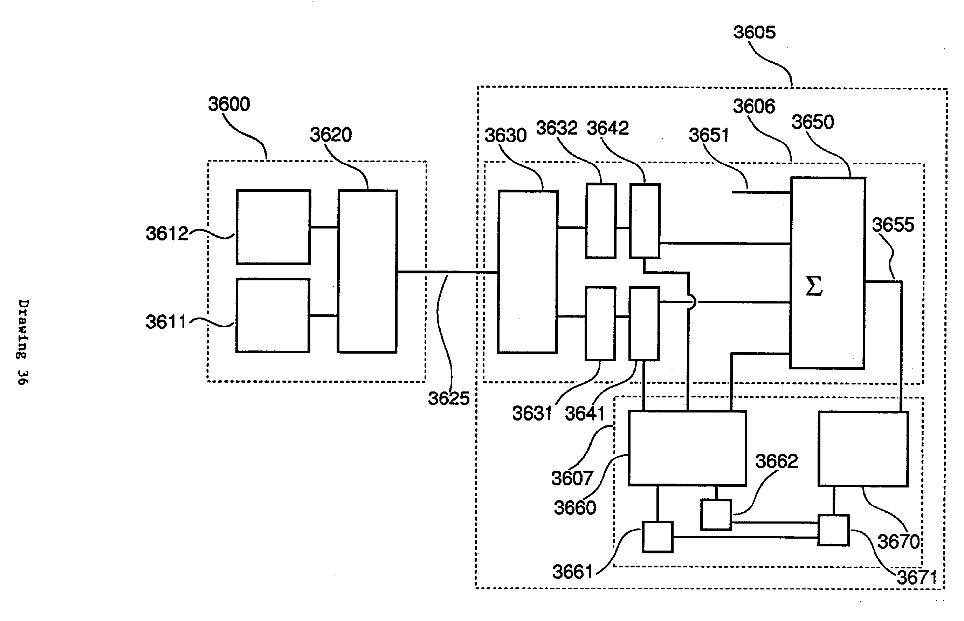

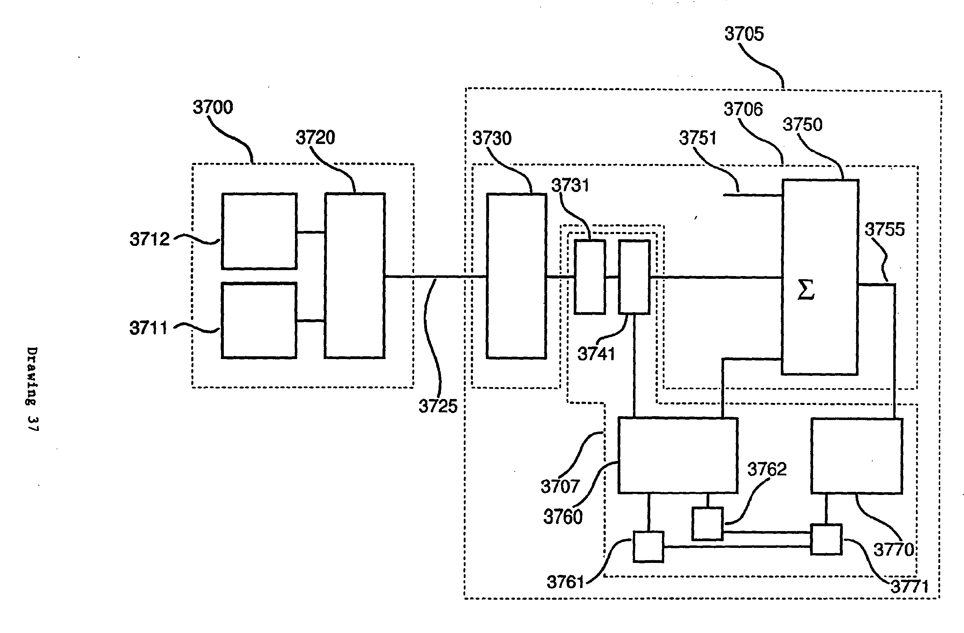

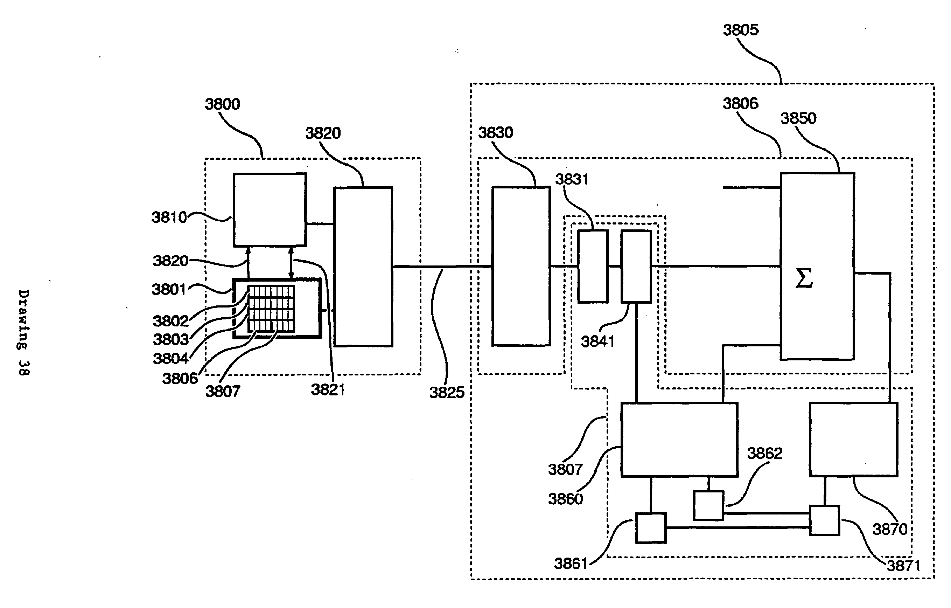

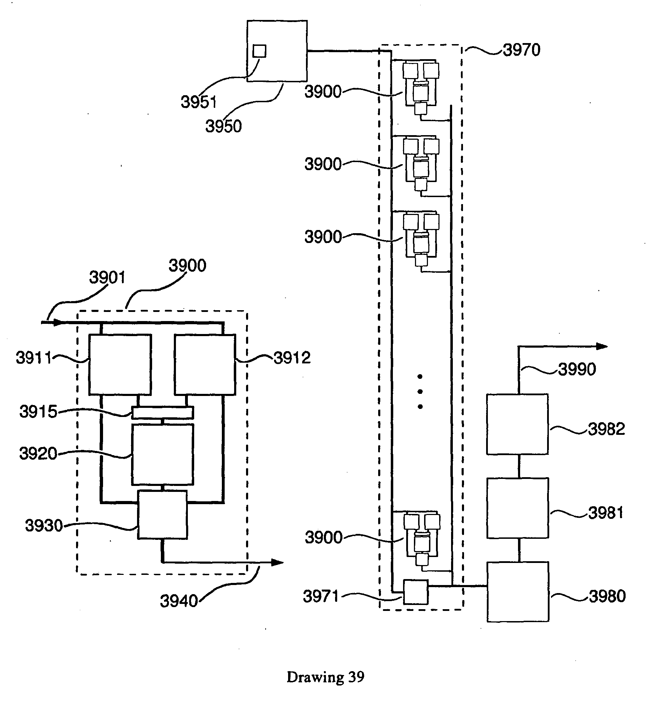

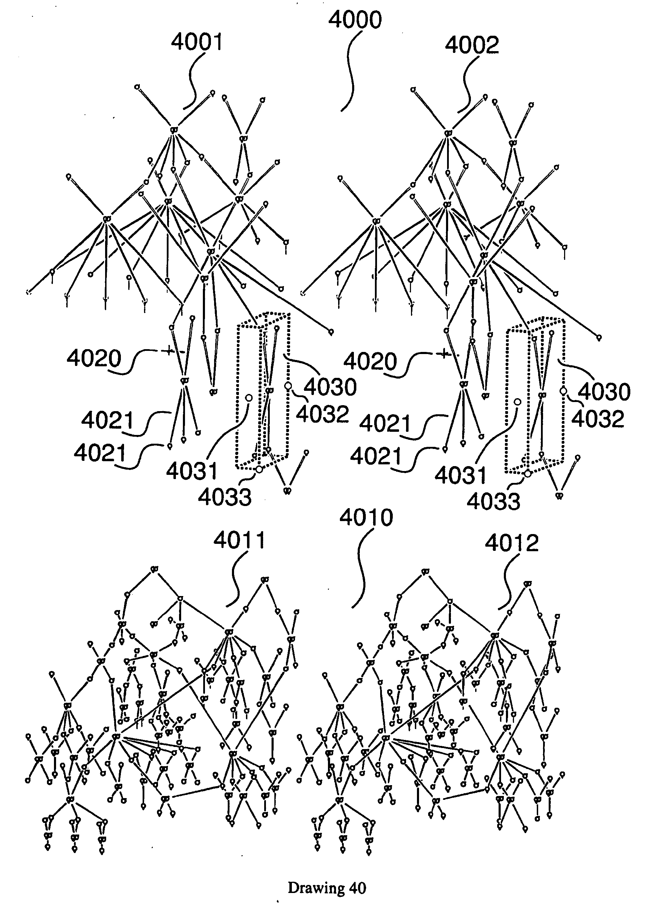

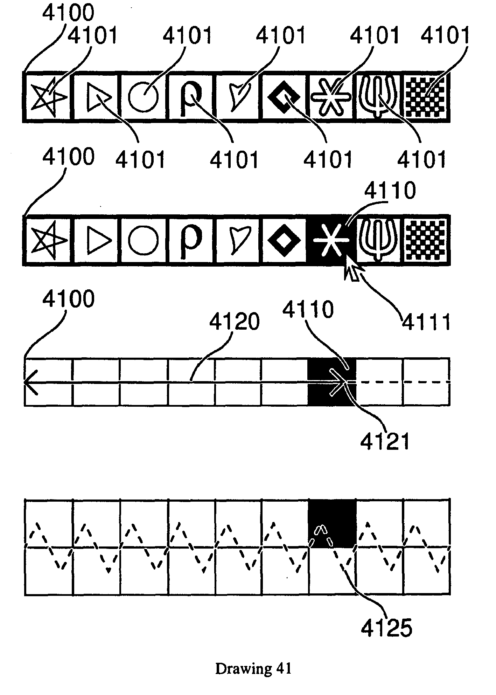

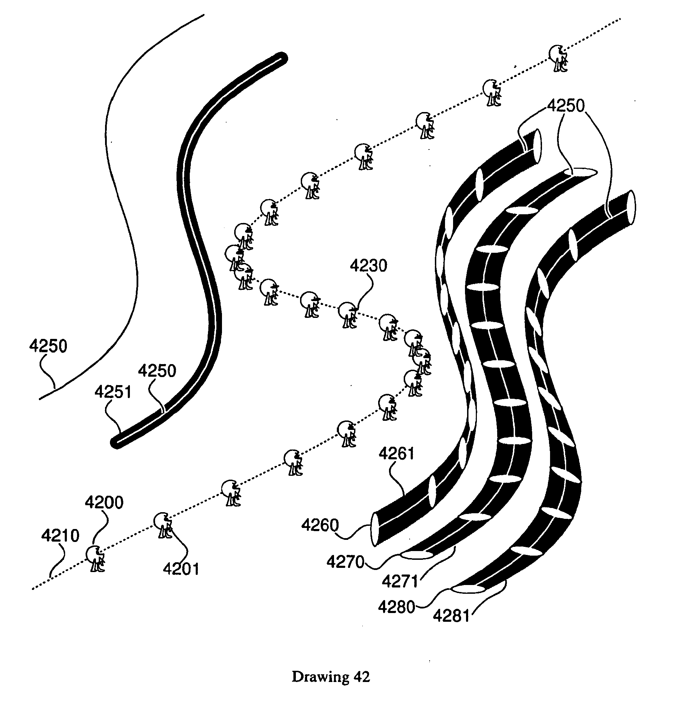

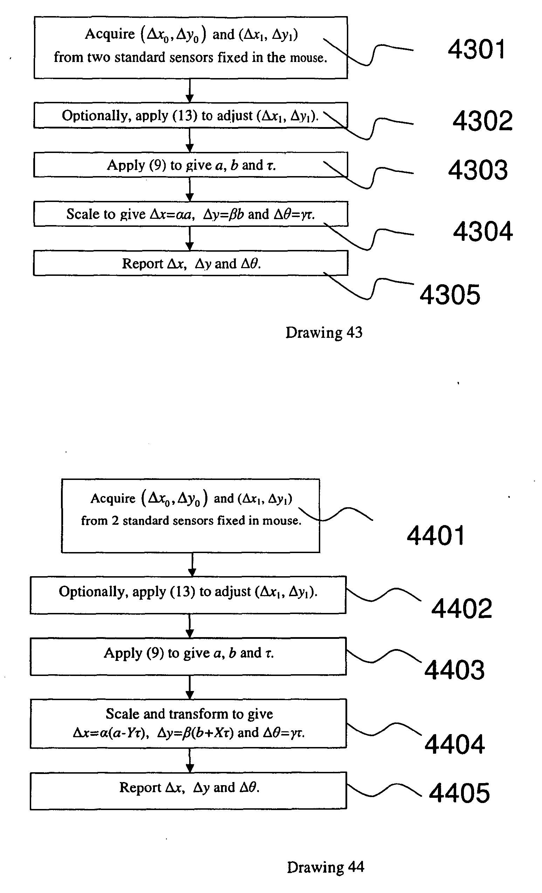

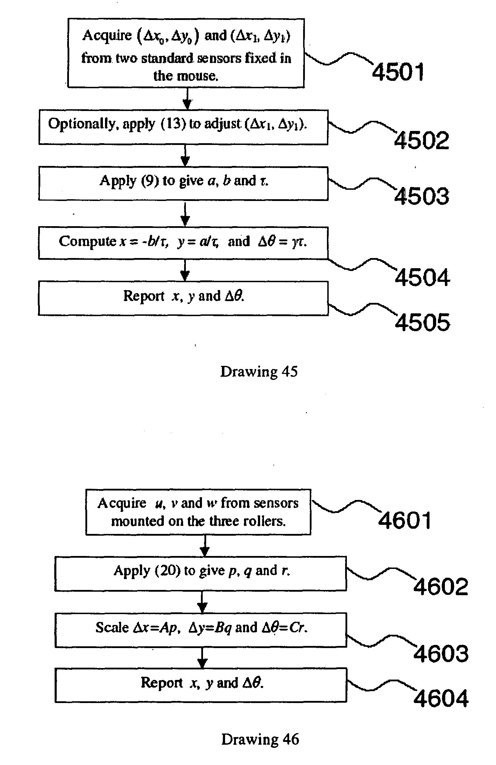

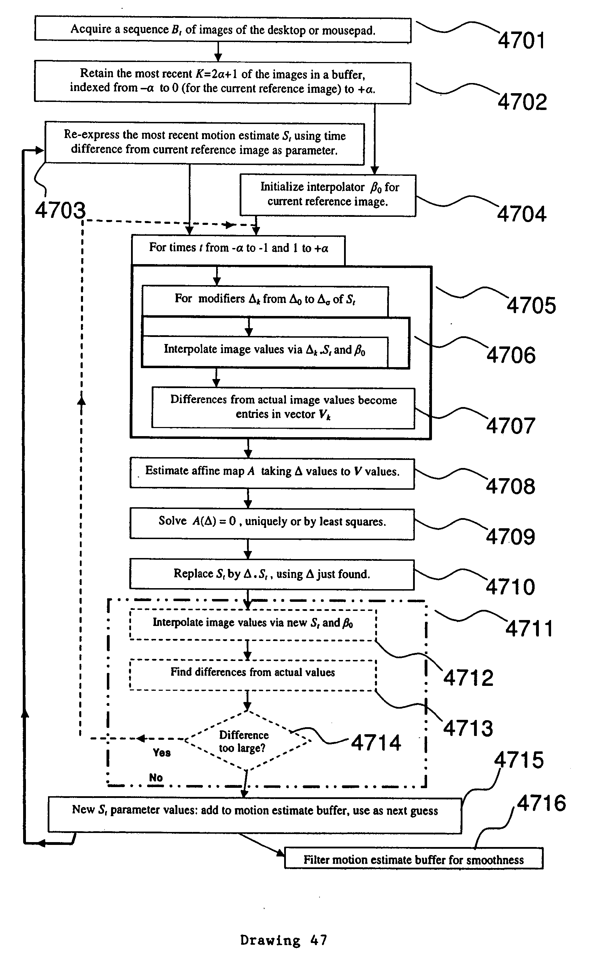

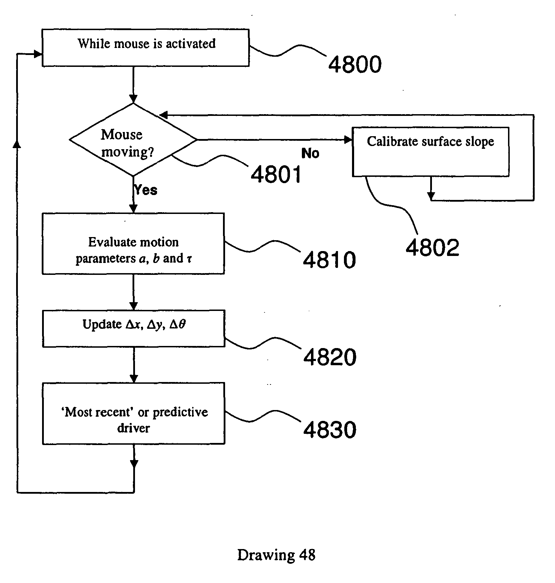

United States Patent No. 6,618,038 to Bohn discloses a pointing device having rotational sensing mechanisms, where a computer mouse has a plurality of motion sensors. The motion sensors generate data corresponding to their movement relative to a surface and transmit the data to a processor for analysis. The processor determines the rotational motion of the computer mouse and causes an image displayed on an associated video monitor to rotate proportionally to the relative movement of the computer mouse. The motion sensors may be two-dimensional photosensor arrays that generate image data of distinct features in the surface. As the computer mouse is moved relative to the surface, the locations of the distinct features move relative to the photosensor arrays. By analyzing the differences of movement between the different sensors, the processor determines the rotational motion of the computer mouse. The disclosure places emphasis on the mouse being perceptibly in translational versus translational-and-rotational mode, with coloured lights as indicators of this. There is no discussion of interoperability with standard mice, or of any system for its use tasks in a 2D display environment other than to rotate a 2D object. The disclosure discusses the use of the device for 3D rotation, but the method disclosed does not allow the user to perform arbitrary rotations, with the 3-parameter variability of normal physical rotation. Instead, the user must perform an action to select one of three standard axes, labelled in Figure 4 of that disclosure as H, N and V, and then rotate about that fixed axis or one parallel to it by rotating the mouse. (The choice of which parallel axis is computed from the centre of rotation of the mouse, which depends very sensitively on the motion. If the two sensors are moving substantively identically, the centre of rotation is extremely far away, so that the scheme in this disclosure results in approximately straight-line translation in a direction at right angles to the chosen axis.) Any 3D rotation can in fact be produced by a sequence of such standard-axis rotations, but for a user to achieve a desired orientation the sequence of alternating axis selections and rotations is likely to be long. This 3D rotation scheme could in fact be accomplished efficiently with a standard mouse, not requiring the disclosed invention: selecting an axis is easily achieved with the normal cursor, and rotation around it is then a motion with one degree of freedom, like a slider. This is as easily controlled by the $x$ or $y$ changes reported by a standard mouse as by the change in angle $\theta$ reported by the device disclosed. The 3D rotation scheme for a standard mouse that is described as background in Drawing 7 below, widely used in the art, allows a user better control.

The non-patent literature includes 'A Two-Ball Mouse Affords Three Degrees of Freedom', by MacKenzie, Soukoreff and Pal, Extended Abstracts of the CHI '97 Conference on Human Factors in Computing Systems, pp. 303-304. New York: ACM. This paper describes a mouse which uses two standard ball-mouse sensors, each reporting translational $X$ and $Y$ change, to report both translational and rotational information. (The disclosure below discusses, as one class of means of implementing the present invention, the use of two planar translational sensors of any type, ball, optical, inertial, electromagnetic, *etc.*, rather than of a single sensing modality. Our preferred implementations each use a single sensor.) The paper does not discuss integrated means by which an application can interact with this mouse and provide added control to the user, beyond remarking that the user can rotate screen objects with it, and that "That our mouse looks and acts like a regular mouse 'most of the time' is important for user acceptance." It specifies that whether the mouse is to report $X$ and $Y$ changes only, or rotation as well, is to be directly controlled by the user: "If the CTRL or ALT key is also depressed (presumably using the other hand), movement is in 3df mode; otherwise it is in 2df mode." In an integrated setting it is for an application to control when it requests and uses rotational information as well as $X$ and $Y$, with user choice to be via the application. (An application could respond to a left-button drag with pure translational motion, to a right-button drag with rotation as well.) Analogously, when a standard mouse is used to control a standard slider, it is being used as a 1-degree-of-freedom control, for example with only the reported change in $X$ used to modify the slider button's position. (In some versions the cursor is still free to move in the $Y$ direction, but only $X$ changes affect the application.) The user does not have to use the keyboard, or a dedicated button on the mouse, to put the standard mouse into 1-degree-of-freedom mode. The 3-degrees-of-freedom mouse disclosed below makes $X$, $Y$ and angle changes always available; the application can use only $X$ (or only $Y$) for a slider, only $X$ and $Y$ for a selection cursor in the plane, and all three numbers together for a wide range of purposes, not all of them causing anything on the screen to rotate. MacKenzie, Soukoreff and Pal make no attempt to discuss application uses other than simple rotation of 2D screen objects. In US Patent 6,618,038 to Bohn, discussed above, a limitation to rotational use is explicit in the claims: Claims 29 and 33 refer to "said image being rotatable proportional to the rotational movement of said pointing device", Claim 44 to "rotating said image displayed on said display device based on said rotational movement of said pointing device", with no reference to non-rotational degrees of freedom that said image may have.

In the prior art, several multiple degree of freedom input devices are available for user control of 3D motion and rotation of an object displayed in 3D. However, the problems connected with these tasks employing a device interoperable (for the user's skill set and for the system's hardware and software) with a standard 2-degree-of-freedom mouse are not addressed in the prior art documents in the manner of the current invention.

The problem addressed by the current invention is that a rigid shape in the plane is not naturally restricted to the lateral and vertical motion enabled by the standard mouse control, that for some screen objects the user needs to change more than their rigid position, and that three-dimensional motion and change are even less well matched to the standard mouse. While a position of a rigid shape in the plane has three *degrees of freedom* - it can independently change any of the three position aspects $x$, $y$ and a rotation angle $\theta$ - the mouse can signal change in only two. We illustrate this with several examples of the difficulty of controlling screen objects with a standard mouse, to add clarity to our disclosure below of the solutions to these difficulties made possible by the present invention.

Consider an interactive game where the user must guide a simple boat shape 200 along a channel 201, without touching the sides. Drawing 2 shows the starting position 200 and two typical permitted positions 210 and 211 that should succeed it. The question of interest here is how the user guides the shape from position 210 to position 211. By a standard translation drag, the user can move the boat from position 210 to position 221, but must then rotate it. A common solution is to attach to the displayed boat a control 230, which the $(x, y)$-positioned cursor can rotation-drag in a circle centred on the boat, to the rotated position 231. This turns the boat to the desired position 211. However, the position 211 has been reached by way of the unacceptable position 221. To move the boat 200 without ever touching the sides of the channel 201, the user must make a sequence of steps: a small $(x,y)$ translation drag, then some action to activate the turning control 230, then rotation by use of the control 230, another small translation, and so on. Even if the turning control 230 is always active (which is likely to interfere with other functions of the software), the user must frequently move the cursor between the body 200, 210, 211, 221 of the boat and the control point 230, dragging them in alternation. This is in great contrast to the single smooth movement by which a physically grasping hand could move a physical model boat along a physical model of the channel. In what follows, we shall refer to a *drag movement* in a user interface as the combination of events that occur between a pressing down of a mouse and its subsequent release. In this sense, the transition between 210 and 211 in the example discussed requires multiple drag movements. To traverse the entire channel, evidently, requires many more.

Similarly, one feature of a widely used slide show and document preparation software suite allows the user (Drawing 3) to add text to a slide and to tilt it. Clicking 'insert text box' lets the user drag a corner to create a horizontal box of chosen size, click the mouse with the cursor inside the box, and type words which then appear there. (Other controls adjust colour, font, *etc.*) A box frame appears, together with a rotation knob 301. When the cursor tip is on or near the box frame 300, other than at specially marked size-dragging points 311, a translation-dragging cursor 320 appears. (Dragging the cursor from a start in this state moves the box in the $x$ and $y$ directions, while keeping it horizontal.) When the cursor is near the rotation knob 310, it becomes a rotation-drag icon 330. While actually dragged it becomes a 'rotating!' icon 340, while a dotted rectangle 341 shows where the box itself would rotate to. When the user completes the drag movement by releasing the button, the text box is redrawn 350 at the angle reached. The display details aside, the problem here is again that the user must use multiple drag movements where a single one would be convenient. Normally at least one translation and one rotation is required, and it is rare for the user to judge accurately "If I translate by this much, rotation to the angle of this line 360 will make the text not only parallel to it but placed at the distance I want and starting at the right point," so a new translation is needed after rotation. If the user begins with rotation, distant from the line 360, it is hard to get exact parallelism in a first step. Either way, placement of a text box by this scheme usually requires alternating iteration of the translation and rotation tools, with several drag movements each, to achieve the desired position. Other schemes exist, but by using a standard mouse they are subject to similar difficulty.

Another use of the mouse is in defining curves, for example in fitting a curve 411 to the visible outline of an object 400. (In applications the object 400 might be a photographic image, as here, a tumour or tissue visible in a medical scan, a region affected by a crop disease, *etc.;* or the curve 411 might be created for some other purpose than a boundary. The point of interest here is the means of creating it.) Much mouse-driven software provides an option of 'drawing' directly with a mouse, creating a curve that follows the cursor as though it were a pencil tip: however, a mouse is hard to use with the necessary delicacy, and many users prefer a digital drawing pad where the reported $(x, y)$ position is that of the tip of a pencil-like stylus. For creating a smooth curve with a mouse, a more indirect approach is widely preferred. A smooth curve 411 can be created by giving a few points 422 on it, and specifying its direction at these points. The computer can then interpolate, using splines, wavelets or other well established methods to find a curve that passes through each point in the required direction. The direction is usually fixed at a particular point 431 by selecting it, upon which tangent direction control points 440 and 441 appear, pointing forward and backward along the curve. Using the cursor 450 to drag one of these points, such as 441, changes the curve from a previous shape 460 to a new shape 461 with the new tangent direction toward the current position of the point 441. (Moving the point 441 further from 431, in the same direction, causes the curve to stay closer to that direction over a longer stretch around the point 431. The curve maintains its directions through the points 430, but thereafter bends faster to approach a longer line 440 to 441.) As in the previous cases, use of this method involves multiple switchings of control point, in this case between a curve point such as 431 and the direction controls 440 and 441. To achieve a desired curve, the user can rarely drag the point 431 and a direction control 440 or 441 with a single move each: it is often necessary to nudge point position, tweak the direction, readjust the point position, *etc.*, until the desired shape is reached.

All these multiplicities of moves arise from the fact noted above, that a rigid position in the plane has three degrees of freedom, but the mouse can signal change in only two. Stratagems have hence developed to switch from controlling one subset of the degrees of freedom $x$, $y$ and $\theta$ to control of a different subset, often in a less direct and natural way. In working with software, the user has to use these switch stratagems frequently.

The problem is substantially worse in controlling a three-dimensional object (500). Its centre can be moved *(translated)* in three independent directions 510, 511 and 512. It can also rotate about that centre in three independent (though interacting) degrees of freedom. The breakdown of a general rotation into a composite description using three numbers such as angles can be done in multiple ways. Just as a general drag movement on a flat surface may be described by combining distances *East* with *North* or combining distances *Inland* with *Along the Shore* (different pairs of numbers, but two numbers are always necessary and sufficient for a full description), a general rotation can be given by three numbers in various ways. Some of these are angles of rotation 520, 521 and 522 about three axes fixed in space; angles of roll 530, pitch 522 and yaw 523 about axes fixed in the object; the azimuth 540 and altitude 541 of the rotation axis 545 combined with the number of degrees through which the object turns 546 about that axis, and so on. All these descriptive schemes use exactly three independent numbers, which expresses the fact that a rigid object in three-dimensional space has three degrees of rotational freedom, combining with its three degrees of translational freedom to require six numbers to describe every change of position. It is sometimes convenient to use more numbers, despite their redundancy: For example, there are many uses for a nine-entry matrix as a rotation descriptor, as in Equation (1) below, instead of a description by three angles. (For any system using fewer than three numbers, there will be many rotations that cannot be specified.) We refer to the 6-degree-of-freedom combination of translational and rotational information as specifying an object's *pose.*

Using a mouse to control the position of an object in a three-dimensional display is thus a tedious and laborious process, with many disadvantageous methods widely in use. For example, merely to control the $(x, y, z)$ position of a point it is common for software to provide three separate windows 600, 610 and 620, with parallel views along the x, y, and z axes respectively. A fourth window 630 may provide a 'general' view from a non-axis direction, perhaps with perspective rather than parallel projection. The view 600 along lines parallel to the *x* axis shows only *y* and *z*. Dragging with the cursor in the window 600, in screen 601, a drag movement changes only *y* and *z* to give the situation viewed in the same four ways in 602, leaving *x* unaltered. Using window 610 the user can change *x* and *y* together, for example changing to the situation in the quadruple view 603. Using 620 allows changing *x* and *z* to give the situation 604. No drag with a standard mouse changes all three at once. This results in a great deal of transfer between windows, each time requiring a cursor motion and then at least one new drag movement, before the user can achieve an appropriate configuration as judged by some desired effect in the object, scene or view under construction. Moreover, the scarce resource of 'real estate' on the monitor is used lavishly by this multiplicity of windows, making each of the individual views small, thus concealing detail, and limiting the space available to other features of the interface. Some software uses multiple monitors to mitigate this problem, at substantial cost in equipment, in space occupied and in the separate displays that the user must watch.

Standard mouse control for rotation of a three-dimensional object 700 is even more complicated. In one widely used method, the user moves a cursor 710 which the object 700 turns to follow, rotating about a point 701 with coordinates, beyond the display 705 on which the image is created by marking points as they should appear to an eye 703. The point 701 may be a standard point, fixed in space, or the internal coordinate centre of the object 700 that moves when the object 700 is translated. In one version of this, during a drag movement the line 711 through the cursor 710 and the point 701 becomes fixed in the object, which thus turns with it. Algebraically, this may be described as follows. Take the coordinates (as is conventional in 3D graphics) as $x$ across the screen, $y$ up the screen and $z$ through it, away from the user. Take the plane of the screen as $z = 0$, so that "beyond the screen" means that $z > 0$. When the cursor point moves from the location in the plane of the screen to the location, we define the required rotation matrix $R$ by first computing some intermediate quantities:

$$\tilde{x} = x - \bar{x} \qquad \tilde{y} = y - \bar{y} \qquad u = \tilde{x}^2 + \tilde{y}^2 + z^2$$

$$(w_x, w_y, w_z) = ((\Delta y)\,z,\, -(\Delta x)\,z,\, (\Delta y)\,\tilde{x} - (\Delta x)\,\tilde{y})$$

$$w = \sqrt{w_x^2 + w_y^2 + w_z^2} \qquad d = (\Delta x)\,\tilde{x} + (\Delta y)\,\tilde{y}$$

$$\delta = (\Delta x)^2 + (\Delta y)^2 \qquad v = \sqrt{u^2 + 2d + \delta}$$

$$c = (u + d)/v \qquad s = 1/v \qquad \gamma = (1 - c)/w$$

$$R = \begin{bmatrix} c + \gamma w_x^2 & \gamma w_x w_y - s w_z & \gamma w_x w_z + s w_y \\ \gamma w_x w_y + s w_z & c + \gamma w_y^2 & \gamma w_y w_z - s w_x \\ \gamma w_x w_z - s w_y & \gamma w_y w_z + s w_x & c + \gamma w_z^2 \end{bmatrix} \qquad (1)$$

where c and s (found by algebra rather than trigonometry) are the cosine and sine of the angle turned around an axis in the direction of the cross-product vector $(w_x, w_y, w_z)$. Alternatively, R may be taken as the combination of a turn by $\Delta x$ about the y-direction line through the point 701 and a turn by $\Delta y$ about the x-direction line through the point 701: or turns about the y-direction may be through an angle of

$$c\left(\arctan\left((x + \Delta x)/b\bar{z}\right) - \arctan\left(x/b\bar{z}\right)\right) \quad \approx \quad \left(b\Delta x\,\bar{z}/(b^2\bar{z}^2 + x^2)\right) \qquad (2)$$

for conveniently chosen $b$ and c, and similarly for the effect of $\Delta$y. Many formulae have similar, but not identical results of object rotation, as the cursor 710 moves in the display plane 705. The 'feel' of (1) is in several ways the most natural.

A sideways motion thus turns 721 the object 700 about an up-down axis 722 (near vertical, depending on the motion and on the algebra implemented). A vertical motion 730 turns it 731 around a level axis 732. No drag movement causes a turn purely about the axis 742 at right angles to the screen, the missing degree of freedom. Most versions of this approach do indirectly address this, as they cause a loop path 750 to combine large rotations about other axes into a small rotation about an axis near 742. This provides some support for these rotations, but the need for intermediate large turns, for a user whose goal is a 'tweaking' twist about the axis 742, adds to the difficulty of manipulation. Recourse is had again to the multiple windows in Drawing 6: the mechanism just described controls different pairs of degrees of freedom from each window, but through no one window can the user control rotation in a full and straightforward way. Particularly when the user must fit together two objects in the computer display such as two parts of a machine or a molecule that the user is designing, the combined six-degree-of-freedom control requires a great deal of switching of windows and selections. One class of solutions involves the use of a mouse in each hand (see R C Zeleznik, A S Forsberg, and P S Strauss, Two pointer input for 3d interaction, Computer Graphics April 1997, 115-120, for discussion of interactions schemes, and M Westergaard, Supporting Multiple Pointing Devices in Microsoft Windows, in Microsoft Summer Research Workshop 2002, Cambridge, UK, 9-11 September 2002 for a recent discussion of the technicalities involved), but this too has multiple problems. The user's hand must abandon the keyboard more completely than even with one mouse, so that typing in a label or using a simultaneous key becomes more cumbersome; the frequent use in interfaces of pressing a mouse button with Shift or ALT pressed, for an effect different from a simple press, would now require that one hand returns to the keyboard, and locates the relevant key. This takes time, and subverts the two-mouse interaction. Moreover, a pair of standard mice is a mismatch to the object motion problem, since the combined four degrees of freedom are more than needed for translation or rotation alone (so that some aspect of the change in the position data $(x_1, y_1, x_2, y_2)$ must be arbitrarily ignored, and the user must learn which), and not enough to control both together. This approach has not moved significantly into the general market of 3D software, and it does not seem likely to do so. The standard mouse remains the typical 3D controller.

As a result, in any laboratory with multiple users doing three-dimensional tasks, a walk around the cubicles will show a large fraction of users engaged merely in changing the position of an object (or, equivalently, the viewing position), rather than doing anything productive to modify or test the object itself. This is not a satisfactory situation.

Many data structures are not inherently three-dimensional in the sense of description by triples of numerical values such as red, green and blue intensities or roll, pitch and yaw, but can nevertheless be more easily represented in three dimensions than in two. For example, abstractly a *graph* in mathematical usage refers to a set of *nodes* or vertices, and a set of *edges,* each edge joining a specified pair of nodes. (An edge may have additional properties such as directionality, colour, electrical resistance, *etc.*, but the basic datum remains 'which nodes it joins'.) This discrete structure is often represented visually by showing the nodes as points, and drawing lines or curves between them to represent edges (Drawing 8). For a simple graph such as the family tree 801 in the present application, where the nodes represent 802 persons personally known to that Inventor or 803 their unions, and an edge represents 804 entry into a union or 805 the union's producing a person as a child, this can be a clear visual representation on paper. Indeed, this particular family tree graph is a 'tree' in the graph theoretic sense, containing no loops, and such a graph can always be embedded in a plane surface with no crossings. Moreover, this example satisfies the constraint of representing 'forward in time' for each edge by 'downward on the page', and displays sibling birth order from left to right. However, the analogous family tree 807 contains multiple paths between distinct nodes, although as a 'directed' graph a family's relationships cannot contain loops without self-ancestry. Such a mult-path graph may have no planar representation whatever that does not involve at least one crossing of the curves representing edges, and may require many. It is a standard graph-theoretic result that a graph 811 of five nodes each joined directly to every other, or a graph 813 of six nodes where each node in the lower triple is joined to each node in the upper, cannot be embedded in the plane without crossings (though the number of crossings could in each of these two examples be reduced to one). The standard practice in electrical wiring diagrams when drawing lines or curves that cross, but should not be considered as meeting, is to indicate them by semicircles as in the versions 812 and 814 of the graphs 811 and 813 respectively: the need for such a standard is another example of the problems presented by planar representation of networks. Moreover, a general graph can be embedded without crossings if and only if it nowhere contains either of the graphs 811 or 813 as a subgraph. Even where a graph has a crossing-free embedding, it may not have one that satisfies relevant constraints such as directionality, birth order, space for labels, *etc.,* so that crossings easily become unavoidable. With multiple crossings, a planar graph is often visually useless.

However, any graph has a *straight embedding* in three-dimensional space, using only straight lines to represent the edges. The configurations 820 and 823 illustrate this option for the nonplanar graphs 810 and 813 respectively, arranging them within a cube for clarity in the medium of static drawings. (In a rigorous technical sense, 'almost all' ways to position the nodes in *(x, y,* z) space lead to such an embedding. Particular straight embeddings usually have further advantages, but this fact demonstrates a non-empty set of choices.) A family tree, a set of trading relationships, joint or partnerships between companies, a set of scientific authors linked by joint papers or of convicts linked by participation in joint crimes, a wiring diagram, must in every case allow a representation as a straight embedding in three dimensions. This has obvious advantages for display, except that (in the current standard interfaces) 3D objects are difficult and tedious for a user to interact with. With a standard mouse it is hard even to turn a 3D embedded graph for the most convenient view: in any current view, some nodes and edges are closer, and may mask others. Any single, static view of a 3D graph structure, projected to paper or the screen, is likely to be *less* clear than a 2D layout like 807, developed with 2D constraints in mind, and fine-tuned to diminish the impact of crossings. Particularly if the display device is not equipped to support stereo viewing (for real objects the two eyes see slightly different views like those in Drawing 40, from which the visual cortex of many but not all humans can infer the distance of objects: a stereo display presents the appropriate image to each eye separately), the depth cue provided by even small rotations is important in perceiving three-dimensional structure. Moreover, when the user's region of interest changes, there is often a need to turn the displayed view. It is thus useful in multiple ways to rotate the displayed object, but with a standard mouse it is inherently difficult to control general rotations. Even more important, it is hard to select a node or edge (or group of them) for deletion, drag a node to an $(x, y, z)$ position that makes relationships visually clearer, or add a new node at a new *(x, y,* z) position. In consequence, planar images of graphs remain the dominant standard.

Input devices which control more than three degrees of freedom at once are known in prior art. Some (like the electromagnetic Polhemus™, optical Polaris™, Immersion Probe robot arm, and the VideoMouse™ [Hinckley, Sinclair, Hanson, Szeliski, Conway; The VideoMouse™: A Camera-Based Multi-Degree-of-Freedom Input Device, ACM UIST'99 Symposium on User Interface Software & Technology, CHI Letters 1 (1), pp 103-112]) directly report the 6-degree-of-freedom position of an object held by the user. Others, such as the joystick or the SpaceMouse™, occupy a static position on the user's desk and respond to various pressures that the user may make on their components. For specialized uses and for game playing some of these have established their usability, but most users still buy a laptop or PC with a standard mouse. No alternative device, to the extent of our knowledge, functions identically to the standard mouse in the large number of functions, which a standard mouse performs adequately, such as selecting an icon or a block of text, dragging a file from one directory to another, or clicking on a hyperlink. By "functions identically", here, it is meant that a user could connect the device to the same port on a computer, and move and press buttons on it in the same way, with the same results when using the same software.

As noted above, MacKenzie, Soukoreff and Pal, "A two-ball mouse affords three degrees of freedom", Extended Abstracts of the CHI '97 Conference on Human Factors in Computing Systems, pp. 303-304. New York: ACM, (1997) discloses an input device with a relationship to one implementation of the present invention. Disclosed therein is a physical means for reporting the additional degree of freedom that the present invention reports to the user, but the paper does not discuss identical substitution, the relation to existing software, or control beyond planar rigid motion. Lacking these aspects of the present invention, the two-ball mouse has been noted in surveys but ignored in software practice.

The required learning curve for the new devices has made them specialist equipment for those prepared to spend additional time and effort in their mastery. In consequence, even many software tools that themselves take substantial study to master (such as those for modifying images, or for computer aided design of machines or molecules) assume the standard mouse as the default input tool, and design their interactions around its limitations.

The present invention seeks to offer a solution to these problems. It can substitute identically for the standard mouse where appropriate, its manufacture requires few additional resources or none (depending on the implementation chosen), and it embodies an additional degree of control freedom that solves or mitigates the problems described above, and many other such problems. In many of these other cases the factor controlled by the third degree of freedom in input is not itself a rotational degree of freedom, but can with convenience for the user be semantically linked to mouse rotation.

Objects of the Present Invention

A primary object of the present invention is to control three degrees of freedom in modifying computer entities, using the three degrees of freedom in rigid planar motions of a mouse that can substitute identically for the standard mouse that is widely accepted, in any setting designed for such a mouse.

A second object of the present invention is to control three degrees of freedom in modifying computer entities, using three degrees of freedom in data sensed by a mouse-emulating device that can substitute identically for an emulator of the standard mouse, such as a track ball or TrackPoint, in any setting designed for such an emulator.

A third object of the present invention is to sense the three degrees of freedom in rigid planar movement, using a mouse that requires few or no additional resources to manufacture.

A fourth object of the present invention is to sense the three degrees of freedom in rigid planar movement, using a mouse emulator that requires few or no additional resources to manufacture.

A fifth object of the present invention is to sense the three degrees of freedom in rigid planar movement using a mouse with a single sensing unit, whether mechanical, optical, inertial, acoustic or electromagnetic.

A sixth object of the present invention is to sense the three degrees of freedom in rigid planar movement using a mouse with a single ball, whose rotation is detected by three or more rollers in contact with it.

A seventh object of the present invention is to sense the three degrees of freedom in rigid planar movement using a single optical sensor which fits and estimate of motion parameters to a plurality of recently captured images of a surface relative to which the device moves.

An eighth object of the present invention, though not a preferred implementation, is to sense the three degrees of freedom in rigid planar movement using a mouse with two or more sensors of a type usable in a standard mouse reporting two degrees of freedom.

A ninth object of the present invention is to apply three-simultaneous-degree-of-freedom control afforded by such a mouse to the natural three degrees of freedom of rigid motion of a planar construct in the computer display, including but not limited to a cursor, text box, planar game piece, part of a picture or other design, position and velocity of a key frame element, key frame construct controlling velocity and rate of turn, or a brush tip.

A tenth object of the present invention is to apply three-degree-of-freedom control afforded by such a mouse to continuous translation of a planar construct in the computer display, in combination with rotation among a set of angles such as the cardinal directions, or other angles specifically relevant to an application.

An eleventh object of the present invention is to apply three-degree-of-freedom control afforded by such a mouse to motion of a planar construct in the computer display, with a proportional or a non-linear scaling of the respective degrees of freedom.

A twelfth object of the present invention is to apply three-degree-of-freedom control afforded by such a mouse to the two degrees of freedom in translational motion of a planar construct in the computer display, in simultaneous combination with a third degree of freedom other than rotation, including but not limited to brush size, the scale of the construct or of an image over which it moves, scrolling, the volume or pitch of sound emitted by or on behalf of the construct, colour, brightness, the dosage of a drug or radiation desired at a point occupied by the construct in a medical image, the desired chemical concentration at a point occupied by the construct, the opacity of a brush, the current selection of an entity within the construct, the shape of the construct, or the angle of the construct's jaw as it chews gum.

An thirteenth object of the present invention is to apply simultaneously the three degrees of freedom in control afforded by such a mouse to the degrees of freedom in translational motion of a three-dimensional construct in a computer display.

A fourteenth object of the present invention is to use the three-degree-of-freedom control of translational motion afforded by the said simultaneous application, in the control of the translational location of a cursor, a three-dimensional key frame element, a control element of a three-dimensional curve, or the linear velocity controlled by such a key frame element.

A fifteenth object of the present invention is to apply the three simultaneous degrees of freedom in control afforded by such a mouse to the rotational degrees of freedom natural to a three-dimensional construct in a computer display.

A sixteenth object of the present invention is to use the three-degree-of-freedom control of rotational motion that is afforded by the said simultaneous application, in the control of the rotational attitude of a cursor, a three-dimensional key frame element, a control element of a three-dimensional curve, or the angular velocity controlled by such a key frame element.

A seventeenth object of the present invention is to apply simultaneously the three degrees of freedom in control afforded by such a mouse to the three positional degrees of freedom of a clipping plane in a three-dimensional display.

An eighteenth object of the present invention is to apply pose controls for a three-dimensional object, as described above, to the pose of a three-dimensional selection region.

A nineteenth object of the present invention is to apply pose controls for a three-dimensional object, as described above, to the pose of a three-dimensional clipping region.

A twentieth object of the present invention is to apply the control of a three-dimensional cursor, as described above, to the selection, dragging and rotation of objects within a three-dimensional display.

A twenty-first object of the present invention is to apply the control of a three-dimensional cursor, as described above, to the selection, dragging and rotation of control elements which change the form of an object within a three-dimensionai display.

A twenty-second object of the present invention is to apply the control of a three-dimensional cursor, as described above, to the selection, dragging and rotation of corners, edges and faces used as control elements which change the form of a selection box or clipping box within a three-dimensional display.

A twenty-third object of the present invention is to apply simultaneously the three degrees of freedom in control afforded by such a mouse to the three positional degrees of freedom of a plane in which scan data are to be acquired.

A twenty-fourth object of the present invention is to apply simultaneously the three degrees of freedom in control afforded by such a mouse to the three translational degrees of freedom of a solid region in which scan data are to be acquired.

A twenty-fifth object of the present invention is to apply simultaneously the three degrees of freedom in control afforded by such a mouse to the three rotational degrees of freedom of a solid region in which scan data are to be acquired.

A twenty-sixth object of the present invention is to apply the control of a three-dimensional cursor, as described above, to the selection, dragging and rotation of corners, edges and faces used as control elements which change the form of a box defining a region in which scan data are to be acquired.

A twenty-seventh object of the present invention is to provide the user of a mouse with the option of its reporting not changes in the position of its sensor, but changes in another position fixed relative to the mouse, or in the instantaneous centre of motion of the mouse.

A twenty-eighth object of the present invention is to apply the control of a three-dimensional cursor, as described above, to the selection, dragging, rotation and modification of a network representing entities and binary relations between them.

A twenty-ninth object of the present invention is to apply the control of a three-dimensional cursor, as described above, to the selection of a property in a three-parameter space of such properties, such as the space of possible colours, the space of specularities for different colours, or the space of (width, length, height) choices in specifying a brick.

A thirtieth object of the present invention is to define rotational gestures, including rapid, brief clockwise or anti-clockwise turns, which may be used to signal to the computer in the manner of a button click.

Summary of the Invention

The invention feels familiar to the user, being on its upper surfaces identical to a computer mouse in any of the standard configurations, with a single button for use with Mac applications and two or more for a Windows or Linux application. (Our preferred implementation uses two, without the scroll wheel or third button recently added for web page manipulation, since the present invention can achieve the same result by less delicate finger movement. For those preferring the scroll wheel, there is no problem in including it.) Its behaviour also seems familiar, since in interaction with software that expects a standard mouse, it substitutes for such a mouse. However, for the use of code that can recognise it as different, it reports not merely a change $\Delta x$ and a change $\Delta y$ in the position *(x, y)* between successive reports, but also a $\Delta\theta$, the change 812 in its planar direction on the desk or mouse pad (Drawing 9). The 'gear ratio' of physical rotation to reported angular change may be adjusted, as may the effective point *(X, Y)* on the mouse whose motions are reported.

By the configuration of its drivers, on receiving signals from an application designed to use a standard mouse the present invention reports only the changes ($\Delta x$, $\Delta y$) expected, together with the changes in button state. However, an application that requests $\Delta\theta$ sees that information also, by using a specified protocol. For an application originally designed to use only a standard mouse, but which supports the creation of third-party 'plug-ins', such a plug-in may extend the application's functionality to include one or more of the interaction mechanisms here described: supplied to the user as an optional part of the present invention, such a plug-in avoids the need to wait for a version of the application where support for such mechanisms is programmed by the application's creator. Alternatively, the invention may emulate a joystick by responding to standard joystick protocols, enabling the mouse-equipped user to interact with applications previously created for joystick input.

When an application requires the user to modify only the *(x, y)* position of a cursor, as in selecting a button or link by moving the cursor there and clicking, the application may either collect and ignore $\Delta\theta$, or simply not collect it. In this situation, the user notices no difference from a standard mouse, since (for example) a cursor then moves without rotating. However, an application may couple $\Delta\theta$ to the behaviour of various objects on screen. Revisiting the situation of Drawing 2, for example, Drawing 10 shows the approach of a cursor 1010 in (x,y) mode, unrotating, as though moved by a standard mouse. When the cursor 1010 touches 1015 the boat, the boat is highlighted 1020, and the cursor may adopt a form signalling turnability, such as 1011. Holding down a button invokes the drag mode appropriate to this object, which includes rotation, perhaps with a 'gear ratio'. In our preferred implementation, here and elsewhere where a cursor drags a rotatable object, the cursor rotates visibly itself, maintaining a rigid positional relationship. A single drag movement now suffices to move the boat along the river 1001 through the sequence of positions 1030, without awkward motion of the wrist and elbow. Similarly, this mouse enables a 'fire-as-you-turn' game mode (Drawing 11), a faster version of interactive crosswords and the game Raku (Drawing 12), and the easy placement of labels (Drawing 13) and drawing elements (Drawing 14). Drawing 15 shows a unified widget controlling a curve point and direction simultaneously, and drawings 16 and 17 show the extension of this to key frames, controlling motion along a curve.

A 3-degree-of-freedom device such as the present invention can never simultaneously control the six degrees of freedom in rigid 3D motion. However, it can control position and orientation separately, with a natural mapping to each. Drawing 18 shows control of position ($x$, $y$, $z$), while Drawing 19 shows control of orientation. The mechanism above would evidently be useful in any software that displays 3D objects, from gearbox designs to seismic data to MRI scans: all these objects must frequently be moved, for an improved view. It is also useful in controlling the operation of a scanning system, where the 'object' to be moved represents not an object such as a gearbox or a brain scan, but the solid region in which the system is to be instructed to acquire data. The present invention makes this easier while remaining interoperable with the standard mouse for its familiar functions. It is also frequently important in 3D display to control the position of a cut-away 'clipping plane': Drawing 20 shows convenient manipulation of this in the present invention. A similar control applies to the specification of a single plane in which a scanning system is to be instructed to acquire data. Cursor manipulation defining 3D paths is shown in Drawing 21, with a 3D analogue of the 2D animation key frame logic in Drawings 16 and 17. Drawing 22 shows improved selection of colour using the present invention, by a means equally applicable to the reflection properties of a surface, or to any three-parameter selection that a user must make. Drawing 40 illustrates a selection box that using the present invention could be added to a 3D graph with one point selection, one translational drag, and one rotation, as opposed to many more for any schema using a standard mouse: more actions are discussed in the Detailed Description. Drawing 41 illustrates that selections within a draggable widget such as a palette or tool-tip can be made while dragging it. Drawing 42 illustrates that the user can turn a brush tip while moving it (changing the effect of the brush) or change the state of a more general object while moving it: in the example shown the user makes it move its jaw ("chew gum") and navigate the screen ("walk") at the same time.

The present invention also includes the replacement of keyboard or submenu options that modify the effect of a click, by gestural features using rotation rather than holding down the Shift, Ctrl, or Alt key while performing a mouse click, to modify its effect, or moving through submenus.

The required reporting of $\Delta x$, $\Delta y$ and $\Delta\theta$ may be implemented by including, at undersurface points on the mouse, two of the sensors by which a standard mouse detects the change ($\Delta x$, $\Delta y$), either optically or mechanically, and if mechanically either by rollers moving against a surface, or by accelerometers which detect the forces due to change in momentum and integrate them to give changes in position. Either from the changes ($\Delta x_1$, $\Delta y_1$) and ($\Delta x_2$, $\Delta y_2$) reported by these sensors, or from the signals used by these sensors to compute ($\Delta x_1$, $\Delta y_1$) and ($\Delta x_2$, $\Delta y_2$), it computes a value for $\Delta\theta$. It returns as ($\Delta x$,$\Delta y$) a linear combination of the ($\Delta x_1$, $\Delta y_1$) and ($\Delta x_2$, $\Delta y_2$) that corresponds to the motion of a selected point in the mouse, or optionally of the instantaneous centre of rotation of the said motion, together with the single number $\Delta\theta$. Alternatively, in our preferred implementation, the device uses a single integrated sensor, with identical results as regards exchange of signals with an application. We describe rolling and inertial sensors for this purpose, but our preferred implementation uses optical hardware identical to that in a current optical mouse with a single sensor, but applies more computation to the optical changes visible to that sensor and thereby computes the three numbers ($\Delta x$, $\Delta y$, $\Delta\theta$) directly. We disclose a novel approach to such computation, fitting a numerical model of the mouse's motion (optionally with time-dependent velocity) to agreement over a plurality of successive images that we compare by interpolation making use of the model. The numerical model allows reporting numbers with a time offset into the future, reducing problems with latency that arise with an application that requires long computations before each displayed image, for which the cursor position may become visibly out of date before the image appears to the user. The single optical sensor implementation requires manufacturing resources that are nearly identical to those for a standard mouse, involving only an increment in computing power and thus a higher minimum specification for the embedded numerical processor (though not necessarily a minimum above those met by processors already used in some standard mice). The other elements, and the assembly process, require precisely no modification or added resources. Many other means of sensing ($\Delta x$, $\Delta y$, $\Delta\theta$) will be apparent to one skilled in the art, as the art now is and as it evolves. In particular, where a general purpose positioning system is available and sufficiently precise (as GPS is not yet, but some locally installable systems are, and more will become so) it will be evident to one skilled in the art how the interactions here disclosed can be reproduced within that system.

We disclose also the way in which the above rolling and optical implementations may be turned upside down, to provide a stationary unit that detects relative motion of the hand upon it, instead of its own motion upon a static surface. Such an inverted device, or a device responsive to rectilinear and torque forces upon it, can emulate the moving device here disclosed by interacting with applications in a precisely corresponding manner.

Brief Description of the Drawings

Drawing 1: A standard mouse with the directions of movement it reports.

Drawing 2: A user interface problem in guiding a virtual boat down a river.

Drawing 3: A typical mouse interaction for the placement of rotated text.

Drawing 4: A typical mouse interaction for the creation of a smooth curve.

Drawing 5: The six degrees of freedom in the pose of a 3D object.

Drawing 6: Windows for the standard mouse control of the pose of a 3D object.

Drawing 7: Control using a standard mouse for rotation of a three-dimensional object.

Drawing 8: Two family trees, illustrating the problem of planar representation of networks.

Drawing 9: The three elements of motion reported by the present invention.

Drawing 10: Positions in a single drag movement with the present invention, guiding a virtual boat down a river.

Drawing 11: Positions occurring during a single drag with the present invention, maintaining the aiming point of a simulated planar weapon while the weapon changes location.

Drawing 12: Interactive crosswords and the 'Raku' puzzle as currently played, and as they could be played using the present invention.

Drawing 13: Effect of a single drag with the present invention, relocating a text box.

Drawing 14: A multiplicity of pictorial elements placed in an image at different locations and angles, each with a single drag movement using the present invention.

Drawing 15: A change in curve shape achieved with a single drag movement using the present invention.

Drawing 16: A sequence of key frame positions for an object moving in an animation, with the location and angle of each position achieved with a single drag movement using the present invention.

Drawing 17: A sequence of 'velocity and rate of turn' widget states for the key frame positions in Drawing 14, each created with a single drag using the present invention.

Drawing 18: The change in *(x, y,* z) position of a 3D object corresponding to the single drag shown for the present invention, when an application uses an appropriate input mapping.

Drawing 19: The changes in orientation of a 3D object corresponding to the single drag shown for the present invention, when an application uses an appropriate input mapping.

Drawing 20: Positioning a clipping plane.

Drawing 21: Positioning key frames in 3D for an animation required to pass a series of obstacles, each requiring a different location, orientation and direction of motion.

Drawing 22: Controlling an RGB or HIS colour specification as a three-dimensional point.

Drawing 23: Location of one or (as in some implementations of the present invention) two sensors on the underside of a mouse, or within it.

Drawing 24: Relative motion vectors at different points of, or defined relative to, a mouse with directional motion sensors at two points.

Drawing 25: Controlling the motion of a point outside the physical mouse.

Drawing 26: A ball and three-roller sensor for sensing general rotations of a ball.

Drawing 27: A trackball exploiting the three-roller sensor in Drawing 24, physically supporting the same suite of interactions as the mouse in Drawing 8.

Drawing 28: The components and optical pathways of an optical tracking sensor.

Drawing 29: The images detected by a three-degree-of-freedom optical sensor, and their relation to mouse movement.

Drawing 30: A sequence of positions considered as relations between image grids.

Drawing 31: Alternative sensor element layout patterns, and the effect of optical distortion.

Drawing 32: Planar layouts of line sensors for a 3-degree-of-freedom inertial mouse.

Drawing 33: Line sensors and one rotary sensor for a 3-degree-of-freedom inertial mouse.

Drawing 34: Exemplary layout for the components and wiring of a 3-degree-of-freedom mouse using two sensors of a type used in a standard mouse, and a USB hub via which they report separately.

Drawing 35: Exemplary layout for the components and wiring of a mouse using two sensors of a type used in a standard mouse, and an on-board unit by which their data are transformed into a single 3-degree-of-freedom information flow.

Drawing 36: Processors and data flow in mouse and computer, for the case in Drawing 34.

Drawing 37: Processors and data flow in mouse and computer, for the case in Drawing 35.

Drawing 38: Processors and data flow in mouse and computer, for a mouse using a single 3-degree-of-freedom sensor.

Drawing 39: Processors and data flow in an optical 3-degree-of-freedom sensor.

Drawing 40: A network graph displayed in 3D, to be manipulated with the present invention.

Drawing 41: Manipulation of a floating palette with the present invention.

Drawing 42: Using the present invention to 'chew gum' and 'walk' at the same time, and create subtler 'brush' curves.

Drawing 43: The information flow logic for deriving and reporting translation and rotation information from a pair of translational sensors.

Drawing 44: The information flow logic for deriving and reporting 'off mouse point' translation and rotation information from a pair of translational sensors.

Drawing 45: The information flow logic for estimating a motion field and deriving and reporting translation and rotation information.

Drawing 46: The information flow logic for deriving and reporting rotation and translation information from three rollers in contact with a single ball.

Drawing 47: The information flow logic for deriving and reporting rotation and translation information from the K most recent images collected by an optical mouse.

Drawing 48: The information flow logic for deriving and reporting rotation and translation information from accelerometer output in an inertial mouse.

Detailed description of the invention

While this specification concludes with claims particularly pointing out and distinctly claiming that which is regarded as the invention, it is anticipated that the invention can be more readily understood through reading the following detailed description of the invention and study of the included drawings.

The present invention provides a method and device for reporting changes in location and orientation of an object moving against a planar surface, with a response identical to that of a location-only mouse in any application which addresses such a mouse by the standard protocols, but on demand making data available on angular change about the normal to the planar surface. We refer to such a device as a *translation-rotation mouse.*

The preferred embodiment of the invention is to provide information regarding a planar rotation simultaneously with translation motion of an object as shown in Drawing 9. Drawing 9 shows a representative physical embodiment 900 of the invention, externally identical to a standard mouse 100 on its upper surfaces: the standard mouse's range of variation in shape, colour, number and placement of buttons, *etc.,* is equally acceptable here. The inclusion of other controls that add to the degrees of freedom controlled, such as a scroll wheel, slider, or touch pad is admissible but not germane to the functionality here disclosed. Our preferred embodiment uses two buttons 930, placed appropriately for contact with the fingers of a hand grasping the device. The invention rests on a surface 901 such as a desk or mouse pad, with physical characteristics (friction coefficient, visual texture, *etc.)* appropriate to the sensing system used in a particular embodiment. As well as the translation movements 910 and 91 1, reported as in Drawing I by the standard mouse and referred to as Ax and $\Delta y$, it uses the cable 920 or a wireless link such as a signal at radio or infra-red frequency to communicate a rotational change 912 of position about an axis 950 normal to the surface 901. We refer to this change as $\Delta\theta$. Just as with $\Delta x$ and $\Delta y$, it is this change that is reported, not the absolute value of $\theta$. As one may pick up the standard mouse at the left edge of the mouse pad, transfer it to the right, and continue moving the screen cursor to the left, one may lift it at the edge of a convenient range for a clockwise turn, put it down at a different angle, and continue turning clockwise.

Many of the software aspects of the present invention described below (though not all) involve a three-degree-of-freedom position of the cursor, specified either by a triple of numbers ($x$, $y$, $\theta$) or the corresponding Euclidean transformation position matrix

$$\begin{bmatrix} c & -s & x \\ s & c & y \\ 0 & 0 & 1 \end{bmatrix} = \begin{bmatrix} \cos\theta & -\sin\theta & x \\ \sin\theta & \cos\theta & y \\ 0 & 0 & 1 \end{bmatrix}. \qquad (3)$$

(For any c and s with $c^2 + s^2 = 1$ a unique corresponding $\theta$ exists.) This matrix specifies for any point described in cursor-centred coordinates (u,v) the description of the same point by display coordinates (U, V), by means of the relation

$$\begin{bmatrix} U \\ V \\ 1 \end{bmatrix} = \begin{bmatrix} c & -s & x \\ s & c & y \\ 0 & 0 & 1 \end{bmatrix} \begin{bmatrix} u \\ v \\ 1 \end{bmatrix}. \qquad (4)$$

The underside of the device, depending on physical embodiment, may or may not show visible differences from the standard mouse. We discuss such options in the following paragraphs, identified for clarity as subsection A.

**A. Hardware elements of the invention:** At one level one may consider the standard mouse as containing a single $(\Delta x, \Delta y)$ sensor, usually visible 2330 on the underside view 2300 of the mouse, which detects relative motion of the mouse 100 and the surface 101 it is moved against. The sensor may involve a composite of sensing devices, such as several internal rollers (against which a mouse ball moves and whose turns are measured in estimating $\Delta x$ and $\Delta y$), multiple light sensitive CCDs (giving a combination of signals which constitutes a image of the surface 101, whose changes are analysed to estimate $\Delta x$ and $\Delta y$), accelerometers, *etc.,* but by "a $(\Delta x, \Delta y)$ sensor" we mean a device that reports estimates of these two numbers.

If the $(\Delta x, \Delta y)$ sensor 2330 is installed at a particular location $(X, Y)$ with reference to x and y axes 2322 fixed in the mouse, it reports the $(\Delta x, \Delta y)$ position changes of that particular point in the mouse relative to the surface 101. In general, different configurations of $(X, Y)$ will give different $(\Delta x, \Delta y)$ for the same mouse movement: for example, if the mouse rotates around the attachment point of the cable 120 a correct $(\Delta x, \Delta y)$ sensor placed at that point would report $\Delta x$ and $\Delta y$ as both zero, while a $(\Delta x, \Delta y)$ sensor between the buttons should report a non-zero $\Delta x$ for the same motion. Only if the mouse is moving irrotationally is the report independent of $(X, Y)$. One means to report the triple $(\Delta x, \Delta y, \Delta\theta)$ is thus to use two $(\Delta x, \Delta y)$ sensors 2340 and 2341, of any kind (mechanical, optical, inertial, or other), that respectively report movement from two different locations $(X_0, Y_0)$ and $(X_1, Y_1)$ in a mouse 2310. We refer to the vector 2350 joining the centres of the sensors 2340 and 2341 as $(U, V)$ in mouse-fixed coordinates, where $U = X_1 - X_0$ and $V = Y_1 - Y_0$. (Since the mouse moves on the planar surface 2301 there is no change in the sensor distances from this plane, which thus do not enter the analysis.) If the sensors 2340 and 2341 respectively report motions of $(\Delta x_0, \Delta y_0)$ and $(\Delta x_1, \Delta y_1)$ we can combine these values to give an estimated change

$$\left(\Delta x_t, \Delta y_t\right) = \left(t\Delta x_1 + (1-t)\Delta x_0, \ t\Delta y_1 + (1-t)\Delta y_0\right) \qquad (5)$$

of the position of the point

$$\left(X_t, Y_t\right) = \left(tX_1 + (1-t)X_0, \ tY_1 + (1-t)Y_0\right) \qquad (6)$$

on the surface 2301: note that when $t = 0$ or $t = 1$ we have respectively $(X_t, Y_t) = (X_0, Y_0)$ or $(X_t, Y_t) = (X_1, Y_1)$. Drawing 24 shows exemplary positions $(X_0, Y_0)$, $(X_1, Y_1)$ and $(X_t, Y_t)$ as 2400, 2401 and 2405 respectively, on their common line 2410.

By setting in software the value of $t$, the present invention can report the movement $(\Delta x_t, \Delta y_t)$ appropriate for any point 2405 on the line 2410 on the mouse (even beyond its physical limits: for $t > 1$ or negative $t$ the point 2405 is not between the points 2400 and 2401), in contrast to the standard mouse, which reports only the $(\Delta x, \Delta y)$ for the particular physical position of the sensor.

More generally than the analysis in the preceding two paragraphs, the motion of the mouse relative to the planar surface 101 may be described as a field of changes, where $(\Delta x, \Delta y)$ for a particular point $(x, y)$ is given by a matrix formula

$$\begin{bmatrix} \Delta x \\ \Delta y \\ 1 \end{bmatrix} = \begin{bmatrix} 0 & -\tau & a \\ \tau & 0 & b \\ 0 & 0 & 1 \end{bmatrix} \begin{bmatrix} x \\ y \\ 1 \end{bmatrix} = \begin{bmatrix} a-\tau y \\ b+\tau x \\ 1 \end{bmatrix}, \qquad (7)$$

where r is a rate of turn (in radians per second) and (a,b) is the straight velocity (expressed in spatial units per second) of the crossing point of the axes 2322 chosen for describing positions in the mouse. If we sample this field at the two mouse points $(X_0,Y_0)$ and $(X_1,Y_1)$, obtaining motion vectors $(\Delta x_0, \Delta y_0)$ and $(\Delta x_1, \Delta y_1)$, illustrated as 2410 and 2411, we have

$$\begin{bmatrix} \Delta x_0 \\ \Delta y_0 \\ 1 \end{bmatrix} = \begin{bmatrix} a-\tau Y_0 \\ b+\tau X_0 \\ 1 \end{bmatrix} \quad \text{and} \quad \begin{bmatrix} \Delta x_1 \\ \Delta y_1 \\ 1 \end{bmatrix} = \begin{bmatrix} a-\tau Y_1 \\ b+\tau X_1 \\ 1 \end{bmatrix} \qquad (8)$$

from which we deduce

$$\tau = \frac{\Delta x_1 - \Delta x_0}{Y_0 - Y_1} = \frac{\Delta y_1 - \Delta y_0}{X_0 - X_1}$$
$$a = \Delta x_0 + \tau Y_0 = \Delta x_1 + \tau Y_1 \qquad (9)$$
$$b = \Delta y_0 - \tau X_0 = \Delta y_1 - \tau X_1$$

We use whichever formulæ in (9) most robustly fix $\tau$, $a$ and $b$ for the specific constants $X_0$, $Y_o$, $X_1$ and $Y_1$, of a particular hardware and coordinate choice. (For example, if both $(X_0, Y_0)$ and $(X_1, Y_1)$ are on the y-axis, then $X_0 = X_1 = 0$ and the difference $X_0 - X_1$ is not a useful divisor. If the two sensors are at separate locations, at least one of $X_0 - X_1$ and $Y_0 - Y_1$ is non-zero.)

An alternative approach to the algebra observes that any implied change in the separation

$$D = \sqrt{U^2 + V^2} \qquad (10)$$

between the sensor centres is necessarily due to error, since the two sensors are rigidly separated. We therefore resolve the difference vector

$$\sigma = \left( \sigma_x, \sigma_y \right) = \left( \Delta x_1 - \Delta x_0, \Delta y_1 - \Delta y_0 \right) \qquad (11)$$

into its components

$$\left( \lambda_x, \lambda_y \right) = \frac{\sigma \cdot (U,V)}{(U,V) \cdot (U,V)} (U,V) = \left( \frac{U\sigma_x + V\sigma_y}{U^2 + V^2} U, \frac{U\sigma_x + V\sigma_y}{U^2 + V^2} V \right) \qquad (12)$$

and

$$\left( \sigma_x - \lambda_x, \sigma_y - \lambda_y \right) \qquad (13)$$

along and orthogonal to the line through the centres, respectively. Since a non-zero $(\lambda_x, \lambda_y)$ represents error, we may

replace $(\Delta x_1, \Delta y_1)$ by $(\Delta x_0 + (\sigma_x - \lambda x), \Delta y_0 + (\sigma_y - \lambda_y))$ in the calculations above. Any of the formulæ (9) will then give the same error-reduced answer, subject to the size of numerical rounding error, minimized by choosing the larger divisor. In the particular case where $X_0 = X_1 = 0$, already considered, ignoring the difference $\Delta y_1 - \Delta y_0$ is equivalent precisely to suppressing $(\lambda_x, \lambda_y)$, so that the first approach reduces to this one.

Many other means of determining information equivalent to $(\Delta x, \Delta y, \Delta\theta)$ will be evident to one skilled in the art, within the spirit of the present invention.

The availability of the triple $(a, b, \tau)$ describing the rotation field enables the following additional software features:

1. The mouse driver may, at the request of an application, return the triple $(a, b, \tau)$ instead of the $(\Delta x, \Delta y, \Delta\theta)$ previously discussed, in which $\Delta\theta$ is added to the translational data $(\Delta x, \Delta y)$ reported for the physical location of a sensor in a standard mouse.

2. The mouse driver may, at the request of an application, return the $(\Delta x, \Delta y, \Delta\theta)$ appropriate to an arbitrary point $(X, Y)$ fixed in the mouse, as given by the formulæ

$$\Delta x = a - \tau Y \qquad \Delta y = b + \tau X, \qquad (14)$$

instead of reporting the motion of a point fixed by the physical location of a sensor or by a fixed coordinate scheme adopted in constructing the driver. The choice of the point $(X, Y)$ may be either a default point, or adjustable by the user. For certain applications the user may find, for example, that a point fixed as "6 inches directly ahead of the mouse" is more conveniently manoeuvrable than the usual point within the mouse. More precisely, a position 6 units ahead of the cursor (if it were moving in the default manner) is given by Equation (4) with $(U, V) = (0,6)$; evidently, the same transformation can be used with any $(U, V)$. In Drawing 25, a small movement from position 2500 to position 2510 yields a larger motion of the point 2505 to the new location 2515. (The flow chart for this is shown as Drawing 44: steps 4401, 4402 and 4403 are as in the previous case, but step 4404 finds the motion of the chosen point for step 4405 to report.) Precision of control may be less, depending on the user's skill, but if for example the software requires frequent jumps between widely separate regions of the display, the economy of motion becomes useful.

3. Another reportable value is the coordinate pair

$$x = -b/\tau \qquad y = a/\tau \qquad (15)$$

of the instantaneous centre of rotation 2420. This point is extremely mobile as a function of the mouse motion, and for some novice users would be hard to control. However, in certain applications a position which can be very rapidly and flexibly moved around the screen (for instance, in dragging an object in a game) will repay the effort of learning. The flow chart for this is shown as Drawing 45: steps 4501, 4502 and 4503 are as in the previous cases, but step 4504 finds the motion of the centre of curvature and the rate of turn, for step 4505 to report.

All the reporting options (1-3) above are possible only for a mouse that senses planar rotation as well as translational motion. The choice of the point $(X, Y)$, in particular, is meaningless in a mouse which reports only translational $(x, y)$ changes, since a translation moves all points in parallel and all points would report the same change. We have described these options in the context of the "two $(\Delta x, \Delta y)$ sensors" implementation approach, but they are available for any implementation of the present invention.

The above algebraic description of the integration of two $(\Delta x, \Delta y)$ sensors does not lead directly to the optimal integration of their data flow. In many cases such a sensor internally maintains a stream of discrete motion events in the x and y directions which either happen, or do not. These are integrated over time to give the numerical values of $\Delta x, \Delta y, x$ and $y$ (either integer or floating point) that are used by an application via the operating system's 'position of the cursor' support. Taking two streams of these derived values, each with its own sequence of time values, and estimating synchronised values for the application of the formulæ above is less efficient than merging the streams at an earlier stage. We describe this in some detail for the case of optical $(\Delta x, \Delta y)$ sensors: the requirements for mechanical sensor of various types are similar.

At the level nearest the camera output, a common type of $(\Delta x, \Delta y)$ sensor reports not numbers describing the amount of movement in the two directions, but discrete data on whether there has or has not been a move to left or to right, and to up or to down: the sensor considers these as steps of 0 or $\pm 1$ in the two directions. The system counts these events, and accumulates totals reported as $\Delta x$ and $\Delta y$. If the two sensors are synchronised by a shared time signal we may apply (9) to compute $\tau$. Taking the case where coordinates are chosen to place $(X_0, Y_0)$ and $(X_1, Y_1)$ at (0,0) and (O,H) respectively, we may describe angle steps in units of $1/H$ radians. Thus we set $\tau = \Delta x_1 - \Delta x_0$ and get the $\Delta\theta$ contribution as -2, -1, 0, +1 or +2. If the sensors do not share a synchronisation signal, we must apply (9) further downstream in the data analysis, after $\Delta x$ and $\Delta y$ have been accumulated over a several samples. The circuit and data flow organisation of these two alternatives is discussed below, in Subsection B.

The combination of two $(\Delta x, \Delta y)$ sensors to yield $(\Delta x, \Delta y, \Delta\theta)$ is inefficient, since only three numbers are required. In Equations (9), for example, $\tau$, $a$ and $b$ can be deduced from $\Delta x_0$, $\Delta y_0$ and $\Delta x_1$ alone, without using $\Delta y_1$, provided that $Y_0$-$Y_1$ is not zero (as is easily arranged). From r, $a$ and $b$ all other quantities reported by the present invention can be derived. In our preferred implementations, therefore, the combination of two $(\triangle x, \triangle y)$ sensors is replaced by use of a unitary device designed to report $(\Delta x, \triangle y, \Delta\theta)$ less redundantly.

We now discuss a one-sensor mechanical or opto-mechanical implementation. In a standard ball mouse the $(\Delta x, \Delta y)$ sensor has horizontal-axis rollers touching the ball, usually at the 'Equator' level if we take the external contact point as 'South Pole' position. By counting turn steps of these rollers, the device estimates the amount the ball rolls in the $x$ and $y$ directions. Each roller is driven purely by the vertical or 'Latitude' component of the motion of the small region of the ball at the contact point. Certain mice replace each roller by an optical sensor like those below (but working with images of the ball surface rather than of the desk or mousepad), which detects motion frictionlessly: these are 'optomechanical' mice.

Rotation about the ball's vertical axis (through the 'Pole' positions) has zero vertical component at any point of the ball, so that horizontal rollers cannot detect it. In an optomechanical mouse, two or more $(\Delta x, \Delta y)$ sensors of any standard optical type placed at Equator points, with $\Delta x$ in the 'East-West' direction, could use the $\Delta y$ outputs in the current manner while reporting a $\Delta\theta$ proportional to the average of the $\Delta x$. This represents another way to implement a $(\Delta x, \Delta y, \Delta\theta)$ sensing mouse, provided the ball itself turns appropriately, as discussed below.

However, consider as an example three cylindrical rollers 2610 of equal radius, placed around a ball 2400 of unit radius, as in Drawing 26. Variations of size, proportion, and specific placement and angle of the ball 2600 and rollers 2610 will be evident to one skilled in the art. The rollers 2610 press against the ball 2600 at three symmetrically placed points on the ball's 'Equator' 2620: with convenient choice of coordinate axes, these three contact points are (1,0,0), $\left(-\frac{1}{2}, \frac{\sqrt{3}}{2}, 0\right)$ and $\left(-\frac{1}{2}, -\frac{\sqrt{3}}{2}, 0\right)$. The corresponding roller axes 2411 point in the three directions

$$\begin{bmatrix} 0 \\ 2 \\ 2 \end{bmatrix}, \quad \begin{bmatrix} -\sqrt{3} \\ -1 \\ 2 \end{bmatrix} \quad \text{and} \quad \begin{bmatrix} \sqrt{3} \\ -1 \\ 2 \end{bmatrix}. \tag{16}$$

Assume they maintain contact without slipping in the respective directions

$$\begin{bmatrix} 0 \\ -2 \\ 2 \end{bmatrix}, \quad \begin{bmatrix} \sqrt{3} \\ 1 \\ 2 \end{bmatrix} \quad \text{and} \quad \begin{bmatrix} -\sqrt{3} \\ 1 \\ 2 \end{bmatrix} \tag{17}$$

around each cylinder, shown as the vectors 2615. (Slipping in the direction along the cylinder is inevitable, as in the standard ball mouse.) Then the cylinders' rates of turn are proportional to the dot products of the vectors (17) with the directions of motion of the sphere points at the corresponding points of contact. (The constant c of proportionality is easily derived from the diameter ratio between the ball and the cylinders, and the size chosen for the vectors.) Instead of using rollers, the same three dot-product numbers at the same locations may be estimated by fixed optical sensors that detect the motion of patterns on the sphere relative to the fixed sensors. This has the advantage of a measurement with lower friction.

The rotation field of the sphere, taking the origin as fixed, is given by a matrix

$$\begin{bmatrix} 0 & p & q \\ -p & 0 & r \\ -q & -r & 0 \end{bmatrix} \qquad (18)$$

The ball thus has velocities

$$\begin{bmatrix} 0 \\ -p \\ -q \end{bmatrix}, \quad \frac{1}{2}\begin{bmatrix} p\sqrt{3} \\ p \\ q-r\sqrt{3} \end{bmatrix} \quad \text{and} \quad \frac{1}{2}\begin{bmatrix} -p\sqrt{3} \\ p \\ q+r\sqrt{3} \end{bmatrix} \qquad (19)$$

at the points of contact. Equating the dot products $2p - 2q$, $2p + q - r\sqrt{3}$ and $2p + q + r\sqrt{3}$ of vectors (19) and (17) with the measured rates of turn u, v and w for the respective cylinders gives

$$\begin{aligned} p &= u + v + w \\ q &= v + w - 2u \\ r &= \sqrt{3}\,(u - v). \end{aligned} \qquad (20)$$

If the ball rolls on the planar surface 101 without slipping or twisting, these three numbers are proportional to the required $\Delta x$, $\Delta y$ and $\Delta\theta$, with constants of proportionality that depend on the ball diameter and the units chosen: millimetres versus inches, radians versus degrees, *etc.* Similar results may be obtained from any mechanical or optomechanical layout that directs two or more $(\Delta x, \Delta y)$ sensors at any set of ball points other than a pair at opposite ends of a diameter, since their output can be solved for the ball rotation matrix in exactly the algebraic manner above.

The logic of the above scheme is summarised in Drawing 46, where step 4601 acquires rotation data from the rollers, step 4602 applies (20), step 4603 scales the results and step 4604 reports them.

The same three-roller logic for detection of ball rotation may be applied to a trackball, as in Drawing 27. Instead of lying in a moving object, the ball 2700 is embedded in a sensor 2710 fixed statically in a rigid environment 2715, with an upper surface 2720 exposed. The ball 2700 is then driven by contact with the user's hand rather than with a pad or desk surface. The standard trackball reports two degrees of freedom, corresponding to the motion vector of the point of contact. A ball surface with strong enough skin friction and smooth enough internal support to turn with the hand, rather than let the hand twist against it, would allow the sensor 2710 to report $(\Delta x, \Delta y, \Delta\theta)$ in ways interoperable with the mouse version of the present invention, including both compatibility with existing uses of the $(\Delta x, \Delta y)$ trackball and the range of interactions here described that extend those uses in 2D and 3D interactions. A similar result may be achieved by adding torque sensors to the TrackPoint now often supplied in laptop computers: this device measures forces in the x and y directions of the keyboard, computes how far the device would travel if those forces were applied against friction rather than fixation, and reports these as $\Delta x$ and $\Delta y$. A measure of torque, detecting the user's attempt to turn the TrackPoint button, can be integrated in a like way and yield $\Delta\theta$. (Among common mouse substitutes, in fact, only the touchpad has no user-natural 3-degree-of-freedom generalisation. The touchpad is a pain in the pajamas anyway.) Similarly, the various optical sensor systems described as among the possible implementations of the present invention can be 'turned upside down' in a manner clear to one skilled in the art, to describe translation and rotation of a portion of a hand or finger as though the skin were a desk or mousepad surface against which the sensor moves.

The absence of twist is a strong condition, applying equally to the mouse and trackball, whether purely mechanical or optomechanical. It requires good contact between the ball and the surface 2101 or the hand, since the friction forces between them have a smaller lever arm by which to apply torque around the z-axis than they have around the other two. Since this torque has to overcome internal resistance from the ball's surroundings, optimal manufacture requires somewhat more delicate engineering than is needed by the standard ball mouse or trackball. Under some conditions it requires a larger ball for a wider contact, and the nature of the surfaces become more critical. For this reason our preferred initial implementation is an optical sensor, where the optical elements can be identical to those in a standard optical mouse: only the algorithms applied to their output need be different. This has manufacturing and cost benefits over the use of formulæ such as (9) above with a pair of existing-technology $(\Delta x, \Delta y)$ sensors at separated mouse points, whether such sensors be mechanical, optical, inertial or a hybrid of these.

We now discuss a one-sensor optical implementation. Drawing 28 shows an optical sensor 2800 on the underside 2810 of the mouse 2820. The sensor 2800 contains a lens or arrangement of lenses 2801, which creates on the image plane 2805 a pattern of light (with varying brightness and colour), constituting an image of the desk, mousepad or other surface 2877 across which the mouse moves. It is convenient to arrange the lens 2801 and image plane 2805 so that the rays 2822 that come into focus on the image plane 2805 are those which are parallel (or 'focussed at infinity') on the incoming side of the lens 2801. This makes the sensor output less dependent on the exact separation of the mouse from the surface 2877. A consequence is that the available view or optical window in the surface 2877 that is imaged in the plane 2805 has approximately the same diameter 2876 as the diameter of the lens 2801, commonly of the order of 1*mm*. The physical size of the image on the plane 2805 (typically a few hundred microns) has no bearing on the analysis below: Provided that blur and image distortion are sufficiently small, the analysis is affected only by the number and arrangement of the sensors in the array 2807 of brightness sensors, such as a CCD camera chip. It is important, however, that the focus should be sharp. It is convenient for lengths in the image to be uniformly proportional to lengths in the surface 2877, for the images of straight lines to be close to straight, and that angles should be close to equal, but this is not critical, as is discussed below in connection with Drawing 31. The sensors in the array 2807 may optionally be differentially sensitive to colour, reporting for example a quantity of incident light in the green region of the spectrum, and showing a much lower response to blue or red light: or, the sensor at a single place in the array may separately detect and report intensities in different regions of the spectrum. For clarity here we describe the device with reference to sensors that report a single combined intensity, referred to as a grey level, but the necessary changes to exploit colour will be evident to one skilled in the art.

We assume that the planar surface 101 has a varying brightness level, exemplified by the surface shades 2877 and by image 2900 in Drawing 29. This variation may come from varying reflectivity, with some points intrinsically lighter or darker, or from geometrical texture: if a rugged surface 2877 (such as a piece of normal writing paper, if viewed closely) is brightly lit from one side, a usable variation in brightness will result.

The two squares 2910 and 2911 illustrate optical windows in the surface 2877 on which a pattern 2900 exists, that are visible to the camera in two different mouse positions. The device is required to estimate the geometric transformation between these positions. From a viewpoint fixed in the mouse, the corresponding optical window is as illustrated respectively in the images 2920 and 2921, showing detail still at the same level as in the image 2900, not at the level captured in data. Numerically, each corresponding image collected is an array $p[i][j]$ of brightness levels reported by (for example) the $i^{th}$ sensor on the $j^{th}$ row, in an $N \times N$ rectangular array for some convenient N. We illustrate this by the grey levels in the $16 \times 16$ arrays of squares 2930 and 2931, corresponding to the views 2920 and 2921 respectively. Other layouts, such as those shown in Drawing 31, will be evident to one skilled in the art. For notational simplicity in this disclosure we describe the square case. With a physical separation of s between neighbouring sensors, we have a grid step h between the points whose brightness is referred to. In a typical optical sensor, h is of the order of 0.05mm. (This is a distance in the imaged surface 2877, not the much smaller physical separation of CCD elements.)

Our approach is to compare all grey levels at putatively corresponding points, in contrast to United States Patent 5,786,804 to Gordon, titled 'Method and system for tracking attitude', which identifies features present in both of two successive images, and computes what ($\Delta x$, $\Delta y$) would produce the change seen in their apparent locations by comparing the images "to detect differences in location of said common features within said first and second images". A similar first step of feature-detection is disclosed in US Patent 6,618,038 to Bohn, discussed above, and appears to be general to the art. Feature identification avoids the multiple sampling of possible-rigid-motion space, but we question whether features can be identified and localised with the sub-pixel precision needed to identify $\Delta\theta$. We also observe that the said patent refers strictly to comparison of a single pair of "said first and second images", in contrast to our preferred method, described below, of fitting an estimate of motion in $x$, $y$ and $\theta$ to a longer sequence of images; for small images, this makes the difference between an adequate $\Delta\theta$ estimation being attainable or being impossible.

It is a matter of importance that each reported value $p[i][j]$ is a physical weighted average of brightness values in the pattern of light created by the lens, combining intensities in the particular small region of diameter approximately h occupied by the sensor $[i][j]$, rather than a sample at a dimensionless point q. It thus becomes a smooth (technically, differentiable many times) function of the physical position of the sensor, not a quantity that can change discontinuously as the sensor moves (within a distance small compared to h) across a brightness boundary such as a shadow edge or a meeting line of two materials. Differentiability is logically the existence of a linear approximation: for small motions, this approximation is required to be quantitatively excellent. In the present case the motions due strictly to rotation are indeed small. Drawing 29 shows a difference of 10˚ for clarity, but at the often-used rate of 2000 samples per second such a turn between successive frames would correspond to more than 3000 revolutions per minute, far beyond what the mouse-holding hand can do. If $\Delta x$ and $\Delta y$ refer to the motion of the central point of the window, the added effect of a typical $\Delta\theta$ on a $16 \times 16$ sampling is to move every point by substantially less than one pixel diameter. We are thus in a regime where the effect of $\Delta\theta$ (with this choice of origin) is not far from linear: a quadratic fit can be expected to be excellent, over the range expected. The smallness of the image differences due separately to $\Delta\theta$ presents a problem for certain approaches. The feature recognition by which the optical mouse sensor estimates $\Delta x$ and $\Delta y$, would be difficult to extend to estimation of these small differences. For the method here disclosed, the limited range of $\Delta\theta$ represents a

helpful restriction.

The effect of $\Delta x$ and $\Delta y$, on the other hand, is not automatically small. If the optical window aperture has a width of 1$mm$, in 10 milliseconds a sideways mouse movement of 10$cm/sec$ gives completely separated images. Without overlap, or position-identifying features on the surface, nothing about motion can be deduced. It is for this reason that typical optical mouse sampling rates are at one or two frames per millisecond, although software does not need to update the cursor position more often than the screen is refreshed, at a mere 50 or 60 times per second.

The simplest version of our method is to consider possible matrices for the motion step, estimate the effect of each possibility on the entire changed image (not of features extracted within it), and by comparing the results estimate a best choice of 'true' matrix, which essentially describes a current translational velocity $d/dt$ $(X, Y)$ and rate of turn $d\theta/dt$. The $(X, Y)$ velocity may be thought of as giving a current best 'uniform straight line motion' for the mouse centre, while the rate of turn is a fit by steady rotation. One particular implementation of this method is described in more detail below.

Our preferred method is to consider possible matrices for one or more motion steps, estimate the effect of each possibility on the entire changed image (not of features extracted within it), and by comparing the results estimate a best choice of 'true' matrix, which essentially describes a current translational velocity $d/dt(X,Y)$ and rate of turn $d\theta/dt$, and of the matrix's changes with time (essentially the translational and rotational acceleration and higher derivatives). The instantaneous $(X,Y)$ velocity may be thought of as giving a current best 'uniform straight line motion' for the mouse centre, while the rate of turn is a fit by steady rotation. One particular implementation of this method is described in more detail below. Best results follow from fitting to a short sequence of more than two successive images, but we still compare images pairwise: in our current preferred implementation, comparing each image to a central one in the sequence. At greater computational expense one can also (for instance) compare it to its immediate successor or predecessor in the sequence, with which it has a greater overlap.

To estimate the movement giving rise to the difference between the samples 2930 and 2931, assume that they are sampling the same planar field of grey levels, but that the grid positions of the light sensor elements have moved. Taking the first sample 2930 as a reference state, we label points on the static plane by coordinates $(x, y)$ centred in the image window and with axes parallel to its edges. (The calculations for the move between sample 2931 and the one following it will label the static plane differently, without harm to this analysis.) We consider the (unknown) field of grey values, both within and outside the initial window, as described by some function $\gamma(X, Y)$ of position. For $\Delta\theta$ small, the value of $\sin(\Delta\theta)$ is very close to $\Delta\theta$ and that of $\cos(\Delta\theta)$ close to $1-(\Delta\theta)^2/2$, within the range of error expected for $\Delta\theta$ itself, so we suppress trigonometry and treat them as equal. We describe a mouse position relative to the mousepad by a matrix transformation that takes mouse-fixed coordinates (u,v) to pad-fixed coordinates $(X, Y)$,

$$\begin{bmatrix} a & -b & p \\ b & a & q \\ 0 & 0 & 1 \end{bmatrix}\begin{bmatrix} u \\ v \\ 1 \end{bmatrix} = \begin{bmatrix} X(u, v) \\ Y(u, v) \\ 1 \end{bmatrix}. \qquad (21)$$

The value $p_0[i][j]$ initially recorded by the CCD element at $[i][j]$ is a weighted average of $\gamma(x, y)$, with weights (determined by the physics of light collection and response) that are centred on the point

$$\begin{bmatrix} a & -b & p \\ b & a & q \\ 0 & 0 & 1 \end{bmatrix}\begin{bmatrix} i \\ j \\ 1 \end{bmatrix} = \begin{bmatrix} X(i, j) \\ Y(i, j) \\ 1 \end{bmatrix}, \qquad (22)$$

The change between positions $S_{t_i}$ and $S_{t_j}$ given by such matrices at times $t_i$ and $t_j$ corresponds (independently of the choice of $(X,Y)$ framework) to a single matrix

$$S_{ij} = S_{t_i} S_{t_j}^{-1}. \qquad (23)$$

The brightness at any $(X, Y)$ in image i should match the brightness of $S_{ij}(X, Y)$ in image $j$. We thus seek the $S_{ij}$ that most closely achieves this matching, and report it as the change in position.

Assume that the CCD positions form a square $M{\times}M$ grid, and we have a set

$$S = \left\{ (m,n) \mid 0 \leq m, n \leq M \right\} \qquad (24)$$

of CCD position centres, choosing units appropriately. For any timestamp t for which we capture an image, write $B_t(m, n)$ for the brightness value recorded by CCD $(m,n)$. In most implementations this is an integer ranging from 0 to a number $B_{max}$, which may be $B_{max}=255$: we refer to this type as a char. We define int to refer to the next smallest unsigned integer type efficiently handled by the available processor, with a maximum value 1 (this may be a 'short integer', 0 to 65535, but in some architectures a larger type may be handled faster). As functions with floating point arguments, each of char ( ) and int( ) returns the integer of its type that is nearest to its argument (not rounding down).

Around the points (X(m,n),Y(m,n)) we have grey values combining physically to give actual recorded $p_i$ $[m][n]$ recorded by that sensor at frame i. We also estimate from values of $p_j$ $[m][n]$ and (23) what the values should be if the assumed ($\triangle$x, $\Delta y$, $\Delta\theta$) are correct. We cannot simply equate point values. Drawing 30 shows target $(X(m,n),Y(m,n))$ as points 3002, not coincident with the points 3011 representing the centres of CCD elements in a reference position. However, the smoothness of $p_j$ $[m][n]$ as a function of the $(X, Y)$ location of the sensor at $[i][j]$ makes it reasonable to interpolate what the values would be at the points $(X(m,n),Y(m,n))$, given the values at the points 3011.

Many interpolation schemes are known to the art, and indeed provided with popular image manipulation packages. For simplicity of presentation and as our current preferred implementation we describe explicitly the method of *bilinear interpolation,* but other such schemes (cubic, wavelet, B-spline, *etc.)* may be substituted by those skilled in the art. Using the floor ( ) function which returns the highest integer less than or equal to its argument, we define an interpolator

$$\overline{u} = \texttt{floor}(u)$$
$$\overline{v} = \texttt{floor}(v)$$
$$\overline{u}^+ = \overline{u} + 1$$
$$\overline{v}^+ = \overline{v} + 1 \qquad (25)$$
$$\mu = u - \overline{u}$$
$$\upsilon = v - \overline{v}$$

$$\overline{B}_j(u,v) = \mu\left(\upsilon B_j\left(\overline{u}^+, \overline{v}^+\right) + (1-\upsilon) B_j\left(\overline{u}^+, \overline{v}\right)\right) + (1-\mu)\left(\upsilon B_j\left(\overline{u}, \overline{v}^+\right) + (1-\upsilon) B_j\left(\overline{u}, \overline{v}\right)\right)$$

Evaluating (25) on a random (u,v) requires the six definitional operations and the multiplications and additions in the final equation. To find it on a denser $kM \times kM$ grid $G$ of fractional values between the integer centres requires only a pair of additions when we advance the grid index. We choose $k$ on the order of 8 and perform a (preferably parallelized) evaluation of integer array values $b_j(\mu,\eta) = $ int $(\overline{B}_j (u, v))$ for a set of values with $u=\mu/k$ and $v=\eta/k$, with $\mu$ and $\eta$ from 0 to $kM$, to rapidly fill the finer grid $G$ for later reference. Optionally we choose $M$ and $k$ such that $kM$ is less than or equal to $B_{max}$, so that we may take $\mu$ and $\eta$ as chars. Thereafter we define $\beta_j(u,v)=d_j$ (char($k\,u$),char($k\,u$)), which is a fast lookup.

This sets up an interpolation scheme to answer the question, "Given (m, n) transformed to $(u,v)=S(m, n)$ as the time-$t_0$ position that $S$ would give, what value $B_s(m, n)$ should we expect to see at $(u,v)$ if $S$ is the right transformation from the current position?" We round $(u,v)$ to the nearest G-point coordinates $(i_G, j_G)$ and look up the stored value $b_0(i_G, j_G)$. For an appropriate $k$ this value matches the true physically-averaged CCD value around $(u,v)$ as closely as an exact value of (25) does. By this interpolation means or another, we assume that for any $S$ a set of $B_s$ $(m,n)$ is rapidly available: for definiteness, we describe the algorithm in terms of the interpolation grid $G$, but could use other interpolators within the spirit of the present invention. In the attached drawing 30 we take $M$ as 8 and $k$ as 4, for reasons of printer resolution, but prefer values of at least 16 and 8 respectively in an implementation.

For a particular reference time $\tau$, in time units of the image sequence interval, we use a sequence of images $B_{\tau-a}(m,n), B_{\tau-a+1}(m,n),..., B_{\tau-1}(m,n)$ immediately before $\tau$, and a sequence of images $B_{\tau+1}(m,n),...,B_{\tau+\omega}(m,n)$, immediately after $\tau$. Call $B_\tau(m,n)$ the *current reference image.* We do this for a succession of values for $\tau$: since time stamps are on the order of 1 millisecond apart, a focus on a moment at least $\omega$ steps ago is not problematic for small $\omega$. The simplest case has $\alpha = $ l and $\omega = 0$ (compare the $\tau$ image and the previous one), but we prefer larger, equal values for $\alpha$ and $\omega$, giving a total $K = 1+2\alpha$ of images used as input data for an estimation step. Drawing 30 assumes $\alpha = \omega = 3$, but the optimum choice balances computational cost, the image frequency used, and the typical speed of the user's mouse motions. We use comparisons with $B_\tau(m,n)$, so we require substantial overlap in what is seen by the other images and by $B_\tau(m,n)$. This makes images from long before or after $\tau$ non-contributing. (A similar algorithm, with comparison between a chain of successive images, will be evident to one skilled in the art. Our current preference is to create a single fast interpolator for values between the $B_\tau(m,n)$, and then to compare with this one image.)

In general we do not have a value of $B_S(m,n)$ for every $(m,n)$ in the CCD grid; if a Euclidean S is not the identity or a symmetry rotation of the grid, at least one $S(m,n)$ fails to have the four neighbours required by (25). Figure 30 shows a sequence of positions 3001 as mappings from a reference grid 3000 to postulated image positions 3002 relative to the time-$\tau$ position 3010, with its CCD centre points 3011 and interpolation-grid points 3012. Points falling outside the square on which (25) is defined are shown as grey stars: those falling inside are re-centred on the interpolation grid, showing which stored $\beta_0(i_G, j_G)$ value would be used.

A natural statistical matching is to maximize correlation of $B_S(m,n)$ with the observed and interpolate $\beta_0$ values there, but different S have different sets where the $B_S(m,n)$ have values, requiring an S-dependent division to normalise it. This makes it harder to apply fast linear methods. Alternatively, we maintain a current parametrised estimate S(t) of the whole family of transformations and seek small changes (with small impact on the existence of $B_S(m,n)$ values) in this family. We take

$$S(t) = \begin{bmatrix} a(t) & -b(t) & p(t) \\ b(t) & a(t) & q(t) \\ 0 & 0 & 1 \end{bmatrix} \qquad (26)$$

with

$$S(\tau) = \begin{bmatrix} a(\tau) & -b(\tau) & p(\tau) \\ b(\tau) & a(\tau) & q(\tau) \\ 0 & 0 & 1 \end{bmatrix} = \begin{bmatrix} 1 & 0 & 0 \\ 0 & 1 & 0 \\ 0 & 0 & 1 \end{bmatrix}, \qquad (27)$$

the identity position. When the mouse is first activated it is normally not moving, so in the first tracking step we assume (as our to-be-improved estimate of the motion) that

$$S(t) = \begin{bmatrix} 1 & 0 & 0 \\ 0 & 1 & 0 \\ 0 & 0 & 1 \end{bmatrix} \qquad (28)$$

independently of $t$. Motion, acceleration and so on start slowly enough that this is a good 'latest estimate' when motion has recently begun. In general, we use the motion found at the last step as the initial guess for the current step.

The family S(t) may be parametrised in many ways, such as the polynomial form

$$\begin{aligned}
a(t) &= 1 + a_2(t-\tau)^2 + \ldots + a_d(t-\tau)^d \\
b(t) &= b_1(t-\tau) + b_2(t-\tau)^2 + \ldots + b_d(t-\tau)^d \\
p(t) &= p_0 + p_1(t-\tau) + p_2(t-\tau)^2 + \ldots + p_d(t-\tau)^d \\
q(t) &= q_0 + q_1(t-\tau) + q_2(t-\tau)^2 + \ldots + q_d(t-\tau)^d
\end{aligned} \qquad (29)$$

for some convenient degree d, preferably less than or equal to $\alpha+\omega+3$. The pair $(p_1, q_1)$ is an estimate of linear velocity, and $b_1$ estimates the current rate of turn; higher coefficients estimate acceleration, 'jerk', and so on.

It can be convenient or efficient to replace the coefficients of $(t-\tau)^j$ for various $j$ by scalar contributions of a system of orthogonal functions such as the Chebyshev polynomials, in a manner that will be clear to one skilled in the art, but we simplify description here by using the monomials $(t-\tau)^j$. Non-polynomial functions may also be used. The estimation of $S(t)$ as a combination of a small set of smooth functions is important in that it seeks a smooth fit (of a certain class). This has the general result of reducing the effect of error and noise in the data. We refer collectively to $(a_2, a_3, \ldots, a_d, b_1, \ldots, b_d, p_1, \ldots, p_d, q_1, \ldots, q_d)$ as the collective set of coefficients $(c_1, \ldots, c_D)$, with $D = 4d-1$.

Note that if $p_0 + p_1(t-\tau) + p_2(t-\tau)^2 + p_3(t-\tau)^3$ has coefficients $p_j$ to describe the motion for $\tau = 2$, the same function described in powers of the difference from 3 has the form

$$\left(a_0 + a_1 + a_2 + a_3\right) + \left(a_1 + 2a_2 + 3a_3\right)\left(t - 3\right) + \left(a_2 + 3a_3\right)\left(t - 3\right)^2 + a_3\left(t - 3\right)^3, \qquad (30)$$

so that the $(c_1,..., c_D)$ set used as initial guess for the next step must be linear combinations of (not identical to) the $(c_1,..., c_D)$ found as best estimate of the motion at the previous time step. A similar adjustment is required in most parametrisations of $S(t)$.

For each $S_i$ given by the family (27) for a time $t_i$ for which we are using an image, identify the subset $\left(\left(m_0^i, n_0^i\right), \left(m_1^i, n_1^i\right), ..., \left(m_{l_i-1}^i, n_{l_i-1}^i\right)\right)$ which do have $S_i(m,n)$ at which interpolation from $B_0$ is possible. (We may record these grid points as a list, as $\alpha+\omega$ sized arrays of $M \times M$ In/Out values, or otherwise.) Denote by $l$ the sum total of the numbers $l_i$ of such grid points for the different times used.

We then compare matching for a set of transformation families near $S_i$, given by various

$$\Delta \circ S_t = \begin{bmatrix} a_\Delta(t) & -b_\Delta(t) & p_\Delta(t) \\ b_\Delta(t) & a_\Delta(t) & q_\Delta(t) \\ 0 & 0 & 1 \end{bmatrix} \begin{bmatrix} a(t) & -b(t) & p(t) \\ b(t) & a(t) & q(t) \\ 0 & 0 & 1 \end{bmatrix} \qquad (31)$$

for small transformation families $\Delta$. For an example of a minimal set of $\Delta$, for the case $d=1$ (which estimate only translational and rotational velocity) we choose small values for $\delta b$, $\delta p$ and $\delta q$, and define

$$\mathcal{D} = \left\{ \begin{bmatrix} 1 - (\delta bt)^2/2 & -\delta bt & 0 \\ \delta bt & 1 - (\delta bt)^2/2 & 0 \\ 0 & 0 & 1 \end{bmatrix}, \begin{bmatrix} 1 & 0 & \delta pt \\ 0 & 1 & 0 \\ 0 & 0 & 1 \end{bmatrix}, \begin{bmatrix} 1 & 0 & 0 \\ 0 & 1 & \delta qt \\ 0 & 0 & 1 \end{bmatrix}, \begin{bmatrix} 1 & 0 & 0 \\ 0 & 1 & 0 \\ 0 & 0 & 1 \end{bmatrix} \right\} \qquad (32)$$

A larger set allows better estimates, at a cost in computation time. (The first element is a similarity transformation rather than strictly Euclidean, but since its determinant differs from 1 by only $(bt)^4/4$ it sufficiently approximates a rotation by $bt$.) Appropriate sets for larger $d$ will be evident to one skilled in the art.

As a list with $\sigma+1$ l elements, write $\mathcal{D}$ as $\Delta 0, ..., \Delta_\sigma$, always taking the final element $\Delta_\sigma$ as the time-independent identity. For each $\Delta_k$ in $\mathcal{D}$ (for each $k = 0,..., \sigma - 1$), we find the $l$-entry vector

$$V_k = \begin{bmatrix} \overline{B}_{\Delta_k \circ S_{\tau-\alpha}}\left(m_0^{-\alpha}, n_0^{-\alpha}\right) - B_{-\alpha}\left(m_0^{-\alpha}, n_0^{-\alpha}\right) \\ \overline{B}_{\Delta_k \circ S_{\tau-\alpha}}\left(m_1^{-\alpha}, n_1^{-\alpha}\right) - B_{-\alpha}\left(m_1^{-\alpha}, n_1^{-\alpha}\right) \\ \vdots \\ \vdots \\ \overline{B}_{\Delta_k \circ S_{\tau+\omega}}\left(m_{l_\omega-1}^{\omega}, n_{l_\omega-1}^{\omega}\right) - B_{-\alpha}\left(m_{l_\omega-1}^{\omega}, n_{l_\omega-1}^{\omega}\right) \end{bmatrix} = \begin{bmatrix} V_{0k} \\ V_{1k} \\ \vdots \\ \vdots \\ V_{(l-1)k} \end{bmatrix} \quad \text{for short} \qquad (33)$$

of mismatches between observed values at times $t_j$ and values interpolated via $\Delta_{ko}S_j$ from those observed at time $\tau$. (Since our current motion estimate $S(t)$ does have mismatches, we need their values.) Generically, for small $\Delta_k$ the set of $(m,n)$ for which $\overline{B}_{\Delta_{ko}S}(m,n)$ exists will be identical to the $l$-member set $L$ for which $\overline{B}_S(m,n)$ exists. We disregard the infrequent differences by (i) not seeking $(m,n)$ for which $\overline{B}_{\Delta_{ko}S}(m,n)$ exists although $\overline{B}_S(m, n)$ does not, and (ii) setting $V_{\lambda k} = 0$ for any $\lambda$ for which $\overline{B}_{\Delta_{ko}S}(m_\lambda, n_\lambda)$ does not exist.

These vectors (33) give samples of a transformation $\mathcal{A}$ between a space indexed by $b$, $p$ and q (or larger-dimensional for higher $d$), in which the points (32) are listed as

$$\left\{ \begin{bmatrix} \delta b \\ 0 \\ 0 \end{bmatrix}, \begin{bmatrix} 0 \\ \delta p \\ 0 \end{bmatrix}, \begin{bmatrix} 0 \\ 0 \\ \delta q \end{bmatrix} \right\} \tag{34}$$

or more generally

$$\left\{ \begin{bmatrix} b_k \\ p_k \\ q_k \end{bmatrix} \middle| k = 0,\ldots,\sigma-1 \right\} \tag{35}$$

and an l-dimensional space of possible $V_\Delta$ values.

For small $\Delta$ we seek the best approximation of $\mathcal{A}$ by an affine transformation, represented by the k×l matrix

$$A = \begin{bmatrix} a_{0b} & a_{0p} & a_{0q} & a_{00} \\ \vdots & \vdots & \vdots & \vdots \\ a_{(l-1)b} & a_{(l-1)p} & a_{(l-1)q} & a_{(l-1)0} \\ 0 & 0 & 0 & \end{bmatrix} \tag{36}$$

whose last column lists the errors seen when we assume no change in $S(t)$, extended by a 1. We thus assume

$$\begin{aligned} \mathcal{V} &= \begin{bmatrix} V_{00} & \cdots & V_{0(\sigma-1)} & V_{0\sigma} \\ \vdots & \ddots & \vdots & \vdots \\ V_{(l-1)0} & \cdots & V_{(l-1)(\sigma-1)} & V_{(l-1)\sigma} \\ 0 & \cdots & 0 & 1 \end{bmatrix} \\ &= A \begin{bmatrix} b_0 & \cdots & b_{(\sigma-1)} & 0 \\ p_0 & \cdots & p_{(\sigma-1)} & 0 \\ q_0 & \cdots & q_{(\sigma-1)} & 0 \\ 0 & \cdots & 0 & 1 \end{bmatrix} \\ &= \begin{bmatrix} a_{0b} & a_{0p} & a_{0q} & a_{00} \\ \vdots & \vdots & \vdots & \vdots \\ a_{(l-1)b} & a_{(l-1)p} & a_{(l-1)q} & a_{(l-1)0} \\ 0 & 0 & 0 & 1 \end{bmatrix} \begin{bmatrix} b_0 & \cdots & b_{(\sigma-1)} & 0 \\ p_0 & \cdots & p_{(\sigma-1)} & 0 \\ q_0 & \cdots & q_{(\sigma-1)} & 0 \\ 0 & \cdots & 0 & 1 \end{bmatrix} \end{aligned} \tag{37}$$

In the case of (32) we can use an explicit inverse to get

$$
\begin{bmatrix} V_{00} & \cdots & V_{0(\sigma-1)} & V_{0\sigma} \\ \vdots & \ddots & \vdots & \vdots \\ V_{(l-1)0} & \cdots & V_{(l-1)(\sigma-1)} & V_{(l-1)\sigma} \\ 0 & \cdots & 0 & 1 \end{bmatrix} = A \begin{bmatrix} \hat{b} & 0 & 0 & 0 \\ 0 & \hat{p} & 0 & 0 \\ 0 & 0 & \hat{q} & 0 \\ 0 & 0 & 0 & 1 \end{bmatrix}
$$

$$
A = \begin{bmatrix} V_{00} & \cdots & V_{0(\sigma-1)} & V_{0\sigma} \\ \vdots & \ddots & \vdots & \vdots \\ V_{(l-1)0} & \cdots & V_{(l-1)(\sigma-1)} & V_{(l-1)\sigma} \\ 0 & \cdots & 0 & 1 \end{bmatrix} \begin{bmatrix} 1/\hat{b} & 0 & 0 & 0 \\ 0 & 1/\hat{p} & 0 & 0 \\ 0 & 0 & 1/\hat{q} & 0 \\ 0 & 0 & 0 & 1 \end{bmatrix}.
$$

(38)

In general, to estimate A we right-multiply by a $(\sigma+1)\times 4$ pseudo-inverse of the sample matrix

$$
\begin{bmatrix} b_0 & \cdots & b_{(\sigma-1)} & 0 \\ p_0 & \cdots & p_{(\sigma-1)} & 0 \\ q_0 & \cdots & q_{(\sigma-1)} & 0 \\ 1 & \cdots & 1 & 1 \end{bmatrix}
$$

(39)

which can be pre-computed once for all according to our fixed choice of samples $\Delta_0,...,\Delta_\sigma$.
We now 'solve' the overdetermined problem

$$
A \begin{bmatrix} b \\ p \\ q \\ 1 \end{bmatrix} = \begin{bmatrix} 0 \\ 0 \\ \vdots \\ \vdots \\ 0 \\ 0 \end{bmatrix} \quad (l+1 \text{ zeroes})
$$

(40)

by finding the $\overline{\Delta} = (\overline{b}, \overline{p}, \overline{q})$ that minimises

$$
\left\| A(b,p,q,1) \right\|^2 = \sum_{k=0}^{l} \left( A(b,p,q,1)_k \right)^2,
$$

(41)

the sum of squares of the entries in the vector $A(b,p,q,1)$. This requires that we compute the symmetric $4\times4$ matrix

$$
H = A^T A = \begin{bmatrix} h_{00} & h_{01} & h_{02} & h_{03} \\ h_{01} & h_{11} & h_{12} & h_{13} \\ h_{02} & h_{12} & h_{22} & h_{23} \\ h_{03} & h_{13} & h_{23} & h_{33} \end{bmatrix}
$$

(42)

and solve

$$\begin{bmatrix} h_{00} & h_{01} & h_{02} \\ h_{01} & h_{11} & h_{12} \\ h_{02} & h_{12} & h_{22} \end{bmatrix} \begin{bmatrix} b \\ \dot{p} \\ q \end{bmatrix} = - \begin{bmatrix} h_{03} \\ h_{13} \\ h_{23} \end{bmatrix}. \tag{43}$$

Even the inefficient explicit-inverse solution of this involves only about thirty multiplies. The main numerical effort is in populating the interpolated-values matrix V, right-multiplying it by the pseudo-inverse, and forming $H=A^TA$. The first step is non-linear, but all three are highly parallelisable, so that high speed may be achieved by one skilled in the art.

We may iterate this, using $\overline{\Delta}$ o $S$ $(t)$ as an improved initial $S(t)$ to find a still better one, or we can move on to the next time step and later smooth the sequence of estimates. In different implementations, depending on the image size and frequency and on available computing power and degree of parallelism, different strategies may be optimal.

With the particular choices described above as preferred, the algorithm may thus be diagrammed as in Drawing 47. We 4701 acquire images sequentially, and store 4702 the most recent ones in a buffer, with a particular image (preferably central in the buffer sequence) as the current reference image. We adapt 4703 the parametrisation of the most recent motion estimate (using 'stationary' as this estimate if no other exists) to the time of the current choice of reference image. We initialize 4704 the interpolator for the current reference image, by evaluating many fine-grid points or by such other preparation as another choice of interpolator may require. Within a loop 4705 over non-reference images in the buffer we execute a loop 4706 over modifier specifications Δ to interpolate image values and 4707 compare them with recorded values. (The loops could optionally be nested in the opposite way, but if the computing chip's register cannot hold all the images simultaneously this way involves less memory transfer.) Using the differences thus found we 4708 estimate an affine correspondence A of Δ values to difference values, and 4709 find a Δ that minimizes these differences (according to A). We use 4710 this Δ to adjust the current estimate of motion. An implementation may optionally 4711 repeat the interpolation 4712 for the new estimate, repeat 4713 the comparison, and test 4714 whether the size of the difference vector exceeds a threshold, returning the procedure to step 4705 if so. Alternatively, we may assume that a single estimation is enough, recording 4715 the result as the new current motion estimate, and rely on subsequent smoothing 4716 to reduce remaining errors to a satisfactory level. From the current motion estimate a system request for $(\Delta x, \Delta y, \Delta\theta)$, either 'most recent' or 'at time $t$', is straightforwardly delivered. Many choice of motion parametrisation scheme (including our polynomial system above) do not inherently produce a rigid motion for each time interval, so that this delivery step may include an estimation of the $(\Delta x, \Delta y, \Delta\theta)$ parameters of the nearest rigid-motion matrix to that found via the parametrisation.

In general we may expect a certain amount of fluctuation in estimated motion parameters from step to step, reflecting both numerical error and high frequency tremor in the user's hand, though the multi-image fitting described above reduces both these influences. Even the physically real tremor is not something we wish to reproduce, and a typical application can use updates of cursor position at most 60 times per second (the usual screen refresh rate), which is fifteen to fifty times less frequent than the optical mouse must sample the pattern 2800. We thus optionally apply a smoothing operator such as a Kálmán filter to the estimated motion parameters, to further reduce the effects of noise, tremor and other sources of fluctuation, and provide a more smoothly controllable input pathway for the user.

Further, the smoothed model of the motion may be used predictively: the motion of the mouse in the next millisecond will be close to (though not exactly equal to) one millisecond times the current estimate for linear and angular velocity, optionally with a correction for estimated acceleration, and so on, according to how many motion parameters we use.

The above discussion has for simplicity assumed a rectangular array of optical sensor elements such as $CCD_S$, but the estimation logic does not require this. Many other configurations are possible: Drawing 31 illustrates a hexagonal arrangement 3110 of elements 3111, fitted to the round image most easily achieved with a lens, for which the necessary adaptation of the above algebra will be evident to one skilled in the art. There is no requirement that the array should be closely contiguous: the arrangement 3120 is more sensitive to Δθ than is a simple square array, though a higher proportion of grid points become uninterpolable. For an accurately reproduced geometrical pattern, it is desirable that the layout be created within a single chip-assembly process, rather than parts corresponding to different regions being separately placed in the mouse. It is important that the acquisition of data from all elements be well synchronised, both for management of the electronics and for accuracy of the computations, which assume that each sampled is a 'snapshot' corresponding to one rigid-rotational position of the mouse. The arrangement 3130 combines connectivity variation with hexagonal packing. If in a particular business juncture a large camera array 3140 is economic to include while the computational power needed to exploit so many values within the available time is not, in some implementations of the present invention we can install it and use the data from a disconnected subset such as 3141 of the available elements.

The pattern of points whose brightness is sampled need not be an equally spaced array, even locally. There is no evident benefit to creation of an uneven pattern of sensors in a CCD chip, but with a square array of sensors, distortion in the image formed by the lens 2801 can cause the sampled points in the viewed planar pattern 2877 to be located in a distorted grid on the desktop or mousepad, such as the patterns shown in3160 or 3161. In this situation the computation of the point correspondence associated with a particular motion corresponding to a particular ($\Delta x$, $\Delta y$, $\Delta\theta$) becomes a little more complicated, as does finding the interpolation coefficients needed for each point, but once this is done the coefficients may be stored and the repeated computation is precisely as in the case above. There is no continuing computational penalty for the use of a non-linear lens. Indeed, the pattern 3161, by referring to a wider set of points in the planar pattern 2877, yields more sensitivity to rotation than does a strictly linear parallel view.

We now discuss a quite different approach to detecting change of position, by inertial sensing. Drawing 32 shows the standard concept of scalar accelerometer 3200. When the object 3210 of mass $m$, constrained to move in the $x$ direction, is 3225 at a distance $X$ from its rest position within the device 3200 and moving at velocity $\dot{X}$ relative to the device 3200, the acceleration $\ddot{X}$ relative to the device 3200 is due to the force in the springs 3220, friction with the surround, and the x components of the pseudoforces due to gravity and acceleration. In a simple linear model,

$$m\ddot{X} + k\dot{X} + \gamma X = \alpha = A + mg\sin(\varphi),\qquad(44)$$

where $\varphi$ is the deviation of the x-axis from the horizontal, A is the acceleration of the device in the $x$ direction, $\gamma$ is the spring constant and $k$ is the coefficient of friction. (Non-linear spring and friction responses may be straightforwardly incorporated by one skilled in the art, provided that they are known and computably specified.) Measuring X(t) over time gives $\dot{X}(t)$ and $\ddot{X}(t)$ by numerical differentiation, though one may also find (for instance) $\dot{X}(t)$ by Doppler methods. This determines the 'apparent acceleration' $\alpha$. If $\varphi$ is known, one thus has the acceleration $\alpha$, which may be numerically integrated (given an initial value for the velocity $\dot{x}$) to give the change in position-x velocity of the device along the x-axis. Evidently, this functionality can be achieved in multiple ways. Our concern in the present invention is to arrange of a plurality of elements such as 3200 to achieve what is needed for a ($\Delta x$, $\Delta y$, $\Delta\theta$)-sensing mouse. We show three such arrangements 3230 for three elements: others may be substituted, provided only that the three axes of the respective elements do not all pass through a common point, and are not all parallel. A larger number of elements may be used, replacing the unique algebraic solutions below by least-squares approximations. For clarity here, we assume exactly three elements. Their rest points for the inertial mass 3210 are at mouse-fixed points ($\Delta X_0$, $\Delta Y_0$), ($\Delta X_1$, $\Delta Y_1$) and ($\Delta X_2$, $\Delta Y_2$) at a common height above the face at which the mouse meets the planar surface 101. These points are permitted, but not required, to be collinear. It is important that they be mounted in a strongly rigid relationship to one another and to the mouse. In our preferred implementation they are small elements of an integrated assembly, such as a MEMS (Micro Electronic-Mechanical System).

For the elements centred at ($\Delta X_0$, $\Delta Y_0$), ($\Delta X_1$, $\Delta Y_1$) and ($\Delta X_2$, $\Delta Y_2$) there are respective unit vectors ($U_0$, $V_0$), ($U_1$, $V_1$) and ($U_2$, $V_2$) in the positive axis directions, for which the sensors report $\alpha_0$, $\alpha_1$ or $\alpha_2$ respectively as positive.

We do not assume that the planar surface 101 is horizontal. (Often the situation or ergonomics dictate a sloping desk or mouse support.) We do assume that the surface 101 is planar, and that during a single mouse movement the surface 101 is static. When the three elements all report a values that are constant within a noise threshold of 0, we assume that the mouse is at rest relative to the surface 101, so that they are reporting the effect of gravity: uniform motion at non-zero speed is logically possible, but extremely unlikely for a handheld mouse. A mouse movement is defined to begin when this at-rest condition ceases to be satisfied, and ends when (for a plurality of successive reports) it holds true again. Each motion has a preceding static period, at rest.

During a static period we calibrate the current effect of gravity. Taking the current ($x$, $y$) mouse coordinates as axes on the plane also, we have

$$\alpha_0 - g_x U_0 - g_y V_0 \;=\; \alpha_1 - g_x U_1 - g_y V_1 \;=\; \alpha_2 - g_x U_2 - g_y V_2 \;=\; 0 \quad(45)$$

where ($g_x$, $g_y$) is the component of gravity tangent to the plane 101. Minimising the sum of squares of these three putatively vanishing quantities gives

$$\begin{bmatrix} g_x \\ g_y \end{bmatrix} = \begin{bmatrix} U_0^2 + U_1^2 + U_2^2 & U_0V_0 + U_1V_1 + U_2V_2 \\ U_0V_0 + U_1V_1 + U_2V_2 & V_0^2 + V_1^2 + V_2^2 \end{bmatrix}^{-1} \begin{bmatrix} U_0\alpha_0 + U_1\alpha_1 + U_2\alpha_2 \\ V_0\alpha_0 + V_1\alpha_1 + V_2\alpha_2 \end{bmatrix} \quad(46)$$

which we assume fixed throughout the ensuing mouse movement. The unique angle whose sine is $g_x / \sqrt{g_x^2 + g_y^2}$ and whose cosine is $g_y / \sqrt{g_x^2 + g_y^2}$ (in numerical contexts given by the function arctan2 ( , ) of these numbers) is the starting angle of $(g_x, g_y)$ relative to the mouse. When the mouse has turned through θ from its starting point, the gravitational force has turned (in mouse-fixed coordinates) the other way, so that we have

$$
\begin{bmatrix} g_x(\theta) \\ g_y(\theta) \end{bmatrix} = \begin{bmatrix} \cos(\theta) & \sin(\theta) \\ -\sin(\theta) & \cos(\theta) \end{bmatrix} \begin{bmatrix} g_x \\ g_y \end{bmatrix}
\tag{47}
$$

and a gravitational pseudoforce

$$
g_i = U_i\, g_x(\theta) + V_i\, g_y(\theta)
\tag{48}
$$

for each element, $i$ = 0, 1 and 2. From (44) we thus have

$$
m\ddot{X}_i(t) + k\dot{X}_i(t) + \gamma X_i(t) = \alpha_i(t) = A_i(t) + m g_i(t),
\tag{49}
$$

where $X_i$ is the internal position variable of sensor i = 0, 1 or 2. Measurements of $X_i$ permit the estimation of its time derivatives (improved by smoothing filters, *etc.,* as is evident to one skilled in the art), and hence of $\alpha_i(t)$. Assuming $g_i$ (t) known, which requires θ(t), we thus know $A_i(t)$. It is noteworthy that unless gravity is assumed neglectable, due for instance to an accurately level desk surface, one cannot make an accurate inertial mouse with two sensors only. Tracking (Δx,Δy,Δz) would allow one to deduce the plane direction and thus report an appropriate (Δx,Δy), but we do not discuss this further, since in the present invention we are concerned only with devices that report Δθ as well as directional motion.

Defining to as the start of the mouse movement, and using the assumption that the velocity of each sensor is 0 at that time, we have

$$
v_i(t_{\text{now}}) = \int_{t_0}^{t_{\text{now}}} A_i\, dt.
\tag{50}
$$

Numerically, this integral need not be evaluated in full each time, merely incremented with each new timestep's data. However, since filtering is better with values from both before and after the adjusted value, there is merit in maintaining an integral from $t_0$ to $t_{\text{now}} - \tau$, for a fixed interval τ (once the movement time exceeds τ), and incrementing that with before-and-after smoothed values. The interval on the range from $t_{\text{now}} - r$ to $t_{\text{now}}$ is incremented each timestep, using current smoothed values that use fewer or no time-ahead data as the approach $t_{\text{now}}$. This gives three values of the current velocity field, so that we have from (7)

$$
\begin{bmatrix} \Delta x_i \\ \Delta y_i \\ 1 \end{bmatrix} \cdot \begin{bmatrix} U_i \\ V_i \\ 1 \end{bmatrix} = \left( \begin{bmatrix} 0 & -\tau & a \\ \tau & 0 & b \\ 0 & 0 & 1 \end{bmatrix} \begin{bmatrix} X_i \\ Y_i \\ 1 \end{bmatrix} \right) \cdot \begin{bmatrix} U_i \\ V_i \\ 1 \end{bmatrix} = \begin{bmatrix} a - \tau Y_i \\ b + \tau X_i \\ 1 \end{bmatrix} \cdot \begin{bmatrix} U_i \\ V_i \\ 1 \end{bmatrix}
\tag{51}
$$

which reduces (since $\alpha_i$ is an estimate of the left hand side) to

$$
v_i = U_i(a - \tau Y) + V_i(b + \tau X_i)
\tag{52}
$$

Assembling these three equations, we have

$$\begin{bmatrix} a \\ b \\ \tau \end{bmatrix} = \begin{bmatrix} U_0 & V_0 & X_0V_0 - Y_0U_0 \\ U_1 & V_1 & X_1V_1 - Y_1U_1 \\ U_2 & V_2 & X_2V_2 - Y_2U_2 \end{bmatrix}^{-1} \begin{bmatrix} v_0 \\ v_1 \\ v_2 \end{bmatrix} \qquad (53)$$

which gives us the current rotation field, and hence $(\Delta x, \Delta y, \Delta\theta)$. Tracking $\theta(t)$ through the history gives us $g_i(t)$ and thus $A_i(t)$, so that the integral (50) for the next step can be computed, after appropriate smoothing.

Drawing 48 shows the flow of this scheme. While 4800 the mouse is active, a loop tests 4801 whether it is moving, or whether reports from the sensors are within an error bound of constant. If it is static, we 4802 use (46) to calibrate the surface slope and the current orientation of the mouse relative to the 'up-hill' direction: this orientation is 4830 updated during motion by accumulating changes in $\theta$, found 4820 by scaling coefficients determined 4810 by using (53). A driver 4830 makes available to applications the latest values of $(\Delta_x, \Delta_y, \Delta\theta)$, or their changes since the previous application request, or a predictive version of either for a specified time value.

A sufficiently long mouse movement could allow a cumulative error build-up in the estimate of $\theta$, but error and slope would both need to be substantial before the user experiences unexpected behaviour. The onset of error is smooth, not sudden, and the error would need to accumulate over a longer stretch of uninterrupted movement than is common. With the algorithm described above, every short pause recalibrates the direction of gravity.

As will be clear to one skilled in the art, many other inertial sensing configurations could yield $(\triangle x, \triangle y, \Delta\theta)$, some more economically than others. One trisensor configuration (Drawing 33) replaces one of the linear sensors 3200 by a circular sensor 3322, in which the inertial mass m is replaced by a ring 3330 with planar moment of inertia $\mu$, under forces from friction and a rotational spring 3340. The algorithm for deriving (Ax, $\triangle y$, $\Delta\theta$) from the output of such a configuration is close to the algebra detailed above. Just as with the configurations of three line accelerometers, our preferred implementation is that the three elements should be parts of an integrated MEMS.

We note that given any system which reports the location of a device with sufficient accuracy can be adapted to provide a realisation of the present invention. The current Global Positioning System (GPS) is not an example, since the accuracy is not in millimetres, but such networks are becoming more precise and more widespread. Precise positioning reporting systems covering a range of several metres are widespread, including system that report orientation as well as as location. (A sufficiently precise location-only system can be used also for orientation, by comparing the locations of several points fixed to the device.) Since the present invention addresses the reporting of changes in position relative to a planar surface, both the surface and the device must be tracked, and their relative positions computed therefrom. This is not a preferred class of implementations in the context of current availability and equipment: we therefore omit details that will be evident to those skilled in the art

We turn now from the mathematics of various embodiments of the input aspect of the invention to their implementation in circuits and manipulation of data, in a group of paragraphs collectively referred to as Sub-section B.

**B. Wiring and data flow aspects of the invention** Physical implementation of the present invention admits of multiple options. In our preferred implementations the upper casings, buttons, *etc.,* are identical to one or another currently available mouse. This maintains the value of earlier research as to hand-fitted comfort in holding a mouse, the firmness of a button, the force threshold at which a button becomes 'clicked', and similar affordances. The under-casing of the present invention may

a) be identical to a currently available mouse, with a single opening by which a ball, optical device or other sensor detects the mousepad or desktop over which the mouse moves; or

b) have two or more such openings; or

c) have no such openings.

Our current preferred implementation uses choice (a), but we first discuss (b). Drawing 34 shows an exemplary version, which may be seen as a partial implementation of the present invention, since it is not a device to plug in anywhere one can use a standard mouse: as discussed in Section C below, it requires operating system features not found in Windows versions earlier than 2000 and XP, or in older versions of the Mac or Linux systems. This, however, is comparable to the choice of a particular connection system: a mouse with a USB cable cannot be plugged into an older machine that is equipped only with a specialised mouse port. The important aspect of the interoperability of the present invention is that wherever it can be plugged in (as a USB standard mouse can be connected to a modem machine, though not to an older one), it can act as an equivalent to a standard mouse, without the modification of existing software or operating systems. We refer to programs created without reference to the present invention as *legacy code;* standard-mouse-like interaction with legacy code is a core feature of the present invention. More important, the requirement in this approach of more components than in our preferred implementation implies a higher cost for manufacture in quantity, but since these components are available off the shelf they enabled rapid development of a $(\Delta x, \Delta y, \Delta\theta)$

mouse adequate for testing the user-interaction aspects of the invention.

Details of the component layout shown in Drawings 34 and 35 may be modified in ways evident to one skilled in the art, as may the use of specific connection methods such as the USB: the description below of the communication logic is exemplary rather than exhaustive. Throughout this section and Section C below, details specific to the Microsoft Windows operating system (or to particular versions of it) are included for clarity, but the analogous arrangements for other operating systems within the spirit of the present invention will be evident to one skilled in the art: these descriptions serve as 'worked examples' for the implementation of the concepts of the present invention, and do not exhaust the scope of its possible implementations in different environments.

The casing 3400 contains movable buttons 3410 under which are switches 3411 whose status is sensed via connections 3412 by a subsystem 3446 as used in a standard mouse. This subsystem 3446 capable of reporting button status and motion values $(\Delta x_1, \Delta y_1)$ derived from the state of the physical sensor (mechanical, optical or other) 3445, via a USB connection 3447. In a standard mouse the connection would connect directly to the user's computer, but here connects to a USB hub 3450. A second such subsystem 3441 reports to the USB hub 3450 the motion values $(\Delta x_2, \Delta y_2)$ derived from the state of the physical sensor 3440, via a USB connection 3442. The connections 3413 by which such a standard mouse subsystem detects button state are inactive for this case. The USB hub 3450 connects via a cable 3460 to a plug 3470 suitable for insertion in a USB port on the user's computer. By the protocols managed by the hub 3450, the operating system of the computer can then detect two mice connected to it, separately reporting the motions $(\Delta y_1, \Delta y_1)$ and $(\Delta x_2, \Delta y_2)$, combined with button status (which for the buttons associated with $(\Delta x_2, \Delta y_2)$ always appears as 'unpressed'). Drawing 35 shows an internal layout comparable to Drawing 34, but the USB hub 3450 is replaced by a chip 3550 capable of combining the values $(\Delta x_1, \Delta y_1)$ and $(\Delta x_2, \Delta y_2)$ reported by the sensor components 3540 and 3545 as described in Equation (9) above, or an equivalent, and reporting the derived values of $(\Delta x, \Delta y, \Delta \theta)$. The chip 3550 receives signals from these components and the button sensors 3511 via the connections 3542, 3547 and 3512, and via the USB cable 3560 reports $(\Delta x, \Delta y, \Delta \theta)$ and button status to a driver 3731 on the user's computer, discussed below.

Though Drawings 34 and 35 show two buttons, it will be clear to any person skilled in the art that a middle button, a scroll wheel, or both, or other devices, could be added within the spirit of the present invention, or the buttons reduced to one. When we refer to "button status" in what follows, this expression covers the physical state of any assembly of buttons, wheels, or other devices.

Where the lower surface of the mouse has no openings, any currently constructible sensor must detect inertial and perhaps gravitational forces, or electromagnetic signals at wavelengths that penetrate the mouse casing. For any such sensor type equipped with the accompanying circuitry to function as a standard mouse, two such units may be combined in a single mouse according to either of the schemata represented in Drawings 34 to 37. Their application in such an implementation will be evident to one skilled in the art. Alternatively, a sensor and circuitry may be custom designed to deliver $(\Delta x, \Delta y, \Delta \theta)$ in a single unit. Drawings 26 to 33 illustrate mechanical and optical ways of achieving this, with a ball, a single camera chip, or inertial sensors; alternative schemes may be used to the same effect. Other modalities are also possible, such as the use of radio frequency or ultrasound signals, touch-pad technology or light-pen location methods, but in implementing the present invention we prefer methods that do not call upon devices outside the mouse, its cable and the main computer. The preferred mouse (whether reporting $(\triangle x, \triangle y, \triangle \theta)$ or merely the standard $(\Delta x, \Delta y)$) should need only a flat surface with perhaps a requirement for textural variation, such as a physical desktop, without complicating the user's space with even a mouse pad.

For any implementation that combines in a single mouse two units of a type made available by prior art, following either of the schemata represented in Drawings 34 to 37, or such other schema for this purpose as will be readily devised by one skilled in the art, there is no need here to discuss the algorithms and processes internal to the units taken for combination. To implement the present invention, one needs only specify how such units report the $(\Delta x, \Delta y)$ pairs we treat as $(\Delta x_1, \Delta y_1)$ and $(\Delta x_2, \Delta y_2)$, without asking how they are obtained. For a single-unit implementation that obtains $(\Delta x, \Delta y, \Delta \theta)$ more directly, as we prefer, it is appropriate to include such details in the matter we here disclose, in Drawing 38. The remaining paragraphs of this sub-section all refer to single-sensor implementations.

The device 3800 is connected 3825 to the communication subsystem 3830, normally in kernel space 3806, of the host computer 3805 through a PS/2 port, USB port, DB9 Serial port, or other port which becomes available on computers of a type where the use of the present invention is desired. This achieves communication between the device 3800 and a driver program 3831 and filter 3841, preferably installed in user space 3807. The appropriate choice of particular voltages, integrated circuits, and printed circuit boards is manufacturer and customer dependent, and will be clear in specific circumstances to one skilled in the art. Depending on the port type, one may make various choices of interface chip 3820, through which the communication protocol handler and controller (more briefly, the Controller) 3810 communicates with the computer. The Controller 3810 is also responsible for initialising the Position Estimation Unit 3801 and resetting its various internal registers. The filter 3841 is controlled by a server 3860 in the manner discussed above for the server 3760 in a two-sensor solution with the sensor outputs combined by the on-mouse unit 3720: similarly for the interaction of the server 3860 with the summation process 3850 and with an application 3870, via the listener 3862 and TCP/IP sockets 3861 and 3871.

The Position Estimation Unit 3801 estimates the 3DoF motion parameters ($\Delta x$, $\Delta y$, $\Delta \theta$), by an algorithmic method such as discussed in Section A above, depending on the physical sensor elements. (We discuss below the data flow between the unit 3801 and the physical sensing elements, for various cases.) The unit 3801 stores the result in internal 8-bit *motion registers* 3802, 3803 and 3803 (boxes represent bits). The 'Confidence' 4-bit register 3806 stores the confidence value, or the estimated accuracy, of the data in the motion registers 3802, 3803 and 3803. The 'Rate' 4-bit register 3807 stores the sample rate at which the image processing is done. Optionally, there may be other registers to handle other activities of the sensor.

The Controller 3810 is the master and generates the clock signal 3820 for reading from the internal registers 3802, 3803 and 3803, 3806 and 3807, and in some implementations other registers, of the sensor. The Controller 3810 always initiates communication 3821, for both Read and Write operations. Once a motion register 3802, 3803 or 3803 is read by the Controller 3810 it is reset to contain 8 zeroes. The Position Estimation Unit 3801 continuously estimates the motion of the surface under the mouse and increments or decrements the values in the register $\Delta x$, $\Delta y$ and $\Delta \theta$ depending on the estimate made of change, using a convenient scale. With 8 bits per register the permissible range is -128 to +127. In many current mice, the motion component $\Delta x$ is estimated by a criterion that reports the existence of motion 'left' or 'right', or 'none detectable' (without further quantifying it) and correspondingly increments or decrements the $\Delta x$ register: similarly for $\Delta y$. The Controller 3810 must ensure that each register is read frequently enough to preclude overflow. The net accumulation in the registers in a position estimation unit of $n$ increments between readings by a controller correlates well with a total increment proportional to $n$, the multiple sampling producing an average that acts to filter out both physical noise and discretisation noise, since typically the position estimation unit will perform measurements at a higher rate than controller will call for them. For example, as explained above, in one second an optical mouse must make use of 1000 or more images of the desktop, while an application whose display is refreshed only 60 times per second (as needed for human perception of smoothness) has no need for mouse data 1000 times per second. This difference can be exploited by programming the Position Estimation Unit 3801 unit to perform on its successive estimates a more sophisticated smoothing operation than mere accumulation, such as the use of a Kálmán filter, making the output stored in the registers both more even and more accurate.

The Controller 3810 reads the internal registers of the unit 3801 at a rate on the order of 60 per second or higher, and packs it into a series of 5-byte packets, which may additionally contain button and scroll data along with the 3DoF motion estimate data. Such a data packet may then be reported to the computer on request by the computer (a polling system), or when significant motion has taken place, or at a fixed rate (such as 60 per second). The device driver program 3850 residing in the computer 3890 then interprets the packet arriving at the port. It dissects out individual components of motion and other parameters. Depending on the type of user setting and application controlled parameters, as discussed in Section D below, these motion parameters are interpreted as required.

We describe (Drawing 39) the information flow of the position estimation process in the single optical sensor implementation for a highly parallel implementation, both for its conceptual clarity and for the speed advantages which make it our currently preferred implementation (though variations in the relative costs of memory, information transfer and computational components can make different designs optimal different times). A camera assembly 3950 of a lens or lenses, as in Drawing 27, captures images of the mousepad or desktop at a rate on the order of 1000 per second or higher, under the control of an internal timer 3951. The camera assembly 3950 communicates an image (as an array of intensity levels) to each of $N = \sigma(\alpha+\omega)$ of comparator units 3900 (where $\sigma$ is the number of distinct $\Delta$ perturbations used, and $\alpha+\omega$ images are to be compared with the current reference image), together with a time stamp placed in the time register 3971. The $N$ comparator units and the time register 3971, together with infrastructural systems for communication and power, collectively form the comparator stage 3970.

Each comparator unit 3900 also receives a copy of the current motion estimate S(t), and approximately 1/$N$ of the data of the current reference image (with overlap at boundaries, performs on this the initialization 4704 for this part of the image, and shares the results with the other comparator units 3900. At the end of this process each comparator unit 3900 has a copy of an image for comparison in the memory block 3911, and a full copy of the fine-grid interpolator in the memory block 3912. Each particular unit 3900 is permanently assigned a particular perturbation element $\Delta_k$ from the set (32) of such elements, or its generalization to a larger set. (These data may either be stored in permanent memory, or computed at start-up whenever the mouse acquires power.) As each image is received by the block 3911, the transformation processor 3915 derives the transformed image according to the interpolator, and places it in the transformed-image block 3920. This process cannot be fully parallel with the reception process in the block 391 I, but can begin as soon as two rows of the image have been received. As transformed-image values accumulate in the block 3920, the correlator 3930 performs the computation (33) necessary to find the values $V_k$. The correlator 3930 reports the values $V_k$ to the next stage of the analysis, as part of the combined report by the comparator 3970 which also includes the time stamp stored in the time register 3971.

The N values reported by the N comparator units 3900 in the comparator stage 3970 go to the affine fit processor 3980, which runs the least-squares fit 4708, reporting A and the size of the least-square error (as a measure of quality of fit) to the perturbation estimation unit or process 3981 executing step 4709. The process 3982 performs step 4710 to find the updated S(t), and reports the resulting ($\triangle$x, $\triangle$y, $\triangle\theta$) with a time stamp to the filter unit or process 3982, together with a confidence metric reflecting least-square error at the previous stage. The filter unit 3982 stores received values in a cyclic register containing some tens or hundreds of recently reported ($\Delta x$, $\Delta y$, $\Delta\theta$) values, with their time stamps as included in the report from the comparator 3970, and applies smoothing and predictive filters to create a 'best estimate of present value' for the current time, or for a time $\Delta t$ slightly ahead (which may be reset by an application) to allow for communication delays in subsequent processing. The filter unit 3982 may use the reported quality metrics to place greater weight on the data points claiming higher certainty, and combine these with estimates of the noise removed in filtering to assign an overall confidence level to the estimate. The filter unit 3982 updates this estimate at a rate chosen between a maximum given by the imaging rate of the camera and a minimum of 60 per second (the typical application frame rate), converts it to a triple of 8-bit numbers from the internal representation used in the estimation processes described above (normally of higher precision), and places these numbers in the registers 3802, 3803 and 3803 of the Position Estimation Unit 3801 shown in Drawing 38, together with a 4-bit version of the confidence level in the register 3806 and the current sampling rate in the register 3807.

Many modification of this computation and estimation flow, within the spirit of the present invention, will be evident to one skilled in the art.

Analogous circuit logic applies to the ball system (Drawing 27) and to inertial systems (Drawings 32 and 33): data are collected at a high rate, subjected to the appropriate analysis as mathematically described above, and preferably filtered, with the results placed appropriately in the registers 3802, 3803, 3803, 3806 and 3807.

We now turn to interactions of the present invention with the operating system of the user's computer, grouping our discussion as sub-section C. This is an exemplary not an exclusive prescription for achieving plug-in interoperability with a standard mouse, which is an essential feature of the present invention.

**C. Operating system software elements of the invention** The device driver 3650 referred to above is a software module that runs on the user's computer. For the physical layout described in Drawing 34, the logical structure is as shown in Drawing 36. The dashed line 3600 surrounds elements within the mouse. Within the mouse are two units 3611 and 3612, corresponding respectively to the sensor subsystems 3441 and 3446 in Drawing 34, equivalent in their digital interactions to independent mice (though physically they are locked into a rigid relationship). The units 3611 and 3612 communicate through the hub 3620, the cable 3625 and the internal USB hub 3630 of the computer with the information environment 3605 of the computer, within which are the *kernel space* 3606, containing operating system subsystems and processes, and the *user space* 3607 containing application software and other elements installed by the user.

Within the kernel space 3606 the data streams from the units 3611 and 3612 are first handled by device drivers 3631 and 3632 respectively: these are standard processes made available by the operating system. The function of such a process in the classical context is to pass the ($\Delta x$, $\Delta y$) and button status data from its device to the summation process 3650, which maintains a global *(x, y)* cursor position and makes it available to the system as a whole. If it receives ($\Delta x$, $\Delta y$) data from more than one device driver it adds them all to the current ($x$, $y$). We represent its unmodified capacity to accept additional inputs from additional ($\Delta x$, $\Delta y$) tracking devices, not used for our purposes here, by an exemplary input connection 3651. (The result is confusing if for example one user moves an installed mouse while another moves a TrackPoint on the keyboard, seen by the system as another mouse. However, it is a convenient way to install the two devices simultaneously for a single user, who will probably switch between them.) It is important to maintain the role of this summation process 3650, since the value of *(x, y)* is not merely an interaction datum supplied to particular applications, such as the application 3670 shown here. The system keeps track of which window, controlled by which process, currently contains ($x$, $y$), and responds to a click by giving that process responsibility for dealing with the input, and usually highlights and fully displays the corresponding window. This management process would be disrupted if an installed process diverted all ($\Delta x$, $\Delta y$) inputs from the summation process 3650.

In the case of this implementation of the present invention the output of the device drivers 3631 and 3632 is modified by a server process 3660, installed in user space 3607, which invokes kernel-space filters 3641 and 3642. By signals exchanged with these filters, it can obtain the ($\Delta x_0$, $\Delta y_0$) and ($\Delta x_1$, $\Delta y_1$) data originating in the units 3611 and 3612, and cause the filters to modify what is transmitted to the summation process 3650. In the default state, the server process 3660 causes the filter 3641 to transmit data onward to the summation unit, while blocking data from the filter 3642 (or vice versa), and does nothing else. With the invention in this *legacy emulation mode,* the summation process receives ($\Delta x$, $\Delta y$) data from the sensor unit 3611 or 3612 (whichever is not blocked), and the system behaves as though a standard mouse is attached. An *(x, y)* changing according to these *($\Delta x$, $\Delta y$)* is available to the system at large, and an application 3670 can collect it 3665 and act on it by the standard protocols for mouse data and interaction, including summation with any other installed mice.

In particular, if the application 3670 is legacy code this happens automatically, with no action required of the user.

In contrast, if the application 3670 is designed to exploit the present invention, it opens a client TCP/IP socket 3671 and uses it to send an activation message to the listener 3662 set up and maintained by the server 3660. The default state of legacy emulation mode then changes to *active mode,* in which the server 3660 opens a child TCP/IP socket 3661, and also causes the filters 3641 and 3642 to transmit to it the outputs $(\Delta x_0, \Delta y_0)$ and $(\Delta x_1, \Delta y_1)$ of both the units 3611 and 3612, with the button status reported by one of them, and to block transmission of both data streams to the summation unit 3650. (Note that it is the task of the application to switch the mode, according to the interaction design it uses, and not the task of the user.) It also initialises *(x, y)* to the current system value *(X,Y)* for the cursor position, and θ to the value 0. This corresponds to initialising the cursor position matrix

$$P = \begin{bmatrix} \cos\theta & -\sin\theta & x \\ \sin\theta & \cos\theta & y \\ 0 & 0 & 1 \end{bmatrix} \qquad (54)$$

to a starting position

$$\begin{bmatrix} 1 & 0 & X \\ 0 & 1 & Y \\ 0 & 0 & 1 \end{bmatrix}. \qquad (55)$$

From the two streams of $(\Delta x_0, \Delta y_0)$ and $(\Delta x_1, \Delta y_1)$ values the server 3660 performs the algebraic operations described in equations (9), updates the current P to

$$\overline{P} = \begin{bmatrix} 0 & -\tau & a \\ \tau & 0 & b \\ 0 & 0 & 1 \end{bmatrix} P, \qquad (56)$$

preferably normalises $\overline{P}$ to the nearest valid Euclidean motion (3), and filters the recent sequence of P values for smoothness. These adjustments reduce the effect of noise and of synchronisation issues related to the two separate data streams. The default value of *(x, y)* for the server 3660 is then (a, b), but as discussed in item II of Section A (Drawing 25) a general point *(U,V)* moving with the transformations specified by the current position may be used instead. The default *(U,V)* is (0,0), giving motion that matches that of the mouse's central reference point, but an application may modify this, optionally using user input to define the new value. This instruction passes through the TCP/IP sockets 3661 and 3671, which in the opposite direction begin or continue to transmit the successive updates of θ to the application 3670. The value of *(x,y)* is not transmitted via these sockets but (to maintain overall system consistency) successive changes in it are sent together with button status data as input to the summation process 3650, from which the application 3670 acquires *(x,y)* in the same manner as if the server 3660 were inactive. Like the offset *(U,V),* the scale and 'gear ratio' discussed below in Section D may be applied in the server 3660. Alternatively, they may be the responsibility of the application program 3670, but in our preferred implementation this is enabled only in the mode next discussed.

In a third mode, *independent mode,* the server 3660 sends *(x, y, θ)* and button status data to the application 3670 directly, while neither transmitting *(x,* y) change data to the summation unit 3650 nor permitting either of the filters 3631 or 3632 to do so. These values are then used by a specialised cursor or other construct controlled entirely by the application 3670, and not recognised for general system purposes as a cursor: the application 3670 may then arbitrarily manipulate its behaviour, for instance not permitting it to move outside a particular window, or not to be visible. Mouse clicks are not then communicated to any other application or operating system process, unless the application 3670 takes steps to do so. Preferably, this mode is only permitted to operate when another mouse or similar device is active and providing input 3651 to the summation process 3650, so that the user retains the ability to use the cursor controlled by that other device to manage other processes, to shut down the system, and so forth.

If more than one application 3670 sends an activation request to the listener 3662, the server creates a TCP/IP unique socket for each, maintains a separate record of the preferences of each such process as to scale and gear ratios and the offset (U,V), and computes and communicates *(x,y,θ)* values for each such application 3670 separately. If more than one such application is using the server 3660 in active mode, the server 3660 queries the system regularly to know which such application is currently permitted to receive input. It sends data only to that application, and uses that application's preferences in computing the *(x,y)* values.

The server 3660 is installed as software when the mouse is first attached to the computer. (Typically this involves the user inserting a CD in the computer's drive and allowing an installation program to run. Other methods may become convenient, such as including ROM memory on the mouse itself and installing software via the USB cable 3625 as though this memory were a drive.)

For the physical implementation represented in Drawing 35, the logical organisation (Drawing 37) is similar, but not identical: an application 3770 interacts identically with either, without change in its code. The sensor modules 3711 and 3712 correspond to components 3511 and 3512 in Drawing 35, but the component 3720 performs the calculations described in Equations (9) and reports the derived information ($\Delta x$, $\Delta y$, $\Delta \theta$) and button status data via the USB hub 3730 of the computer to the driver 3731, without reporting two standard-mouse-like data streams. (This is not a standard mouse driver as supplied by a legacy operating system, and is thus more easily installed in user space 3707 than in kernel space 3706.) A single filter 3741 is controlled by the server 3760, which in legacy emulation mode instructs it to permit the data stream to pass to the summation process 3750. In active mode the server takes responsibility for passing ($\Delta x$, $\Delta y$) and button status values to the summation process 3750, and $\theta$ values via the sockets 3761 and 3771, and in independent mode it leaves ($\Delta x$, $\Delta y$) and button status values to reach the summation process 3750 via a pathway 3751 from a separate device, whose presence it verifies. Preferences of one or more constants such as scale and gear ratios and the offset ($U, V$) may be downloaded to the component 3720, but this component must then transmit values labelled as to the process intended to use them. In our preferred implementation, therefore, modifying these values according to such preferences is the responsibility of the server 3760, which maintains a record of the preferences associated with each socket 3761.

Another important function, in our preferred implementation supported by the driver 3650, 3750 or 3850, is *joystick emulation mode.* We use 'joystick' here to mean in particular the device existing in various forms where the user can twist a lever relative to its base, lean it to the left or right, or bring it forward and back, in any simultaneous combination, sending signals to the computer with three independent streams of numbers, reporting either the angles involved, or the torque applied by the user; but by extension we mean any device by which the user communicates a stream of three-degree-of-freedom information to a computer, together with the state of one, two or three buttons. (A substantially larger number of buttons qualifies an input device as a 'game pad', which we do not include. We also exclude here devices providing computer-dependent force feedback that gives tactile information about objects in, or controlled through, the computer.) With the corresponding number of one, two or three buttons, the present invention can simulate a joystick by reporting $\Delta_x$ as the side-to-side element of input, $\Delta y$ as the forward and back element, and $\Delta \theta$ as the twist element, each via scale factors (preferably user-adjustable) for convenient magnitudes: we say that $\Delta x$, $\Delta y$ and $\Delta \theta$ are *mapped into* the corresponding report elements. This is achieved by the server 3660, 3760 or 3860 registering itself appropriately with the operating system of the user's computer, and responding via the TCP/IP socket 3661, 3761 or 3861 to signals from an application program 3660, 3760 or 3860 written without reference to the present invention. Similarly, if the mouse has buttons but no scroll wheel (our preferred implementation), it can be run in scroll wheel emulation mode by mapping $\Delta x$, $\Delta y$ and $\Delta \theta$ to $\Delta x$, $\Delta y$ and scroll wheel output. Software that expects a scroll wheel mouse can then use this mouse also.

Unlike the contrast with a standard mouse, where the present invention makes many functions newly possible and others more dextrous, the effect of joystick emulation may not be performance superior to that of a joystick. For most of its specialised purposes, particularly in games, the joystick may continue to give finer control. However, joystick emulation makes available to the mouse-equipped user a wide range of functionality and software that once required special equipment, which might be socially or physically inconvenient on a desk or on a journey. This is thus a useful feature of the present invention.

We next discuss the aspects of the present invention specific to ways in which an application may make use of it, grouping this information as sub-section D.

**D. Application software components of the invention** Normally supplied with the present invention will be a set of library routines (either compiled, ready to be linked in, or as source code), by which an application 3670 created in one of several languages may communicate with the driver referred to in the discussion various implementations as 3850, 3550 or 3650). In our preferred implementation the geometric interactions described below are also available as open-source library routines to be incorporated in an application, rather than as functions performed within the driver. This simplifies communication (which can be standardised to communicating ($\Delta x$, $\Delta y$, $\Delta \theta$), button status and optionally a length scale, 'gear ratio' and/or time offset $\Delta t$), and makes it easier for the architect of a new application to modify these interactions for new purposes. We discuss first the most 'literal' uses of the present invention, which map planar translation and rotation of the mouse to translation and rotation of screen objects, then 2D curve definition, control of 2D animation key frames, and navigation in a 2D image. We then disclose 3D uses of the present invention in control of 3D translation and rotation, and key frames in 3D animation. We illustrate the use of the present invention in problems not normally presented as 3-degree-of-freedom interactions, by colour selection, manipulation of networks, widgets like palettes and tooltips, and change in aspects other than orientation as a 2D object moves.

**3DOF Euclidean motion in 2D** When an application requires the user to modify only the *(x, y)* position of a cursor, as in selecting a button or link by moving the cursor there and clicking, the application may either collect and ignore Δθ, or simply not collect it. In this situation, the only one arising for legacy code and relevant sometimes in new code, the user notices no difference from a standard mouse. However, an application (by which term we include an application extended by a plug-in supplied as an element of the present invention) may couple Δθ to the behavior of various objects on screen. Revisiting the situation of Drawing 2, for example, Drawing 10 shows the approach of a cursor 1010 in (*x,y*) mode, un-rotating, as though moved by a standard mouse. When the cursor 1010 touches 1015 the boat 1020, the boat 1020 is highlighted. Holding down a button invokes the drag mode appropriate to this object, which includes rotation. A single drag movement now suffices to move the boat through the sequence of positions 1030, without awkward motion of the wrist and elbow.

Evidently, it would not be easy to drag the boat several times around a circular canal, even with the present invention. There are limits to the torsional flexibility of the human wrist and elbow. For such a track the user would need to move the boat perhaps 40° around the circle, release it, and rotate the hand in the opposite direction before beginning a new drag movement. (Using a non-ratchet screwdriver, one frees the grip, turns back the hand, grips again, and continues the turn. This is analogous, with grip replaced by holding down a button.) It may be convenient to adjust the 'gear ratio' so that a particular sense rotation of the mouse yields either a smaller rotation of the displayed object, for fine control, or a larger rotation, to achieve a desired change in angle more quickly. This ratio can be under the control of the application, or of the user (by setting a preference within the application or within the mouse driver software, analogous to the sensitivity to (Δ*x*, Δ*y*) that the user can currently adjust at the operating system level), or both.

Certain applications may arrange that such rotational dragging occurs only when holding down the right button of the mouse, with left-button dragging remaining purely translational: or these options may be set by key presses, or other means familiar to those skilled in the art. Since left-button dragging is the typical present method for translational dragging, the user's present learned skills would continue to have precisely the accustomed effect, with the added potential of rotational dragging as a non-disruptive enhancement of the response of the system. An application may also enable a dragging mode in which translation does not occur, allowing only rotation about a fixed point (set by an application default, or by the user with a mouse click).

The boat example illustrates game potential in the present invention. Another game-oriented use for its simultaneous control of location and orientation (Drawing 11) lets the user change the position of a simulated gun 1100 or other distance weapon (laser, magical blasting rod, evil eye, *etc.)* while changing the firing direction 1101 so as to continue to address the target 1110 while moving along a path 1102. (If the target 1110 can return fire, speed of control is important here.) Obstacles 1120 can block the fire of both the mobile weapon 1100 and the fixed target 1110, and the target 1110 uses some reaction time to fire at the mobile weapon 1100 when the latter becomes 'visible' through a gap: time taken to aim the weapon 1100 after arriving at a static position makes it more vulnerable to return fire. The simulation could assume straight, instantaneous fire, allow time of flight for a stream of projectiles 1111 I (important if the target itself can move), or allow 1120 for the effect of gravity, Coriolis force or other straightness-of fire disruptor: in each case the game player has a preferred weapon direction, which must change dynamically as the weapon moves. The present invention adds this capability (along with its enhancement of slide preparation, etc.) within the context of an office-equipped computer, rather than requiring separate peripheral equipment specialised for games.

**General simultaneous (x,y) and direction control in 2D** Similarly, the oddly compulsive game Raku (see http://www.lightupyourbrain.com/raku.html) currently requires separate steps of positioning and orientation: Drawing 12. The opening window 1200 contains a 10×10 grid 1201 of squares representing tiles, some shown as 'upward facing' 1205. When the user clicks on any particular tile (upward facing or not), that square is marked by an asterisk 1210 and a display 1220 of arrows appears. The user remains free to click on a different tile and move the asterisk 1210 there, but moving the cursor near an arrow so that it is highlighted 1230 enables a click that will 'turn over' all tiles in that direction. After some animation, this changes the tile display to 1211, updates the move counter 1231, and hides the arrow display 1220 until the user repeats the tile selection step. With the present invention, the two-click process of a move can be replaced by a single step, using a directional arrow 1250 that responds to the Δθ input in increments of 45°, with a gear ratio between 5 and 10. (A ratio of 9, for example, would allow the user to move through all eight arrow directions by turning the mouse 35° to 40°.) Clicking with the arrow 1250 in the particular direction shown triggers the same change to 1211 as clicking on the fixed arrow 1230 in the present game. The reduction in steps allows greater concentration on the cognitive challenge of the game. The present invention can similarly enhance many other games by condensation of position and direction selection steps, in ways that will be evident to one skilled in the art. Another example is that in solving a crossword using a keyboard and mouse, clicking on a square such as 1260 can activate it for typing either the horizontal light 1261 or the vertical light 1262. (Typically, in either case the first letter typed will go into the square 1260. The activation choice determines whether the next will be to the right or downward, or if there is no square in the chosen direction, overwrite the first.) Most existing software allows the direction to change by clicking again on the same square, by previously clicking on a square that is crossed in only one direction by a light, or by clicking on the text clue for the chosen light. A cursor that can turn between horizontal 1271 and vertical 1272 positions, and that jumps between them whenever there is an accumulated change in θ of more than a threshold value τ since the last jump, will let the user arrive in the square with an appropriate direction-pointing cursor and choose the desired light with a single click. Again, the present invention offers this condensation of position and direction selection steps in the office-equipment context, rather than serving as a separate peripheral which few users would acquire for the sole purpose of enhancement of puzzle solving.

In preparation of slides or other graphics (Drawing 13), the range of angles for a label is normally limited by easy readability. With a default gear ratio of 1, the present invention thus allows the user to achieve most changes of position from a default horizontal creation 1300 to a chosen location and orientation 1310, for example accurately aligned with an edge 1311, in a single drag movement. In our preferred implementation the user can grasp the box by holding down a button when the cursor touches the box frame 1330, except at standard size control points such as 1315. Holding the left button produces a standard translational drag, keeping the text horizontal and showing an ($x,y$)-motion cursor (as defined by the particular application). Holding the right button produces the rotational drag shown here. (When the user wants horizontal text to stay horizontal, it is unfriendly to require an effort at angle control.)

Similarly, an image may use a multiplicity of repeated elements (Drawing 14). If the user aims to place multiple copies of one flower 1400 on a branched structure 1410, the present invention enables the result 1420 to be achieved with a single drag movement for each flower 1430, much more quickly than if location and orientation had to be controlled separately.

**Curve definition in 2D** In Drawing 15 the curve 1500 has points 1510 through which it must pass, in a specified direction for each. In a preferred implementation of the present invention, this direction is not shown separately until the (x,y)-motion cursor 1520 approaches such a point. The cursor 1520 then becomes a turn-grasp cursor with a design such as 1530, and the point 1510 is replaced by a widget 1540 showing the direction 1541 currently required at that point. Holding down a button, the user moves and rotates the mouse. The cursor 1530 and widget 1540 move and turn to match the mouse motion (optionally with an adjustable 'gear ratio'), and the curve correspondingly changes to a new interpolation 1560. (Many other graphical realisations of the position and directional state of the widget will be evident to one skilled in the art.) The unified widget 1540 adjusts both the position and the direction of the curve with a single drag movement of the present invention.

Unlike the widgets in Drawing 4, this does not control the 'momentum' with which the curve passes through the point. It is a matter for experiment whether users ultimately prefer to use only a fixed-momentum widget for its simplicity of control with the present invention, perhaps increasing somewhat the number of points 1510 used, or to use a separate logic for control of momentum. The four degrees of freedom constituted by planar position, direction and momentum cannot be simultaneously controlled by changing the three degrees of positional freedom of a rigidly moving planar mouse. Our preferred implementation of such control with the present invention is to use time, considered as a form of emphasis. With a widget such as 1540 in its active state (normally, due to a button being held down) for a particular point 1510, keeping the left button depressed without moving the mouse is taken as a signal that more 'momentum' is required at this point, decreasing the curvature that the interpolator gives to the curve 1500 in the neighbourhood of the point 1510 (and correspondingly increasing it near other points). The change is signalled by increasing the length of the direction line 1541. Statically holding down the right button makes the opposite change.

Many other schemas for control of 'momentum' within the spirit of the present invention will be apparent to one skilled in the art. In particular, if the mouse is equipped with a scroll wheel as well as buttons the wheel may be used for this purpose: but while it is possible to manipulate such a wheel simultaneously with the hand motions of translation and rotation, it is a rare user who reaches or wants such a level of mastery outside the context of computer games. In practice, therefore, the scroll wheel becomes another control combined sequentially with others, rather than adjusted with them in a single motion.

**Animation key frames in 2D** Analogously to control of a curve by points, the motion of an animated object is often controlled by 'key frames': positions through which it must move. Animation software interpolates between key frames specified by the user. Evidently, the present invention allows the user to specify the positions 1601 in Drawing 16 with one drag movement each, placing copies of the reference object 1600, rather than with the multiplicity of drag movements required by a standard mouse. By default, an interpolator that assumes forward motion will often suffice to define a satisfactory path 1605. However, more control is possible, again enhanced by the present invention. We illustrate this in the context of a specific key frame animation system, though we do not here disclose novel means for (for example) setting times or interpolating motion. Our concern here is with the use of the present invention to set states between which interpolation will take place.

Drawing 17 shows a turning cursor 1701 (like 1601 in Drawing 16) placing an instance 1705 of an object 1700 in a specific *(x, y)* location at a specific orientation, associated with a specific time 1721 on a slider 1720 that may be particular to the object (as shown), or shared with one or more other moving objects, in which case each object would typically have a different marker for the times set for it. In the illustrative example, times are set by dragging (in the manner of a standard mouse) along the slider. A single drag movement with the present invention suffices to set each (x,y) location and orientation pair, for each placed instance of the objects 1700 and 1710, in contrast to the iterative translation and rotation movements required with a standard mouse. (We note that this could also be achieved using other input devices with more than two degrees of freedom: what we here disclose is the use for this of a device that also acts as a plug-in-and-use mouse, needing neither user relearning nor software recoding.) Unlike the boat in the previous drawing, these objects do not have a built-in motion direction that turns with them, to be assumed by an interpolator: the curves 1730 illustrate the kind of path an interpolator might produce, using only the *(x, y)* locations. This could be adjusted by giving many more locations, or by adding information. We show one added instance 1751 of the ball 1710, inserted because one needs different velocities before and after the kick: the separation from the previous location 1715 is for illustrative clarity. Each instance of the objects 1700 and 1710 is given the additional data of rate of change, both of its *(x, y)* location and of its orientation: velocity, and rate of turn. Using the present invention these are controlled simultaneously with a widget 1770 (shown enlarged). The straight arrow 1771 corresponding to the velocity vector changes with the $(\Delta x, \Delta y)$ signals from the mouse, while the spiral 1772 (whose total angle corresponds to rate of turn) changes with $\Delta\theta$. The scale by which velocity vectors map to distance vectors may be set as a default, or made user adjustable. Similarly, the turn control requires at least a ratio to transform degree changes in angle to degree/ second changes in rate of turn: a non-linear response such as logarithmic scheme may also be useful, in relating either the mouse turn to the rate, or the rate to the displayed spiral 1772. The example 1775 shows the ball required at that moment to head downward, with a particular anti-clockwise spin, where both adjustments are made using a single drag movement. Similar adjustments at the other key positions give data enabling the interpolation system to produce the paths 1731, to be travelled with appropriately varying speeds and spin rates to match the velocity vectors required. This makes it easy to specify the velocity and rate of turn, or to modify the values generated by interpolation software given only the times and positions required. This finer degree of control, including rate of turn, is currently rare in animation software, since the standard mouse user already has to use separate drag movements as in Drawing 4 to control location and angle, often alternating between them. Additional separate drag movements to fine tune linear and angular velocity would not be cost effective with a standard mouse, but become so with the present invention.

**Image navigation in 2D** When using a map, a photograph, a diagram or other data structure normally presented in the plane, one often needs to zoom, enlarging the region around a particular point. In many applications, clicking the magnification icon produces a larger picture, from which the point of user interest may have disappeared. It is often necessary to use sliders both horizontal and vertical to bring that point back, and finding the point is often difficult. More intelligent software lets the user click on a particular point, and arranges that this point stays fixed while the view expands around it. With a standard mouse, however, the 2D point selection leaves only the discrete click as a control, so the image jumps to become larger. A scroll wheel could be used to control continuous zoom (though we have not seen this done): more comfortably, the rotation data from the present invention may be mapped to a change in scale factor. This allows the user to simultaneously drag a peripheral point to the middle of the screen, and twist around it clockwise for enlargement, anti-clockwise to shrink, or vice versa. The difficulty of mixing finger control of a scroll wheel with gross hand motion would cause most users to drag first, then use the wheel. With the present invention, a single twisting drag becomes natural. In an application where the 'upward' direction should be undisturbed, the drag may be the same for either the left or the right button. An application like PhotoShop™, where one may need to move, twist and scale an object to be added to the scene, may set 'left button down' to scaling drag, 'right button down' to twisting drag. The same pair of options would significantly reduce the button controls on GoogleEarth™, and speed up one's use of it.

This use exemplifies particularly clearly two aspects of the present invention: that the simultaneous translation and rotation of the mouse may map to other things than translation and rotation of an object in the display, and it is the task of the application to fix the mapping used. An all-purpose switch of the mouse between $(x, y, \theta)$ mode and $(x, y)$ mode is no more appropriate than a mouse-level switch between $(x, y)$ mode and the *x*-only use of the mouse to drag the button on a horizontal slider.

**3DOF display control and motion in 3D** A 3-degree-of-freedom reporting system such as the present invention can never simultaneously control the six degrees of freedom in rigid 3D motion. However, it can control position and orientation separately, with a usable mapping to each. Drawing 18 shows a drag movement 1840 from position 1841 of the mouse to position 1842, with a change both in $(x, y)$ and in $\theta$. We may set the corresponding translational motion of the currently selected 3D object in different ways, according to the character of the software and the task. Our preferred implementation for general purpose manipulation is as shown in the transition 1857. For expository purposes here we retain the axial-projection windows 1800, 1810 and 1820, corresponding to the active windows 600, 610 and 620 respectively in Drawing 6, though (unlike the situation illustrated there) they play no role in the interaction we now describe. At the start of the movement 1840 the cursor is in the window 1830, over the object 1880, which is thus selected when the drag begins. (Typically, the object 1880 is highlighted in some manner to announce to the user that holding down a button and moving the mouse will act on this particular object.) The cursor changes position by $(\triangle x, \triangle y)$ in the display, following the standard $(x, y)$ behavior. The object 1880 moves 1857 to keep the cursor 1851 at the same point in front of it as when the drag started with the cursor at 1850. Meanwhile the distance of the object from the screen (that is, the coordinate z in the 3D display coordinates now standard in such graphics libraries as OpenGL, which render a view appropriate to the eye assumed to be seeing the display from a particular location) changes in proportion to $\Delta\theta$. A single drag motion thus suffices for any type of 3D translation, using only the window 1830. We prefer to associate clockwise motion of the mouse with increasing z (motion into the screen) because this association is common with a screwdriver: a clockwise turn impels the screw away from the user, an anti-clockwise one retrieves it. (However, such an association is not essential to the present invention.) Thus, in the situation illustrated in Drawing 18, in window 1830 a clockwise turn of the mouse moves the object 1880 from a position nearer the user than the fixed axes are, to a position farther away. The change may be seen in more detail in the other three windows, which is our reason for including them in this description, though for an object not rectilinearly aligned with the axis directions the view in these directions is much less helpful. No longer required for user control of $(x,y,z)$ motions, these windows become less necessary. We expect them to be omitted in many applications, allowing more detailed views in the window(s) retained.

As with other uses of $\Delta\theta$, it may be convenient to use a non-linear mapping between $\theta$ and $z$, such as a logarithmic scale, by which a given $\Delta\theta$ changes $z$ by a multiplicative factor to $z\,e^{k\Delta\theta}$ rather than change it additively to $z + k\Delta\theta$. In either case a scaling factor such as $k$ is convenient in relating the size of angle change to depth change: in user selection it may usefully be analogised as the choice of a pitch for the screw by which rotation controls distance.

The process of selection for dragging or other modification may be refined by assigning a depth $z_{cursor}$ to a three-dimensional cursor object 1881, and using the control method just described to translate the object 1881 in 3D, with or without a visible two-dimensional cursor 1850. An object 1880 is then highlighted only when the cursor 1881 is near to it in all three dimensions: when an object 1880 is in this highlighted state, the user may select it (by button-press, voice, or such other signal as is accepted by the application), with the result that the location control method becomes directed at the object 1881. While the object 1880 is being moved, the 3D cursor 1881 may (as appropriate in the specific application) become invisible, become static or move as if attached to the object 1880, until a drag movement is ended by a signal such as release of a mouse button. Equally, positioning of the cursor 1881 may (rather than select an entire object) select the point on an object where a particular procedure is to be applied, such as an image processing operation (local blurring, sharpening, *etc.*) at the corresponding point in a 3D image such as a CT or MRI scan, applying a colour to the surface of a geometrical model of a unicorn, changing local elasticity or electrical resistance in a simulation of a physical process, and so on. We discuss further the nature and use of such a cursor object 1881 in the setting of Drawing 21.

As an alternative to the above relation between $(\Delta x, \Delta y, \Delta\theta)$ and the standard display coordinates ($x$ across the screen, $y$ up the screen, $z$ into the screen) arises in technical software where another $(x, y, z)$ is explicitly on show. The above discussion used such axes, like the subsidiary windows 1800, 1810 and 1820, for specificity in description of the effect of the user interaction, rather than as a part of the interaction itself. However, where convenient, such scene-specific axes can provide a basis for user interaction. The change 1858 (corresponding to the same mouse motion 1840 considered above as causing the change 1857) modifies the scene-specific $x$ in proportion to the mouse-reported $\Delta x$, the scene-specific $y$ in proportion to the mouse-reported $\Delta y$, and the scene-specific $z$ in proportion to the mouse-reported $\Delta\theta$. This is mainly useful in a context where the axes are an important part of the user's concept of the scene. The axial-direction windows 1800, 1810 and 1820 make clear that the results are quite different, for a typical axis frame. In this interaction mode the motion of the image of the object across the screen is unlike the usual $(x, y)$ dragging motion, so it is unhelpful to show a screen-bound cursor icon of the usual type during the dragging. However, a cursor that appears to move as a 3D object within the scene provides more useful cues to the axis-conscious user. Note that if scene-specific axes are used in dragging motion they should be used in non-drag cursor 3D motion also, to avoid switching the user constantly between conflicting controls for translational 3D motion.

Other correspondences between the three degrees of freedom reported by the present invention and the three degrees of freedom in translational 3D motion will be evident to one skilled in the art, within the spirit of the present invention.

Drawing 19 shows orientation control for an object 1900, rotating about a point 1901 with coordinates $(\bar{x},\bar{y},\bar{z})$, beyond the screen 1905, that has been selected as in the case of translation, just discussed. The system must now act in orientation control mode: the user may select this state as specified in a particular application, by a dragging with a different button, by a voice command to change mode, or by other such selection means as will be evident to one skilled in the art. Similarly to Drawing 7, a sensed $(\Delta x, \Delta y, \Delta\theta)$ drags the position 1910 of a controlling cursor from a starting point with coordinates $(x, y, 0)$ on the screen 1905 to a new position (shown in two instances) with coordinates $(x + \Delta x, y + \Delta y, 0)$. (As in Drawing 7, the sizes of $\Delta x$ and $\Delta y$ are exaggerated for clarity.) The line 1911 through $(\bar{x},\bar{y},\bar{z})$ and $(x,y, 0)$ is treated as fixed relative to the object, so that moving the cursor point 1910, which moves the line 1911, must also rotate the object, about the point 1901. Many different rotations about this point move the line 1930 to the line 1931, including the minimal rotation method using standard mouse input, rotating about the unique axis orthogonal to both the original line 191 and the moved version of it. This rotation has a matrix R similar to that specified by Equation in the Background of the Invention, above. (Within the scope of the present invention, the same rotations may be specified by the use of other algebraic means, such as replacing matrices by quaternions.) However, we prefer an adaptation of it, not suggested or implemented elsewhere to the best of our knowledge, where the quantities c and s are replaced respectively by the cosine $c_g = \cos(g\alpha)$ and sine $s_g = \sin(g\alpha)$ of the product of an angle $\alpha = \arcsin(s) = \arctan(s/c)$ by a 'gear ratio' $g$ set by software or set by user preference. With g = 1 it reduces to the standard algorithm. With a general $g$ the rotation matrix is given by

$$\tilde{x} = x - \bar{x} \qquad \tilde{y} = y - \bar{y} \qquad u = \tilde{x}^2 + \tilde{y}^2 + z^2$$

$$\left(w_x, w_y, w_z\right) = \left((\Delta y)z, -(\Delta x)z, (\Delta y)\tilde{x} - (\Delta x)\tilde{y}\right)$$

$$w = \sqrt{w_x^2 + w_y^2 + w_z^2} \qquad d = (\Delta x)\tilde{x} + (\Delta y)\tilde{y}$$

$$\delta = (\Delta x)^2 + (\Delta y)^2 \qquad v = \sqrt{u^2 + 2d + \delta}$$

$$c = (u + d)/v \qquad s = 1/v \qquad \alpha = \arctan(s/c)$$

$$c_g = \cos(g\alpha) \qquad s_g = \sin(g\alpha) \qquad \gamma_g = (1 - c_g)/w$$

$$R_g = \begin{bmatrix} c_g + \gamma_g w_x^2 & \gamma_g w_x w_y - s_g w_z & \gamma_g w_x w_z + s_g w_y \\ \gamma_g w_x w_y + s_g w_z & c_g + \gamma_g w_y^2 & \gamma_g w_y w_z - s_g w_x \\ \gamma_g w_x w_z - s_g w_y & \gamma_g w_y w_z + s_g w_x & c_g + \gamma_g w_z^2 \end{bmatrix} \qquad (57)$$

A small g enhances fine control, in the manner of a Vernier device, while a high value allows the user to bring about larger rotations: it is inherent in the standard method that one drag movement across the display must produce a turn of strictly less than 180°, after which the cursor must move back (without dragging) to the start position of the next turn in that direction, if needed. A gear ratio of two or three allows a complete front-to-back turn in a single drag movement, at the cost of some precision. The appropriate trade-off between these factors depends on the application, and the particular task within an application, so in our preferred implementations the gear ratio g is adjustable.

Even with an adjustable gear ratio g, this user input scheme has the disadvantages noted in the Background section above, arising from the fact that a $(\Delta x, \Delta y)$ sensor provides input for only two degrees of freedom, while rotations vary in three. It is thus not an accidental consequence of the scheme that the user has no direct way to input a rotation about (for example) the axis pointing directly into the screen: enabling this would be at the cost of some other rotation becoming difficult. (Such a rotation can be achieved indirectly, by exploiting the failure of successive matrices R to commute, but this method makes orientation adjustment slow and laborious.) With the present invention, the additional parameter $\Delta\theta$ may be used to control rotation more fully. In one such method, its effect may be taken as a rotation about the point 1901 with axis in the direction 1942, using a matrix

$$S_{\Delta\theta} = \begin{bmatrix} \cos(r\Delta\theta) & -\sin(r\Delta\theta) & 0 \\ \sin(r\Delta\theta) & \cos(r\Delta\theta) & 0 \\ 0 & 0 & 1 \end{bmatrix} \qquad (58)$$

where r is another 'gear ratio' set in software and optionally modifiable by the user. Alternatively, its effect may be taken as a rotation about the point 1901 with axis the line 1930 , using a matrix

$$T_{\Delta\theta} = \begin{bmatrix} c + \sigma\tilde{x}^2 & \sigma\tilde{x}\tilde{y} + su_y & sz - \sigma\tilde{x}z \\ \sigma\tilde{x}\tilde{y} - su_y & c + \sigma\tilde{y}^2 & s\tilde{x} - \sigma\tilde{y}z \\ -sz - \sigma\tilde{x}z & -s\tilde{x} - \sigma\tilde{y}z & c + \sigma z^2 \end{bmatrix} \qquad (59)$$

where $c = \cos(r\Delta\theta)$ $\quad s = \dfrac{\sin(r\Delta\theta)}{\sqrt{\tilde{x}^2 + \tilde{y}^2 + z^2}} \qquad \sigma = \dfrac{1 - \sin(r\Delta\theta)}{\sqrt{\tilde{x}^2 + \tilde{y}^2 + z^2}}$ ,

with again the 'gear ratio' r. Small modifications within the scheme of the present invention, such as replacement of rotation about the line 1930 by replacement about the line 1931, will be evident to one skilled in the art. The choice of axis between (58) and (59) may be set by the application, following usability research, or adjusted in user preferences: the effects are similar. When $\Delta x$ and $\Delta y$ are zero, the matrix (58) or (59) describes the complete rotation for the present mouse-step. Otherwise, it is used as a multiplier for the matrix R specified by Equation (1). Matrix multiplication with R on the left produces a different result from multiplication with R on the right, but since each matrix involved is only a small distance from the identity transformation the difference between these products is small even compared to these distances. Either multiplication may thus be used, with little impact on the user experience.

Drawing 19 illustrates the use of (59) for two exemplary drag movements. Movement 1950, a leftward translation and a clockwise turn from position 1951 to 1952, produces the change 1955, with substantial rotation about both the axes 1922 and 1942. Movement 1960, a primarily downward motion of the mouse with an anti-clockwise twist, yields the change 1965, with rotation mostly about the axes 1922 and 1942. The relation between hand motions and 3D rotations is intuitive, with rotations of the object 1900 following the hand in natural directions. A single drag movement can achieve any 3D rotation of moderate extent, or (with appropriate gear ratios g and r) any 3D rotation whatsoever.

Pose control using this interaction would typically operate through a single window, using the two mechanisms represented in Drawings 18 and 19, perhaps invoking one for left button dragging and the other for the right button. (The detailed specification here depends on what other interactions an application may need to support between the user and the object.)

The mechanism above would evidently be useful in any software that displays 3D objects, from gearbox designs to seismic data to MRI scans: all these objects must frequently be moved, for an improved view or for a changed spatial relation with other objects in the scene. The present invention makes this easier while remaining interoperable with the standard mouse for its familiar functions.

Another 3D construct that must frequently be moved is the clipping plane (Drawing 20), on one side of which a displayed object becomes invisible, giving a cut-away view. With no such plane the exemplary object 2000 appears as a solid block, but (from the same viewing point) the clipping plane 2001 reveals it as a thick, hollow structure, with a similar smaller structure inside. (We here visualise the plane 2001 where it meets the 'solid' part of the object 2000 as a hatched region, and elsewhere as invisible. What is visible in an application depends on the data structure and rendering method used: the identifying feature of a clipping plane is that on one side of it, the elements of one or more displayed objects become invisible.) A skull, an oilfield or an engine design requires more exploratory placement of such a plane or planes, but a standard mouse is insufficient to reposition it conveniently. Thought of as a rigid object in 3D, a plane has the usual six degrees of freedom, but internal motions of the plane (sliding and turning while occupying the same set of points) do not affect what is cut away. Only the three other degrees of freedom make a difference: for example, the $x$, $y$ and $z$ values at which a plane meets the $x$, $y$ and $z$ specify the plane completely. These three numbers are not our preferred scheme of specification and control (partly because of degeneracy when the plane contains a line parallel to one such axis), but they show clearly that clipping plane positioning has three degrees of freedom, and is thus hard to manipulate with the standard mouse. These three degrees of freedom can be given a convenient schema for complete user control by input delivered with the present invention.

In one such schema the reported $(\Delta x, \Delta y, \Delta\theta)$ drags the vector 2010 (pointing from an optionally displayed reference point 2015, or from the point where the plane 2001 meets a chosen axis, or from any preferred point) to lie along a line through an $(x, y)$-dragged cursor point on the screen. More generally, and in our preferred implementation, use of the matrix $R_g$ described in Equation (57) above permits a user to rotate the normal 2010 through a smaller or larger angle b the same drag movement, by setting a smaller or larger value for g. This vector 2010 serves as the normal to the plane 2001, fixing orientation by the requirement that directions within the plane 2001 be at right angles to it. Algebraically, if the vector 2010 has the components $(n_x, n_y, n_z)$ the plane 2001 can be specified as the set of $(x, y, z)$ for which

$$n_x x + n_y y + n_z z = d, \qquad\qquad (60)$$

where $d$ is a parameter determining which of the planes orthogonal to the vector 2010 shall be used. (The three numbers $n_x$, $n_y$ and $n_z$ are here determining only two degrees of freedom for the plane 2001, since multiplying all of them and $d$ by a common scalar leaves unchanged the set of points $(x, y, z)$ specified by (60). In the present instance they are controlled by two degrees of freedom, the cursor's lateral and vertical motion on the screen: the user controls the direction of the vector 2010, but not its length.) Separate modification of $d$ is needed for full control of the position of the plane 2001. Our preferred implementation is to change d by a number $\Delta d = q\Delta\theta$ proportional to $\Delta\theta$, but another method makes proportional to $\theta$ the point $z = d/n_z$ at which by (60) the plane 2001 passes through the z-axis. The change in $d$ is then $\Delta d = q n_z \Delta\theta$, using the current value of $n_z$. In either case the user may be provided with means to modify the constant $q$ of proportionality. Other such mappings usable in the present invention will be evident to one skilled in the art.

The effect of mouse motions with the current invention may then be illustrated for the motion 2020, downward with a clockwise turn, which 2025 bows the clipping plane 2001 to a location 2021 that faces more downward, and is further from the user. The motion 2030, to the left and anti-clockwise, turns 2035 the plane 2001 to a location 2031 that faces the user's left, and is nearer the user. With intuitive motions of this kind, the user may through the present invention move the position of the clipping plane smoothly through any desired sequence of positions, with great advantage in the exploration and display of complex three-dimensional structure. In our preferred implementation the user may leave one clipping plane fixed and invoke another, constructing a more complex cutaway view. Most three-dimensional display engines support the imposition of at least six separate clipping planes without degrading system performance.

Similar controls may be applied to the *acquisition plane* in which a system such as an MRI scanner, connected directly or indirectly to the user's system, is to be instructed to acquire scan data. (It is of the nature of current MRI machines to acquire data as slices. Volume scanning is achieved by acquiring multiple slices, which is harder to do in real-time exploration.) The present invention allows the choice of any plane with a single drag, against the multiple drags required with any software using a standard mouse. Choice of an acquisition region within the chosen plane then needs only the familiar 2D mouse controls for translating and resizing a planar window, enhanced by the planar-rotational control afforded by the present invention.

Drawing 19 shows further uses of a 3D cursor control 1881 with the present invention, not merely to select objects or points but to define and modify paths. Using the present invention, with a single drag movement (right, left and returning right; turning clockwise then anticlockwise), the user can steer a 3D cursor 1900 around an object 1902, defining a path 1901. An application may sample every successive computed position for the cursor 1900 and 'join the dots' to create a detailed path (often displaying irregularity in the user's motion), or smooth the input data for a more even curve, preferably retaining the specific end points defined by the start and finish of the drag movement, which are likely to be more specifically chosen by the user. Such a sketched path may be used to annotate an object within a 3D scene as being of interest, whether it is an artery suspected of stenosis (narrowing of the open channel), a critical load-bearing member in a bridge design, or any such item. A loop as a marker is analogous to common practice in annotating 2D images, and has the advantage in 3D of high visibility in any direction as the viewpoint changes.

**Animation key frames in 3D** A 3D curve such as 1901 is laborious to create with a standard mouse, using the standard interaction scheme described in Drawing 6. We do not suggest that the present invention provides the most natural interaction possible with virtual 3D structures: the use of a six-degree-of-freedom sensor, perhaps one in each hand, allows the simultaneous control of location and orientation and supports dexterity by matching the way that the user moves objects in the physical world. (T Poston, The Virtual Workbench: a path to use of VR, The Industrial Electronics Handbook, J D Irwin ed., CRC Press and IEEE Press 2197, pp 1390-1393.) However, within the context of a plug-in-and-use replacement for the standard mouse, leaving intact the typical user's learned computer interactions rather than stressing continuity with physical 3D skills, the present invention yields a major enlargement of what is convenient and possible. Many tasks, such as 3D annotation, need to be done with small effort if they are to be worth doing at all: otherwise, they become unacceptable distractions from the main task at hand, such as planning a surgical procedure or a bridge. The present invention greatly enlarges the range of small-effort tasks, while in no way requiring the modification of existing computer skills or existing computer code for previously mastered tasks. The Dvořak keyboard has failed to displace the qwertyuiop standard, though demonstrably superior to it, because a typist not merely has to retrain, but loses skills that remain important when sitting down with the standard equipment of a different user or employer. The present invention is a pure extension of the standard mouse, with no such obstacle to its adoption.

We show 2105 an enlarged view of the cursor 2100, to illustrate that in our preferred embodiment such a cursor has asymmetries that can be clearly aligned with the reference axes 2110 of the current scene, not to be identified with the automatic directions of left-right and up-down on the screen, and away from the user through it. When the scene is rotated (for example, by the mechanisms in Drawings 7 or 17, or by some other element in an application) the appearance of the axes and of the cursor 2100 changes correspondingly. (Many 3D forms would be acceptable here, such as a 3D geometric model of a rowboat, gun or pointing foot.) The asymmetry makes all three axis directions obvious, so that the cursor 2100 serves as a mobile 'compass' in the 3D environment under study. In many such environments it is far from easy to retain awareness of direction as the scene is rotated: for example, in the 'nasal labyrinth' of passages behind the nose, a surgeon may lose track of the direction in which a physical endoscope is looking, up or down, toward the eyes or toward the brain. When examining a nasal CT scan, without even the physical cue of a hand on the external part of an endoscope, it is even easier to lose track of the ways that the view has rotated. For such situations we prefer a 3D cursor which can be aligned with a scene-fixed framework, typically a system of orthogonal axes. (For special purposes another coordinate scheme may be important, such as the spherical coordinates of latitude, longitude and distance from a centre. In this case the obvious alignment would be a 'level' compass that always points 'north'. Such examples may easily be multiplied within the ambit of the present invention.)

The curve 2121 is more complex, satisfying constraints represented by the objects 2122, 2123, and 2124. (In an application the curve 2121 could represent the path to be followed by a medical, military, geological or other device, replacing the objects 2122, 2123, and 2124 by passages through which the device must pass, in particular directions.) Such constraints often require motion in a direction that is not parallel to any two-coordinate axis plane (with respect either to the scene axes or to the automatic user directions), so that to fix points on the path by the *(x, y, z)* location control scheme of Drawing 6, with a standard mouse, is a difficult task. With the present invention, the whole curve 2121 can be traced in a single drag movement. Again, the path 2121 might be constructed by following multiple positions 2120 of the cursor 2100 in detail, or by smoothing or interpolation between a few of them, by means well known to those skilled in the art. In the latter case, user button clicks could indicate the positions to be retained exactly in the smooth curve construction process. Unlike the 2D situation of Drawing 16 it is impossible with the present invention to specify simultaneously the orientation that an object following the curve 2121 must have at a particular (x, y, z) location, and the *(x, y,* z) location itself: however, specifying each of them with a single drag movement, rather than the multiple drag movements required by the standard mouse and the methods shown in Drawings 6 and 7, represents a major easing of the user's task.

Unlike Drawings 16 and 17 it is impossible in 3D with the present invention simultaneously to fix orientation in a 3D pose 2140 of an object on a path 2130, and a point of that path. (A six-degree-of-freedom sensor would enable this in 3D, but if its degrees of freedom are the 'natural' ones of rigid 3D motion it cannot be confined to a mousepad or desktop.) Unlike a boat, whose motion can often be assumed to align with the keel, a 3D object must usually be independently oriented. A spacecraft can point in any direction while moving in any other, while even an aircraft often descends tail down, and in a flat un-banked turn will slip sideways. With the present invention, therefore, it is possible only separately to fix the position and orientation in each 3D pose, but it is possible with one drag movement each, rather than the multiple drags required with a standard mouse. The methods already discussed apply to this. If the poses 2140 are key frames for an animation or other plan, it may also be useful to specify the velocity and rate of turn, so that (for example) the user can insist on dramatic cornering, or steady motion down a passage. A velocity $v = (v_x, v_y, v_z)$ can be indicated graphically as a 3D vector, whose tip is translationally dragged in 3D by the user in the standard way for the present invention, like the cursor. A rate of turn $\rho$ can also be represented by a vector $(\rho_x, \rho_y, \rho_z)$ along its axis of turn, where the rate of change of the orientation matrix R is given by

$$\frac{d}{dt}\begin{bmatrix} & R & \end{bmatrix} = \begin{bmatrix} 0 & -\rho_z & \rho_y \\ \rho_z & 0 & -\rho_x \\ -\rho_y & \rho_x & 0 \end{bmatrix}, \tag{61}$$

and this vector may be user-controlled in a similar way. However, these relatively abstract representations do not connect very directly with a user's sense of motion, by which a human knowing no formal mathematics can (for instance) predict the motion of a Frisbee and catch it. Moreover, if the user's system is not equipped for stereoscopic display (or if, as in people who do not see 3D shapes in random-dot stereograms, stereopsis is not a depth cue much used by the user's visual cortex), the exact direction of a graphical vector arrow is not easy to judge without the support of additional depth cues. Our preferred implementation, therefore, indicates a velocity and a rate of turn by the change that (continuing uniformly) they would make in a default time step $\Delta t$, adjustable by the user. The pose 2150 represents the chosen position of the object, displayed to the user. Selecting rate mode adds a second view 2151 of the object, drawn translucently or otherwise distinguished from the reference pose 2150, depending on the graphical resources available. On initial appearance it is displaced from the reference pose 2150 by $v\Delta t$ and turned through $\rho\Delta t$, using current values of $v$ and $\rho$ if these are available. (If they are not, a small non-zero default $v$ in the 'forward' direction of the object shape improves visibility of the first appearance of the second view 2151. Our preferred default value for $\rho$ is zero.) By translating and rotating the second view 2151, the user adjusts $v$ and p to the values that would produce the corresponding pose for it. The display may include a path 2155, which is either the straight path that would be followed with the currently selected $v$ as a uniform velocity, or the path interpolated by the scheme in use by the software as following both from the said $v$ and from the data for other key frames.

The user may wish to modify or specify acceleration, in the velocity sense of changing speed and direction (changing $v$), and in the rotational sense of changing $\rho$. As with $v$ and $\rho$ this can be done by adjusting displayed vectors (in this case $dv/dt$ and $d\rho/dt)$, but in our preferred implementation the user selects an acceleration mode and a third view 2152 appears. On appearance it has the pose that uniform motion would give a translation of $2v\Delta t$ and a turn of $2\rho\Delta t$, using the uniform values. The user modifies this to give a change in pose matching the desired acceleration. Typically for a small $\Delta t$ the actual change would be imperceptibly small, being proportional to $(\Delta t)^2$, so for interactive purposes we prefer a correspondence ratio such as $1/\Delta t$, adjustable by the user. In acceleration adjustment mode the optionally displayed path 2156 shows either the curved path that would be followed with the currently selected $v$ undergoing change due to the currently set acceleration, or the path interpolated by the scheme in use by the software as following both from the said data and from the data for other key frames.

This general scheme for specifying rates of change and acceleration would be equally usable with an input device having more than three degrees of freedom, though to our knowledge is it has not been described before. However, our inclusion of it as an aspect of the present invention derives from its impracticality with the standard mouse, where each adjustment would use a great number of drag movements with multiple changes of mode: translate location

in several ($\Delta x$, $\Delta y$)-cursor steps, then similarly adjust an orientation, return to the location, and so on. The present invention greatly enhances the user's effectiveness in this 3D key-frame task, while presenting no obstacle to use in familiar ways in those tasks where the traditional mouse is adequate (or where the user prefers to delay retraining).

A cursor 1881 or 2120, with a distance $z_{cursor}$ as one of its attributes, is most useful when the value of $z_{cursor}$ can be made continuously clear to the user by appropriate depth cues, such as graphical constructs connecting it to reference objects, change of colour with distance, or (in our preferred implementation of this aspect of the present invention) the use of stereopsis, providing images to the left and right eyes with differences matching those occurring for real objects at corresponding depths. Whatever means is used to assist this perception, one must also note that a cursor moving in 3D can from the user's viewpoint be behind a solid object. To avoid mislaying it, therefore, the cursor 1881 must appear transradiant: that is, any other object must seem translucent to light that seems to reach the user from the cursor. This is easily accomplished by rendering the cursor 1881 after the rest of the scene, and blending its image with those of other objects rather than permitting them to mask it. Where a z-buffer gives a value at every pixel for the depth of the nearest point on any object that is in line of sight with that pixel, the blending can straightforwardly make the cursor 1881 itself appear opaque when it is closer than other objects.

**Colour selection** The typical user of a 2D image manipulation application such as PhotoShop™ or Paint-ShopPro™ has no general need to acquire 3D manipulation skills, or to add 3D-specific equipment to the work environment. Much less does the typical user of a slide preparation program, when selecting yet another colour and font to break the continuity of otherwise readable text. However, colour selection for humans is an inherently three-dimensional task. Since we have three types of colour receptor, one can match the apparent colour of an object by displaying a mix of three intensities of red, green and blue light for which the receptor responds as though to the original combination of wavelengths. A bee, with eight receptor types, has distinct responses to combinations that to us are identical. The bee would thus require an eight-number specification of a colour, but for us it suffices to give a triple of numbers, such as separate intensities for Red, Green and Blue (RGB) components. Typically, the RGB intensities are coded for the user as positive decimal numbers ranging from 0.0 to a maximum intensity normalised to 1.0, though integer values ranging from 0 to 255 are also common. The decimal scheme gives a point in the colour cube 2000 in Drawing 20. The point 2001 with coordinates (1,0,0) gives bright red, 2002 with (0,1,0) gives bright green, while 2003 with (1,1,1) gives white, the maximum of every intensity. The origin (0,0,0) gives black, (0.5,0.5,0.5) gives grey, (1,1,0) gives a colour perceived as yellow, and so forth. Other sets of numbers are also widely used as coordinates on this three-dimensional space of showable colours, such as Hue (roughly, angle around the line 2005 through (0,0,0) and (1,1,1)), Saturation (equal to 1 on the line 2005, 0 on the axis planes) and Brightness; amounts of colour-absorbing ink in Cyan, Magenta and Yellow required to produce the required colour in a print; and the Luminance, A and B descriptors in a colour model produced by the Commission Internationale d'Eclairage (CIE). All, for fundamental reasons of human optical perception, require three numbers.

The colour selection tools in common software, however, are designed for use with a standard ($\Delta x$, $\Delta y$) mouse. They therefore display a planar array of possible colours, defined by fixing one degree of freedom: fixing the intensity of the Red component, for example, or the Saturation (a number which is 1 for white, near 1 for 'pastel' colours, and 0 for mixtures of just two components out of Red, Green and Blue). From the RGB standpoint, a fixed-Saturation array is a flattened, conical slice of the 'colour cube' 2000: in an HSB view, fixing Red gives a similarly warped cut. Changing the fixed value to get a different planar array, in such a system, requires moving the cursor to a separate part of the user interface.

With the present invention it becomes convenient to rotate the collection of all colours to a convenient viewing angle like the cube 2200, and choose a point 2210 within it by 3D translational motion: we shall denote by *($R_c$, $G_c$, $B_c$)* its colour coordinates, which would become the selected colour intensities for some painting process if the user (for instance) makes an appropriate click. The colours which are nearer the user than is the currently selected point 2210 may be automatically clipped away, using for example three axis-parallel planes to leave a rectangular block 2211, showing each point on the visible sides of the block 2211 in the colour corresponding to its coordinates. The colour *($R_c$, $G_c$, $B_c$)* itself appears at the point 2210, optionally as a small distinct patch with a distinguishing boundary, and optionally also in an isolated window 2250 elsewhere. In our preferred implementation, since a colour is typically being chosen for placement somewhere in an existing image (changing the colour of text or some other region), the isolated window 2250 is draggable to any point on the computer display, whether or not within the frame of a particular application window. It there appears in the manner of a cursor rather than a formal window, as a patch of the currently selectable colour *($R_c$, $G_c$, $B_c$)*, with no associated frame, so that its pixels directly abut the pixels of the context over which it has been dragged. (Lacking the usual frame with Close and Minimise buttons, therefore, the window 2250 must automatically vanish when the colour selection process closes. Further, since the window 2250 can blend easily into the background, particularly if the user is concerned with colour matching rather than contrast, we prefer that the main window of the colour selection process have a button which sets the window in a high-contrast mode, perhaps flashing, until the regular cursor enters it again

The visible sides of the colour context block 2211 may be formally described as the surface of points (*R*, *G*, *B)* where

$$\max\left(\frac{R}{R_c}, \frac{G}{G_c}, \frac{B}{B_c}\right) = 1. \tag{62}$$

Many other surfaces may be provided as colour context indicators for the user moving the point 2210, such as

$$\max\left(\frac{R}{R_c} + G + B, \ R + \frac{G}{G_c} + B, \ R + G + \frac{B}{B_c}\right) = 1, \tag{63}$$

(shown as 2221 for the same position 2210 as with 2211), or the points where (*R*, G, *B*) has equal brightness, luminance, saturation, and so on. Alternatively, one may use multiple intersecting surfaces, such as the constant-*R*, constant-*G* and constant-*B* planes combined as the surface 2261. In the current standard interaction scheme, whichever such surface is currently chosen, the selection point is confined to that surface until the user moves the cursor to a different subwindow to modify the surface. In the present invention, the user can change the surface simultaneously with the point, allowing an easier arrival at a desired colour: and do so with a device that serves as a plug-compatible mouse for the standard methods of cut and paste, drag and drop, and the other primary uses of the standard mouse. In any of these modalities, moreover, the present invention makes it easy to rotate the whole structure of axes, surface, selection point, *etc.,* for a more convenient view.

Analogously to the three properties of Red, Green and Blue brightness, in the standard graphical systems a point on a 3D object has not only a colour but the three properties of luminosity (how bright it is in the absence of an external light source), reflectivity (what fraction of incident light it reflects), and specularity (how strongly the reflected light is concentrated in the 'mirror reflection' direction, rather than uniformly scattered as by a matte surface). By an adaptation of the above interface scheme that is clear to one skilled in the art, merely changing the list of properties involved, the present invention allows the user to modify these properties together, rather than one or two at a time, and thus reach a desired appearance more quickly.

It is conventional to treat reflectivity as a single number, but a real object has a separate reflectivity at every wavelength, making some materials seem identical in daylight (as perceived by eyes that reduce a mixture of wavelengths to three integrated intensities, RGB) but different in artificial lighting, or vice versa. This is impractical to model graphically with current computers, but three separate reflectivities for Red, Green and Blue can improve the appearance of objects in a scene where light is modelled as a mixture of these three colours. Such a scheme becomes more practical for the user equipped with the present invention, since the three reflectivities can be modified simultaneously while exploring the effect on the displayed scene.

**Networks in 3D** As noted in the Background above, a three-dimensional graph is a far more powerful and flexible representation of network information than a planar representation, but planarity remains dominant because manipulation of 3D structures is cumbersome. With a standard mouse it is inherently difficult to control general rotations, and hence to manage one's view of a 3D graph. Similarly, it is hard to select a node or edge for deletion, drag a node to an *(x, y, z)* position that makes the relationships visually clearer, or add a new node at a new *(x, y, z)* position. The *(x, y, z)* and orientation controls disclosed in Drawings 16 and 17, with the usual mouse button conventions on clicking and dragging, make these tasks easier for the user.

Drawing 40 shows three-dimensional representations 4000 and 4010 of the family structures previously shown in Drawing 8, with much more even sizing of links, arrangement of generations, *etc.*, than is practical in a planar representation, particularly for the case of 807, redrawn as 4010. It would even be convenient to place nodes at the height corresponding to date of birth or of marriage, though this has not been done in these examples.

However, as the structures are shown here, there are evident usability issues. We give them in the form of stereo pairs: the left view 4001 or 4011 to be presented to the left eye, the right view 4002 or 4012 respectively to be simultaneously. presented to the right eye. Some users can achieve such depth-perceptive viewing of left-right pairs, as presented through the medium of this document, by crossing their eyes, but many more convenient presentation schemes exist. The most inexpensive non-squinting system is to superimpose them in complementary colours such as a red image and an image in green or blue or a mixture, and view them with a corresponding filter over each eye. Such stereopsis also has the advantage of usability in print, though colour printing is outside the format constraints of this document. This is our preferred implementation of the stereo depth cue in conjunction with applications of the present invention where economy is important, and arbitrary or nature-derived marking with colour is less important. (Some colour difference can be arranged: however with a red-blue scheme for example some reddish colours become visible to only one eye, removing the stereo cue. Most colours in photographs appear somewhat un-natural using this form of stereopsis.) Manipulation of a network such as a family tree, which can be coloured uniformly or with the subset of colours compatible with a particular type of coloured glasses, is an example of such an application. So is 'false colour' visualisation, where colours are arbitrarily assigned to regions or objects as codes ("This is the hippocampus," for example, or "this rock is permeable"), rather than as descriptions ("This forest is green"). Other systems of stereopsis require active devices, such as an alternating view with synchronised shutter glasses, views in polarised light with polarising filters, glasses-free 'autostereo' that directs a distinct view to the area where each eye is - or is intended to be - located, and so on. All these non-squinting displays are compatible with the present invention, and more users have a visual cortex that can use them than can see depth in Drawing 40, but they are not a major concern here. Given easy rotation, a depth cue valid for almost all users, the need for stereo is substantially decreased. Since the target of the present invention is enhancement of existing systems by plug-in replacement of the standard mouse, without imposing a necessity for additional equipment such as shutter glasses, the now-standard graphics capability to redraw rotating complex structures in real time is more important. However, the static format of this document does not permit inclusion of a rotating view.

The size reduction for side-by-side views makes legible labelling impractical, so we present only the structure here. Each of these views is individually far inferior to the layouts in Drawing 8, since the drawing is much denser and parts are obscured. A multiplicity of static views from different directions would require more printing space and not solve the difficulty. Many users could not mentally integrate them, and without clipping a central point can be obscured in all views. Planning and implementing a clear set of clipped views is a major undertaking, beyond the ability of some users and beyond the time budget of many more.

Only when the user has both adequate depth cues and easy manipulation does a three-dimensional layout become convenient and useful. With the present invention a user can: translate the view simultaneously in *(x, y,* z) directions; rotate the view simultaneously in roll, pitch and yaw; adjust a clipping plane to vanish temporarily a masking part of the structure; navigate a cursor 4020 through the structure, by the cursor control mechanism already described; click a button when a node 4021 or edge 4022 is highlighted on the approach of the cursor 4020, so selecting it; drag a selected element (node or edge) in any combination of sideways, vertical and depth directions, by moving the mouse with a button held down; rotate a selected edge in any combination of sideways, vertical and depth directions, by moving the mouse with a button held down; delete a selected element by clicking 'delete' on a displayed menu, by a double-click, or by such other signal as will be evident to one skilled in the art; select a set of elements, by repeatedly clicking successive highlighted elements with 'Ctrl' or other key held down, so that other selections are not discarded; if the set is a pair of nodes, add an edge between them; if the semantics of the representation do not allow the two nodes to be joined (as in the family example, where humans link only to unions and vice versa) creating an addition appropriate to the semantics (in the family example, creating a union node and edges joining the humans to it); translate a selected set of elements simultaneously; rotate a selected set of elements simultaneously; delete a selected set of elements simultaneously; define a rectangular *selection box* 4030 for which all fully contained elements will be selected; modify such a box 4030 by translation, by rotation, or by resizing through translational drag of any face 4031, edge 4032 or corner 4033; edit the label or other identity marker of an element; change the displayed colour of all elements currently selected; add a group identifier such as a 3D box, sphere, cylinder or other shape (containing, for example, those members of a family who are resident in a particular geographical area), to be retained in the display rather than used as an interaction tool like the selection box 4030; resize, translate, rotate and modify such a shape; and other operations conveniently performed by use of the present invention, which will be apparent to one skilled in the art. When the user makes any change in a displayed element, the system also makes corresponding changes in related elements. For example, when a node is deleted all edges joining it to other nodes are deleted, though deleting an edge does not automatically delete the nodes it joins. When a node is moved, any edge that joins it to another moves the appropriate end to follow it; when an edge is moved, so are the nodes that it joins, and the corresponding ends of the edges that join them to others. Other rules by which the representation maintains the integrity and semantics of the data structure will be evident to one skilled in the art.

We note that a selection box 4030 may be used in any 3D display, containing objects or parts of objects that the user may wish to select, whether the display contains a network, a rendering of a three-dimensional scan, a scene in a 3D animation, a computer-aided design (CAD) display of a part or of a composite structure, or any other 3D image. An arbitrarily shaped *selection region,* with the same effect of distinguishing between objects or parts of objects outside it, may be translated or rotated in the corresponding way using the mouse described in the present invention, and its shape modified in ways specific to its shape: for example, an ellipsoidal selection region may be defined as the largest ellipsoid that touches all six faces of a given box, and the box shape controlled by dragging faces, edges and corners as described above. A multiplicity of other shapes and means to control them, within the spirit of the present invention, will be evident to those skilled in the art.

An important action that may be associated with a selection box, whether simultaneously with the box's movement and thus varying in effect, or upon a discrete signal such as a mouse click, is to render translucent or invisible the objects or parts of objects that lie outside the box: optionally, this effect may be restricted to a particular class of objects, excluding for example a three-dimensional menu that should remain visible. We refer to a box used thus as a *clipping box.* A more general selection region used in this way is a *clipping region.*

The controls described above for a selection box, by which the user may translate it, rotate it or change its dimensions, may also control an *acquisition box,* defining the regions in which a scanning system such as an MRI machine, CT machine or other 3D imaging device, connected directly or indirectly to the user's system, is to be instructed to acquire scan data. Certain scanning devices such as ultrasound have a natural non-rectangular geometry in which they acquire data: in others, acquisition geometry may be made modifiable with gains to efficiency and usability. (The rectangular output of a CT scan, for example, is not a necessary feature of the process. Scanning a whole box around a round target structure imposes unnecessary radiation load in the box corners. An ellipsoidal scan could be superior, if its choice were made straightforward for the user, as the present invention permits.) The appropriate modifications of the above controls for alternative shapes will be evident to one skilled in the art.

Many other representations of structure are fundamentally graphs with further structure, such as wiring diagrams and block diagrams like our Drawings 34 to 39 or 43 to 48. Their layout represents only connectivity, not physical position: no person skilled in the art would assume that the comparison units 3900 are required to be physically arranged in a straight line. In cases such as a family tree or a Gantt chart, there is a non-spatial dimension such as time or other ordered dependency, which it is useful to represent as height or another direction in the diagram: this constraint contributes to the difficulty of planar layout. Such diagrams, whether representing the functional logic or the wiring of a manufactured system, of an industrial process, of the steps necessary in a project, of an animal brain or hormonal signalling system, of the chemical pathways in a cell or an ecology, of the functions or classes in a computer program, or any structure with components (and often subcomponents) that must be labelled and their connections displayed, often become extremely complex. Again, the standard presentation has remained planar. There is a natural generalisation of using three-dimensional layout, three-dimensional boxes (drawn as opaque or translucent or as wire-frame outlines, with labels attached or drawn on the sides, or otherwise), lines (straight, curved or polygonal, drawn thin or as tubes with graphical cues such as shading to make their location and orientation more apparent), arrows, and so on. This generalisation avoids the difficulty of crossings in planar layout, but is rarely used because of the difficulty in manipulating and examining such diagrams. With the present invention such diagrams can readily be viewed and manipulated, using the tools already described and additional tools that will be evident to one skilled in the art.

We thus disclose also the use of the present invention in modifying the view, structure or geometric representation of a general data structure representing connectivity (which in turn may represent any relation) between nodes or other geometric structures, and optionally distinguishing distinguished type, direction or other aspect of a connectivity relation, displayed in a three-dimensional rendering.

The present invention also includes the replacement of keyboard or submenu options that modify the effect of a click, by gestural features using rotation. Many applications call on the user to hold down the Shift, Ctrl, or Alt key while performing a mouse click, to modify its effect: others offer a sequence of menus. Various browsers, for example, allow the choice of opening a URL in the present window, in a new window, or in a new tab: right click, move the cursor to the 'new tab' menu item, then left click. This sequence is not usually performed dextrously or fast. The present invention allows a 'clockwise click' (click while turning to the right) to be distinguished from a static or an anti-clockwise click. (The operational meaning of 'clockwise click' would be defined as a negative net $\Delta\theta$ of size at least $\alpha$ degrees within an m millisecond interval, with the click performed within $n$ milliseconds of the centre time of the interval, allowing $n$ to exceed $m/2$ if convenient. The default values of $m$ and $n$ would be set as the median of those that a test group finds convenient, but adjustable by the user as is currently done with the allowed time interval for two clicks to constitute a 'double click'. An 'anti-clockwise click' would be defined the same way, but with a positive net $\Delta\theta$.) This could distinguish between 'here'I'new window'I'new tab', between 'cut'I'copy'I'paste', and other such alternatives. A fast anti-clockwise motion (a net $\Delta\theta$ above a minimum $\beta$, within $\mu$ *msec.*) with no button pressed could signal 'undo', while the corresponding clockwise motion could signal 'redo'. A slow anti-clockwise motion approximating 'pure rotation' ($\Delta x$ and $\Delta y$ both smaller than some threshold) with no button pressed could raise the contents of the browser window, and the reverse motion lower it, obviating the need for a 'scroll wheel' under fine motor control via a finger. Other such interactions will be evident to one skilled in the art. These easily learned and performed gestures usefully enlarge the semantics of mouse control, making the user interface faster and more convenient to use, provided that they become near to being standard across applications.

**Palettes and tooltips** A related class of such control enhancements occurs with 'floating palettes', 'tooltips' and 'tool glasses'. A *floating palette* (Drawing 41) is essentially a menu 4100, usually with the options represented by icons 4101 rather than by text, to reduce space. (Often, when an item is highlighted, a further submenu appears. This submenu is more likely to include text items, such as in an image modification application "Dodge tool", "Burn tool" and "Sponge Tool".) It is 'floating' in that it can be dragged, by the usual mouse operation, to a place near the points in the display where the user is currently making changes, reducing the cursor travel needed. Usually the most convenient place is near, but not on, the point of work; the similar *tooltip,* a small menu which appears without user intervention when the cursor moves over a particular element, usually appears at a standard displacement from that element, to avoid obscuring it. Similarly, the user can move a *tool glass* subwindow to be in contact with two distinct objects in the display, such as a pair of images: clicking on a particular icon or button within the subwindow causes an action that involves both the distinct objects, such as copying the image contained in the first onto the image contained in the second, as a new layer, as a bitmask, or any of the many other possible two-object actions that are offered as options by the current tooltip menu. Whether in a palette, a tooltip or a tool glass, an option must be selected for an action to occur. Normally, this is done by highlighting 41 10 the button currently touched by the cursor 4111, which indicates to the user that clicking a button will now make the selection. This requires the user to move the cursor, which when using a standard mouse requires that the palette, tooltip or glass become static, no longer responding to the mouse motion.

For this reason, the paper by M Westergaard, Supporting Multiple Pointing Devices in Microsoft Windows, in Microsoft Summer Research Workshop 2002, Cambridge, UK, 9-1 1 September 2002 suggests the use of a mouse in each hand as a control scheme for such 'advanced interaction techniques'. As noted above, in the Background to the Invention, the use of a pair of mice interferes far more destructively with access to the keyboard, function keys, control keys, *etc.,* than a single mouse. The present invention makes the use of two mice unnecessary, since a mouse orientation change $\Delta\theta$ can be used to give a change $\Delta l = \gamma\Delta\theta$ in the distance $l$ 4120 of a point 4121 along the menu 4100, with $\gamma$ a gear ratio set by the application and optionally adjustable by the user. When the point 4121 lies within a particular box, the corresponding button 4110 is highlighted, and clicking has its usual effect. Evidently this technique is not limited to choice along a row or column of menu items, since the reported mouse orientation change $\Delta\theta$ can equally control position along a curved or zigzag path 4125 that passes though all the options. On reaching an end of the path 4125, further change in $\Delta\theta$ can be taken as without effect, or (in our preferred implementation of this aspect of the present invention) as causing a jump to the other end of the said path.

**Change while in motion** The technique just described for palettes illustrates the use of the present invention for adjustment within a moving object of an internal aspect of its state, without interfering with motion, as long as that internal aspect can conveniently be adjusted using a single degree of freedom. (For an inherently 2D or 3D aspect, such as the colour control in Drawing 20, our preferred implementation uses a subwindow that does not move while the adjustment is made.) We thus disclose in general the 'chew gum and walk' use of the present invention, to control simultaneously the position $(x, y)$ of an object in the display, using the conventions of standard mouse dragging, while simultaneously adjusting a one-degree-of-freedom aspect of its internal state. Drawing 42 illustrates this further with a movable construct 4200 whose position is controlled by the standard-mouse form of dragging with the mouse cursor 4201 along a curve 4210, while the angle to which its jaw opens is changed in proportion to the mouse orientation change $\Delta\theta$, independently controlled by the user: the 'gum' 4230 displayed in the mouth changes shape accordingly. The construct 4200 thus chews gum and walks at the same time.

This aspect of the present invention applies also to the drawing of curves. The path 4250 of *(X,Y)* values is only part of creating a visible curve in software; most applications allow the user to choose a 'pen' or 'brush', as well as colour, to determine what actually appears: Those that do not have simply fixed a default choice. A round brush of a particular radius gives the thick black curve 4251. (We have superimposed the core curve 4250 for reference, but this does not normally appear.) Choice of a vertical ellipse 4260 as brush gives the black curve 4261 (again, the core 4250 and repeated brush form 4260 do not appear in the final result). Choice of a horizontal ellipse 4270 gives the very different black curve 4271. Western calligraphic writing uses a pen at a fixed oblique angle, for which this mechanism suffices. A Chinese calligrapher, however, uses a freely turning physical brush, with far less mechanical variation in curve width. Without capturing the full subtlety of 3D motion, rotation and bending of a calligrapher's brush, the present invention goes some way to a remedy for this gap. The brush 4280 still has a fixed shape, but the user can use the $\Delta\theta$ reported by the present invention to turn it smoothly while tracing out the curve 4250, and thus produce a curve 4281 with a more richly controlled breadth. Evidently this applies also to a brush of any shape, and with any features such as fixed or fuzzily-varying transparency, such as is often available in paint programs when the brush is called an 'airbrush'. The 'floating palettes', 'tooltips' and 'tool glasses' just described are further examples of this use of the present invention: many others will be evident to persons skilled in the art.

For the purposes of this section, the term "application" includes any operating system (OS) with a graphical user interface, such as Windows™, MacOS™, Irix™ or Linux, as well as any program running under such an OS. Manipulation by the means discussed above of a graph representing a file structure, the choice of the colour or the 2D position or the 3D position of objects displayed by the OS to represent files, programs, links or other entities managed by the OS, or any use of the means discussed above by the OS that constitutes an aspect of the present invention when used by a program running under the OS, is also an aspect of the present invention when used by the OS.

This sub-section has described user interactions with applications via the present invention, assuming the application is written to use it. Legacy code can also be enhanced to use it, as discussed in the following paragraphs, grouped as sub-section F.

**F. Plug-in software components of the invention** The above descriptions disclose how an application (appearing in various contexts as 3570, 3670 or 3870) may acquire the data provided by the present invention, and (Section D) an exemplary set of the uses such an application may make of the data so acquired. This, however, requires that the application be specifically coded in accordance with protocols provided with an implementation of the present invention. By means of plug-ins, even legacy code may gain some of the advantages of the invention, without rebuilding the application. Such plug-ins may arise in various forms.

Certain services are provided by Windows for the use of any program running on the system, whether created by Microsoft or a third party. A notable example is the colour picking dialog; click on the colour choice menu item in many programs, and a window appears showing a few standard and recently chosen colours, with a "more colours" button. Click this, and a 'Standard' window offers a honeycomb layout of 127 colours (from the millions of shades possible) and 17 grey levels. Clicking the 'Custom' tab gives a window with a more continuous range (giving a choice within a particular 2D slice of the 3D space of perceptible colours), a smooth range of grey levels, and three text input windows for numerical Red, Green and Blue intensity values. Unsurprisingly, every serious graphics application provides its own colour selection process in a popup window, with finer control and options such as 'only HTML safe colours' (colours that appear the same in all browsers) However, all these schemes assume only a standard mouse as an input method, and thus suffer the problems discussed under Colour Selection in Section D above. A 3D colour selection window using the present invention as discussed above may be implemented as part of a modified common control dynamically linked library (COMMCTL32.DLL) to be placed in the appropriate Windows system location. (In our preferred implementation of this option, a button allows the user to revert to the standard Windows colour selection tool, either for the particular selection, or until further notice.) Since a range of other control services are based in this library, which exists in a number of successive versions with different behaviours on which applications depend, such replacement requires care.

Another class of plug-in is specific to a particular application. Many large commercial software packages, such as PhotoShop™, Maya™ and 3D Studio Max™, provide toolkits and documentation for third party developers of plug-ins, which can operate in two different manners. One of these manners is essentially a separate program, which can be called from the larger package by clicking a menu item. The plug-in opens its own window, handles a sequence of interactions with the user, and on closing delivers a packet of information to be inserted into the current state of an object that the main application is working on. (For example, MathType™ develops in its own window an equation which becomes part of a Microsoft Word™ document: inserting it in Word™ is an act distinct from editing it in MathType™, and the user does not have the impression of editing in Word™.) This is an acceptable plug-in model for a function like control of colour or specularity, which by its nature requires a window displaying available options. It has a lower risk level than the common control replacement just discussed, since no software other than the single target application has its behaviour modified, and thus testing can be relatively complete.

Finally, a plug-in can continuously intercept input to an application, and modify the results. For example, many 3D software packages control the position of an object or a viewpoint by the arrow keys on the keyboard, or by clickable buttons for rotation. (Either a keystroke or a click on such a button gives a rotation step around a particular axis, so these are essentially equivalent.) Alternatively, or in addition, many use the 3D position and orientation control schemes described here in Drawings 9 and 10, and similarly awkward controls for the position of a clip plane. To replace these by the schemes using the present invention illustrated here in Drawings 18, 19 and 20 involves a more complex set of interactions with the application. To rotate an object in a scene, for example, the plug-in must take control of the cursor while it is over a window controlled by the main application, determine (before or after taking control) what object the user wants to rotate, and discover from the application's scene management the position of the object's centre (about which it will turn), all before it can begin the computations (57) that determine desired rotation, and generate signals that will cause the application (which may not have an explicit general "rotate in the following way" protocol) to turn the object appropriately. Similar issues apply to the control of translation, or of a clipping plane. As a result, plug-ins for 3D control are more practical in some applications than others, depending on how much access to internal states is available.

As an addition to pre-existing software, 3DOF control of text boxes represents an intermediate case. The box should appear to the user to be moving in the application's main window, rather than in a separate pop-up (even if the pop-up subwindow contains a copy of the main window, or part of it, for guidance): if the plug-in has a window, it must be transparent. However, the text box need not be written to the main file until adjustment is finalised, and need not involve an object existing beforehand in the file. For many document and image preparation applications a plug-in using the present invention to implement the single-drag placement shown in Drawing 13 is thus practical, as is the graphical placement in Drawing 14.

The practicality of plugins using the present invention to enhance pre-existing applications must thus be addressed on a case by case basis, but where it is possible it is a useful aspect of the invention.

Scope and ambit of the invention

Among the features of the present invention that provide previously unknown functionality, improved results, and new methods by which to obtain results, are the following:

- The present invention increases the functionality of a mouse, but where either the user or the computer expects a standard mouse, it provides the expected standard interaction.

- The present invention increases the functionality of a mouse, but requires little or no new learning by the user.

- The present invention increases the functionality of a mouse, but requires little or no additional resources for manufacture.

- The present invention reduces multiplicities of successive distinct changes in the state or position of a computer construct by easily controlling three degrees of freedom simultaneously with a single movement.

- The present invention enables the user to set or to smoothly change the direction of an object in the same motion, using the same muscle groups, as the location of the object.

- The present invention increases the range of computer games which can be played without specialised equipment that would incur a cost in money, in desk space, and in visible lack of dedication to office tasks.

- The present invention enables the user to make a computer construct walk and chew gum at the same time.

- The present invention enables the user to draw brush strokes that change thickness or other qualities along the length of the stroke.

- The present invention enables the user to rotate a 3D object arbitrarily with a single mouse movement.

- The present invention enables the user to translate a 3D object arbitrarily with a single mouse movement.

- The present invention enables the user to translate or to rotate a 3D selection region arbitrarily with a single mouse movement.

- The present invention enables the user to translate or to rotate a 3D scanner's acquisition region arbitrarily with a single mouse movement.

- The present invention enables the user to place a 3D clipping plane arbitrarily with a single mouse movement.

- The present invention enables the user to fix a 3D scanner's acquisition plane arbitrarily with a single mouse movement.

- The present invention enables the user to manipulate a 3D scene using a single, large window for input, rather than several small, low-resolution windows according to different mappings of planar mouse motion to 3D object motion.

- The present invention enables the user to select an option within a widget in the same action used to drag the widget.

- The present invention enables the user to select from a 3D palette, of colours or other options, without first choosing a 2D sub-palette.

- The present invention enables the user to modify a 3D network with fewer motions, and more intuitively, than with a standard mouse. Such a network may represent a family tree, a molecule, a system of trading relationships, or any other connectivity structure hard to represent in a planar diagram.

- The present invention enables the user to set key frames in 2D and 3D animation more conveniently than with a standard mouse.

- The present invention enables the user to define curves in 2D and 3D animation more quickly and conveniently than with a standard mouse.

- The present invention enables the user to assemble images with multiple elements more quickly and conveniently than with a standard mouse.

- The present invention enables the user to assemble images with multiple elements more quickly and conveniently than with a standard mouse

- The present invention enables the user to mutually align objects in 2D and 3D, more quickly and conveniently than with a standard mouse.

Although the invention has been described with reference to specific embodiments, this description is not meant to be construed in a limiting sense. Various modifications of the disclosed embodiments, as well as alternate embodiments of the invention, as indicated in the specification will become apparent to persons skilled in the art upon reference to the description of the invention. It is therefore contemplated that such modifications can be made without departing from the spirit or scope of the present invention as defined.

**Claims**

1. A method and device for reporting motion against a planar surface, with the steps of

   a) establishing a connection by wire or by radiated signals to a computer equipped with a graphical display;
   b) estimating changes in the location of the device relative to the said planar surface, concurrently with rotations of the device about an axis normal to the said planar surface;
   c) receiving such signals from the computer as would be sent by a location-only mouse;
   d) responding to signals as in (c) with data corresponding to the data that would be sent by a location-only mouse whose changes in location were those detected in step (b), together with the status of any buttons or other components conventionally included in a mouse;
   e) receiving signals from the computer that constitute a request for data relative to both location and orientation;
   f) responding to signals as in (e) with data describing changes in location and orientation of the device relative to the said planar surface as detected in step (b), together with the status of any buttons or other components conventionally included in a mouse;
   g) using the data reported in step (d) or (f) to modify the state of an entity controlled by, or constituting part of, a program running on the said computer; and
   h) changing the display corresponding to the said entity according to the said modification, in a manner controlled by the said program.

2. As in Claim 1, where the said changes of location and orientation are values predicted for a time later than the measurements from which the estimates are made.

3. As in Claim 2, where the said time later is chosen by estimation of the time at which the computer will receive the data sent in step (d) or (f).

4. As in Claim 2, where the said time later is chosen according to a signal sent by the computer.

5. As in Claims 1 to 4, where all computations required for steps (e) and (f) are performed on board the said device.

6. As in Claims 1 to 4, where some part of the computations required for steps (e) and (f) is performed by driver software installed on the said computer.

7. As in Claims 1 to 6, where the said program is an application.

8. As in Claims 1 to 6, where the said program is a plug-in.

9. As in Claims I to 6, where the said program is the operating system of the computer.

10. As in Claims I to 9, where the said device contains two or more sensors of a type that could be used alone in a location-only mouse, and orientation information is derived from a comparison of their output.

11. As in Claim 10, where the said two or more sensors are balls touching the said planar surface.

12. As in Claim 10, where the said two or more sensors are optical sensors capable of detecting patterns on the said planar surface, when suitably illuminated.

13. As in Claim 10, where the said two or more sensors are inertial devices detecting forces due to gravity and acceleration

14. As in Claim 13, where the said inertial devices detect acceleration due to straight line motion.

15. As in Claim 13, where the said inertial devices include components that detect rotary motion.

16. As in Claim 15, where rotary motion is estimated from measurements of the angle through which a damped inertial structure rotates relative to the surrounding device.

17. As in Claim 15, where rotary motion is estimated from measurements of centrifugal force.

18. As in Claims 1 to 9, where the said device contains a single integrated sensor.

19. As in Claim 18, where the said integrated sensor exchanges signals with a fixed base object, from which it derives position data.

20. As in Claim 19, where said signals are emitted by the said base object, and received by the said device.

21. As in Claim 19, where said signals are emitted by the said device, and received by the said base object.

22. As in Claims 19 to 21, where the signals are acoustic.

23. As in Claim 19 to 21, where the signals are electromagnetic.

24. As in Claim 23, where the signals are at optical or near-optical wavelengths.

25. As in Claim 23, where the signals are at radio frequency.

26. As in Claim 19, where the said sensor detects signals from a general purpose navigation system usable by multiple devices.

27. As in Claim 36, where the said navigation system is a global positioning system.

28. As in Claim 36, where the said navigation system is a local installation.

29. As in Claim 18, where the said integrated sensor constitutes a ball touching the said planar surface, with a plurality of sub-sensors detecting motion of points on its surface relative to the surrounding device, from which the full 3D rotation of the ball is estimated.

30. As in Claim 29, where the said sub-sensors are three or more rollers in contact with the ball, from whose turning is derived a component of the velocity of the corresponding points on the surface of the ball.

31. As in Claim 29, where the said sub-sensors are two or more optical sensors which report components of the velocity of the corresponding points on the surface of the ball.

32. As in Claim 18, where the said integrated sensor constitutes a system for capturing images of a portion of the said planar surface and estimation of translation and comparison information by comparison of successive images.

33. As in Claim 32, where the said estimation minimises a measure of mismatch between a sequence of two or more of the captured images and the sequence of changes in said images predicted by a model of the translational and rotational motion of the device.

34. As in Claim 33, where the said model specifies the current translational velocity and rate of turn of the device relative to the said planar surface.

35. As in Claim 33, where the said model specifies the translational velocity and the rate of turn of the device relative to the said planar surface as functions of time.

**36.** As in Claims 1 to 35, where the point whose position is reported is not the physical position of a sensor mounted on the device but a specific point fixed relative to the device in a location set by an instruction received from the computer.

**37.** As in Claims 1 to 35, where (subject to command signals received from the computer) the point whose position is reported is not the physical position of a sensor mounted on the device but an estimate of the centre of rotation of the current motion of the device.

**38.** A method and device for reporting motion or force from a user's hand on an object in a fixed location , with the steps of

a) establishing a connection by wire or by radiated signals to a computer equipped with a graphical display;
b) estimating the motion or rectilinear force of the user's hand relative to the location of the said object, concurrently with rotation or torque of the part of the hand in contact with the said object, about an axis normal to the plane of contact with the said object;
c) receiving such signals from the computer as would be sent by a location-only mouse;
d) responding to signals as in (c) with data corresponding to the data that would be sent by a fixed-location device emulating a location-only mouse whose changes in location would correspond to the motion or rectilinear force detected in step (b), with the status of any buttons or other components conventionally included with such a fixed-location device;
e) receiving signals from the computer that constitute a request for data relative to both location and orientation;
f) responding to signals as in (e) with data corresponding to the data that would be sent by a fixed-location device emulating a location-only mouse whose changes in location correspond to the motion or rectilinear force detected in step (b) with the rotation or torque detected in step (b), together with the status of any buttons or other components conventionally included with such a fixed-location device;
g) using the data reported in step (d) or (f) to modify the state of an entity controlled by, or constituting part of, a program running on the said computer; and
h) changing the display corresponding to the said entity according to the said modification, in a manner controlled by the said program.

**39.** As in Claim 38, where the said object is a ball in a fixed location but free to twist with the turning of the user's hand.

**40.** As in Claim 38, where the said object is not free to rotate substantially in any direction, but reports rectilinear forces and torque exerted upon it by the user's hand.

**41.** As in Claim 40, where the said object is of a size comparable to a fingertip and is placed among the keys of a computer keyboard.

**42.** As in Claim 38, where the said object contains one or more optical sensors that capture images of portions of the hand's surface and detect relative motion and rotation by comparison of sequences of two or more successive images so captured.

**43.** As in Claim 42, where the said object is of a size comparable to a fingertip and is placed among the keys of a computer keyboard.

**44.** As in Claims 1 to 43, where the reported changes in location and orientation are mapped directly to changes in location and orientation of a 2D object in the display.

**45.** As in Claim 44, where the mapping consists in proportional scaling of the said changes.

**46.** As in Claim 44, where the mapping consists in non-linear scaling of the said changes.

**47.** As in Claim 44, where the mapping consists in logarithmic scaling of the said changes.

**48.** As in Claim 44, where the mapping consists in jumps between discrete positions when the input changes of location or orientation pass a threshold set by the application.

**49.** As in Claims 44 to 47, where the user selects whether the said 2D object in the display is rotated, translated, or both.

**50.** As in Claim 49, where the said 2D object acts as a paint brush.

**51.** As in Claim 48, where rotation without translation is about a point selected by the user.

**52.** As in Claim 44, where the user may use a button or other input to fire a virtual projectile as the said 2D object in the display moves and rotates.

**53.** As in Claim 44, where the reported changes in location and orientation are used to move a graphic element or text box into a desired position at a desired angle.

**54.** As in Claim 44, where the reported changes in location and orientation are used to move and rotate a positional and directional control for a point of a curve.

**55.** As in Claim 54, where holding down the button at a particular position and direction of the control, with little or not motion, causes the curve to become closer for a longer distance to its tangent at the point controlled.

**56.** As in Claim 44, where the reported changes in location and orientation are used to simultaneously move and rotate a key frame widget for an object in a 2D animation.

**57.** As in Claim 56, where the said key frame widget controls instantaneous location and orientation for the said object moving in the said animation.

**58.** As in Claim 56, where the said key frame widget controls instantaneous velocity and speed of rotation for the said object moving in the said animation.

**59.** As in Claims 1 to 43, where the reported changes in location and orientation are mapped to arbitrary properties of a 2D object in the display.

**60.** As in Claim 59, where changes in device location map to changes in the location of a 2D cursor, while changes in orientation map to changes in display scale of a scene or image, centred on the said cursor.

**61.** As in Claim 59, where changes in device location map to changes in the location of a 2D object in the display, while simultaneous changes in device orientation map to changes in the state of the said object.

**62.** As in Claim 61, where the changes in state of the said object act to open and close its jaws.

**63.** As in Claim 61, where the changes in the state of the said object act to change the current selection of an item within it.

**64.** As in Claims 1 to 43, where the reported changes in location and orientation are mapped to changes in state of a 3D object in the display.

**65.** As in Claim 64, where the reported changes in location and orientation are mapped to translations of a 3D object in the display.

**66.** As in Claim 65, where the reported changes in location are mapped to changes in lateral and vertical position of the said 3D object, while reported rotations are mapped to changes in apparent distance from the user.

**67.** As in Claim 64, where the reported changes in location and orientation are mapped to rotations of a 3D object in the display.

**68.** As in Claim 67, where the reported changes in orientation act to rotate the said object about the user's line of sight, while the reported changes in location act simultaneously to rotate it about axes normal to the user's line of sight.

**69.** As in Claims 64 to 68, where the mappings are modified by ratios set by the application.

**70.** As in Claim 69, where the said ratios are selected by the user.

**71.** As in Claim 64, 69 or 70, where the said object is a clipping plane.

**72.** As in Claim 71, where the reported rotations are mapped to changes in apparent distance from the user, while the reported changes in location act simultaneously to rotate it about axes normal to the user's line of sight.

**73.** As in Claim 64, 69 or 70, where the said object is a key frame widget.

**74.** As in Claim 73, where the said widget controls the location of a 3D object at a specified moment in the animation.

**75.** As in Claim 73, where the said widget controls the orientation of a 3D object at a specified moment in the animation.

**76.** As in Claim 73, where the said widget controls the velocity of a 3D object at a specified moment in the animation.

**77.** As in Claim 73, where the said widget controls the angular velocity of a 3D object at a specified moment in the animation.

**78.** As in Claim 64, 69 or 70, where the said object is the entire displayed scene.

**79.** As in Claim 64, 69 or 70, where the said object is a set of objects within the displayed scene.

**80.** As in Claim 64, 69 or 70, where the said object is a 3D cursor.

**81.** As in Claim 80, where the said cursor has a visible orientation that remains fixed relative to the axes of the displayed scene.

**82.** As in Claim 80, where the said cursor is used to select a displayed object by clicking a button or pressing a key when the said cursor is recognised by the computer as three-dimensionally close to the said object.

**83.** As in Claim 80, where the said cursor is used to select a point within a displayed three-dimensional object by clicking a button or pressing a key when the said cursor is recognised by the computer as indicating the said point.

**84.** As in Claim 80, where the motion of the said cursor is used to define a path in 3D.

**85.** As in Claim 84, where the said path is constituted by the sequence of 3D positions through which the said cursor passes.

**86.** As in Claim 84, where the said path is interpolated between a sequence of 3D positions through which the said cursor passes.

**87.** As in Claim 84, where the said 3D positions are selected by user button clicks or keyboard presses.

**88.** As in Claim 84, where the said path is fitted to a sequence of 3D positions near which the said cursor passes, without being required to pass precisely through the said 3D positions.

**89.** As in Claim 88, where the said path consists of a spline curve for which the said 3D positions are control points.

**90.** As in Claims 86 to 89, where the said 3D positions are selected by user button clicks or keyboard presses.

**91.** As in Claim 64, 69 or 70, where the said object is a selection region.

**92.** As in Claim 91, where the said selection region is a rectangular box.

**93.** As in Claim 65, where the said object is a corner, edge, or face of a rectangular box, which adjusts when the said object is translated.

**94.** As in Claim 93, where the said rectangular box acts as a selection region.

**95.** As in Claim 93, where the said rectangular box acts to define a selection region consisting of an ellipsoid with axes parallel to the box edges, and touching all the box faces.

**96.** As in Claims 91 to 95, where the said selection region is used as a clipping region to limit visibility of objects or parts of objects outside it.

**97.** As in Claim 96, where the visibility clipped is that of rendered volume data.

**98.** As in Claim 96, where the visibility clipped is that of components in a network.

**99.** As in Claim 96, where the visibility clipped is that of objects in a 3D animated scene.

**100.** As in Claim 96, where the visibility clipped is that of objects in a CAD display.

**101.** As in Claim 80, where the cursor moves in a 3D space of possible colours, allowing the user to click when the cursor is on a selected colour.

**102.** As in Claim 80, where the cursor moves in a 3D space of possible luminosity, reflectivity and specularity values, allowing the user to click when the cursor is on a selected property set.

**103.** As in Claim 80, where the cursor moves in a 3D space of possible reflectivity values in red, green and blue separately, allowing the user to click when it is on a selected property set.

**104.** As in Claim 80, where the cursor moves in a 3D space of possible specularity values in red, green and blue separately, allowing the user to click when the cursor is on a selected property set.

**105.** As in Claim 101, 102, 103 or 104, where a small borderless region that may be dragged anywhere in the display shows at each moment the values that would currently be set by a click.

**106.** As in Claim 64, 69 or 70, where the said object is a 3D network.

**107.** As in Claim 64, 69 or 70, where the said object is a selected node of a 3D network, which retains its connections with the unselected nodes when it is moved or rotated.

**108.** As in Claim 64, 69 or 70, where the said object is a selected edge of a 3D network, whose ends retains their connections with the unselected nodes when it is moved or rotated.

**109.** As in Claim 64, 69 or 70, where the said object is a set of selected elements of a 3D network, which retain their connections with the unselected nodes when it is moved or rotated.

**110.** As in Claims 106 to 109, where the said 3D network is a family tree.

**111.** As in Claims 106 to 109 where the said 3D network is a flow chart.

**112.** As in Claims 106 to 109, where the said 3D network is a task dependency chart.

**113.** As in Claims 106 to 109, where the said 3D network is a map of chemical pathways.

**114.** As in Claims 106 to 109, where the said 3D network is a map of trading relationships.

**115.** As in Claims 106 to 109, where the said 3D network is a wiring diagram.

**116.** As in Claims 106 to 109, where the said 3D network is a map of citations among documents.

**117.** As in Claims 106 to 109, where the said 3D network is a map of dependencies between claims in a patent.

**118.** As in Claims 1 to 43, where reported changes in orientation are treated as the scroll wheel output of a mouse equipped with such a wheel but without rotational sensing.

**119.** As in Claims 1 to 43, where sudden reported changes in orientation are interpreted as distinguishable clockwise clicks and anti-clockwise clicks, to be assigned meaning by an application program, plug-in or operating system.

**120.** As in Claims I or 38, where the said device is operated in joystick emulation mode.

**121.** As in Claims I or 38, where the said device is operated in scroll wheel emulation mode.

**122.** As in Claims 91 to 95, where the said selection region is used to define an acquisition region for a scanning system.

**123.** As in Claim 64, 69 or 70, where the said object is a plane defining the acquisition plane for a scanning system.

Drawing 1

Drawing 2

Drawing 3

Drawing 4

Drawing 5

Drawing 6

Drawing 7

Drawing 8

Drawing 9

Drawing 10

Drawing 11

**Drawing 12**

1300

This is a text box.

1311

1330    1315

1310

This is a text box.

1320

Drawing 13

1430

1430

1430

1400    1410

1420    1410

Drawing 14

1520

1500

1510          1510          1510

1541

1500

1510          1540          1530          1510

1541

1560

1510          1540          1530          1510

Drawing 15

Drawing 16

Drawing 17

Drawing 18

Drawing 19

Drawing 20

Drawing 21

Drawing 22

Drawing 23

Drawing 24

Drawing 25

Drawing 26

2715

2720 2710

2700

Drawing 27

2820

2800
2807
2805
2822
2801
2810

2876

2877

Drawing 28

Drawing 29

Drawing 30

Drawing 31

Drawing 32

Drawing 33

Drawing 34

Drawing 35

Drawing 36

EP 1 804 154 A2

Drawing 38

Drawing 39

Drawing 40

Drawing 41

Drawing 42

Acquire $\left(\Delta x_0, \Delta y_0\right)$ and $(\Delta x_1, \Delta y_1)$
from two standard sensors fixed in the mouse.

4301

Optionally, apply (13) to adjust $(\Delta x_1, \Delta y_1)$.

4302

Apply (9) to give $a$, $b$ and $\tau$.

4303

Scale to give $\Delta x = \alpha a$, $\Delta y = \beta b$ and $\Delta \theta = \gamma \tau$.

4304

Report $\Delta x$, $\Delta y$ and $\Delta \theta$.

4305

Drawing 43

Acquire $\left(\Delta x_0, \Delta y_0\right)$ and $(\Delta x_1, \Delta y_1)$
from 2 standard sensors fixed in mouse.

4401

Optionally, apply (13) to adjust $(\Delta x_1, \Delta y_1)$.

4402

Apply (9) to give $a$, $b$ and $\tau$.

4403

Scale and transform to give
$\Delta x = \alpha(a - Y\tau)$, $\Delta y = \beta(b + X\tau)$ and $\Delta \theta = \gamma \tau$.

4404

Report $\Delta x$, $\Delta y$ and $\Delta \theta$.

4405

Drawing 44

Acquire $\left(\Delta x_0, \Delta y_0\right)$ and $(\Delta x_1, \Delta y_1)$ from two standard sensors fixed in the mouse.

4501

Optionally, apply (13) to adjust $(\Delta x_1, \Delta y_1)$.

4502

Apply (9) to give $a$, $b$ and $\tau$.

4503

Compute $x = -b/\tau$, $y = a/\tau$, and $\Delta\theta = \gamma\tau$.

4504

Report $x$, $y$ and $\Delta\theta$.

4505

Drawing 45

Acquire $u$, $v$ and $w$ from sensors mounted on the three rollers.

4601

Apply (20) to give $p$, $q$ and $r$.

4602

Scale $\Delta x = Ap$, $\Delta y = Bq$ and $\Delta\theta = Cr$.

4603

Report $x$, $y$ and $\Delta\theta$.

4604

Drawing 46

Acquire a sequence $B_t$ of images of the desktop or mousepad. — 4701

Retain the most recent $K=2\alpha+1$ of the images in a buffer, indexed from $-\alpha$ to 0 (for the current reference image) to $+\alpha$. — 4702

Re-express the most recent motion estimate $S_t$ using time difference from current reference image as parameter.

Initialize interpolator $\beta_0$ for current reference image. — 4704

4703

For times $t$ from $-\alpha$ to $-1$ and 1 to $+\alpha$

For modifiers $\Delta_k$ from $\Delta_0$ to $\Delta_\sigma$ of $S_t$ — 4705

Interpolate image values via $\Delta_k.S_t$ and $\beta_0$ — 4706

Differences from actual image values become entries in vector $V_k$ — 4707

Estimate affine map $A$ taking $\Delta$ values to $V$ values. — 4708

Solve $A(\Delta) = 0$, uniquely or by least squares. — 4709

Replace $S_t$ by $\Delta.S_t$, using $\Delta$ just found. — 4710

Interpolate image values via new $S_t$ and $\beta_0$ — 4711

Find differences from actual values — 4712

4713

Difference too large? — 4714

Yes

No

New $S_t$ parameter values: add to motion estimate buffer, use as next guess — 4715

Filter motion estimate buffer for smoothness — 4716

Drawing 47

While mouse is activated — 4800

Mouse moving? — 4801

No → Calibrate surface slope — 4802

Yes ↓

Evaluate motion parameters $a$, $b$ and $\tau$ — 4810

Update $\Delta x$, $\Delta y$, $\Delta \theta$ — 4820

'Most recent' or predictive driver — 4830

Drawing 48

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3541541 A
- US 6115028 A, Balakrishnan
- US 6844871 B, Hinckley
- US 6246390 B, Rosenberg

- US 5936612 A, Wang
- US 5561445 A, Miwa
- US 6618038 B, Bohn
- US 5786804 A, Gordon

**Non-patent literature cited in the description**

- A Two-Ball Mouse Affords Three Degrees of Freedom. **MACKENZIE ; SOUKOREFF ; PAL.** Extended Abstracts of the CHI '97 Conference on Human Factors in Computing Systems. ACM, 303-304
- **R C ZELEZNIK ; A S FORSBERG ; P S STRAUSS.** Two pointer input for 3d interaction. *Computer Graphics,* April 1997, 115-120
- **M WESTERGAARD.** Supporting Multiple Pointing Devices in Microsoft Windows. *Microsoft Summer Research Workshop 2002,* 09 September 2002

- **HINCKLEY ; SINCLAIR ; HANSON ; SZELISKI ; CONWAY.** The VideoMouse™: A Camera-Based Multi-Degree-of-Freedom Input Device. *ACM UIST'99 Symposium on User Interface Software & Technology, CHI Letters,* vol. 1 (1), 103-112
- A two-ball mouse affords three degrees of freedom. **MACKENZIE ; SOUKOREFF ; PAL.** Extended Abstracts of the CHI '97 Conference on Human Factors in Computing Systems. ACM, 1997, 303-304
- The Virtual Workbench: a path to use of VR. **T POSTON.** The Industrial Electronics Handbook. CRC Press and IEEE Press, vol. 2197, 1390-1393